# EUROPEAN PATENT APPLICATION

(11) **EP 4 105 190 A1**
(43) Date of publication of application: **21.12.2022**
(21) Application number: 21754016.0
(22) Date of filing: 14.01.2021
(51) Int. Cl.: C04B 26/04, C04B 28/18, C04B 28/26, C04B 111/28

(54) **FIRE-RESISTANT AND THERMAL INSULATION MATERIAL AND PREPARATION PROCESS THEREFOR**

(30) Priority: 10.02.2020 CN 202010085173; 10.02.2020 CN 202010085174; 10.09.2020 CN 202010947577
(71) Applicant: Shanghai Shengkui Products Co., Ltd, Caojing Town, Jinshan District Shanghai 201507 (CN)
(72) Inventor: LIU, Bingqiang, Shanghai 201507 (CN); LIU, Nianjie, Shanghai 201507 (CN)
(74) Representative: dompatent von Kreisler Selting Werner - Partnerschaft von Patent- und Rechtsanwälten mbB
(86) International application number: PCT/CN2021/071755
(87) International publication number: WO 2021/159912

(57) **Abstract**

A fire-resistant and thermal insulation material and a preparation process therefor. The preparation process comprises the following steps: performing pressurization and heating a mixture obtained by uniformly mixing raw material components of the fire-resistant and thermal insulation material, wherein the pressure after pressurization is 0.28 MPa or above, and the temperature after heating is 50 to 150 °C; the raw material components of the fire-resistant and thermal insulation material comprise inorganic raw materials, organic raw materials, and water; the inorganic raw materials comprise a siliceous substance and a calcareous substance, and the organic raw materials comprise a polystyrene particle; the weight ratio of the inorganic raw materials to the organic raw materials is 10-66.6, and the weight ratio of the siliceous substance to the calcareous substance is 0.33-19. Flexible thermal insulation boards prepared by the preparation process have high tensile strength and a high fire resistance grade.

## Description

The present application claims the priorities of Chinese patent application 2020100851733 filed on February 10, 2020, Chinese patent application 2020100851748 filed on February 10, 2020 and Chinese patent application 2020109475779 filed on September 10, 2020. The contents of the above Chinese patent applications are incorporated herein by reference in its entireties.

### TECHNICAL FIELD

The present disclosure relates to the field of building materials, in particular to a fire-resistant and thermal insulation material and a preparation process therefor.

### BACKGROUND

Building thermal insulation materials generally refer to materials with thermal conductivity (25 °C), W/(m•k) less than or equal to 0.2 W/(m•K). Thermal insulation materials have developed rapidly in recent years. The use of thermal insulation technology and thermal insulation materials with good performance in industry and buildings can often play a good role in energy saving and emission reduction. With the development of science and technology and the improvement of people's living standards, the requirements for thermal insulation materials are getting higher and higher.

Improving the thermal insulation capacity of the building itself is the core of the development of self-thermal insulation technology and the final direction of building energysaving technology. However, the development of self-thermal insulation technology is relatively slow at present, and many factors limit its development. At present, for the reason of the material itself, the autoclaved aerated concrete block, which is the mainstream inorganic self-thermal insulation material used in the market has the problems of heavy self-weight (high construction strength, potential construction safety hazards), poor thermal conductive performance (the thermal conductivity is about 0.16 W/(m•K), and poor thermal insulation effect) and high water absorption rate (once the material absorbs water, the water absorption rate will seriously affect the structural strength and thermal insulation performance). As a result, the wall self-thermal insulation technology has not been widely promoted.

Due to the requirements of fire safety, the thermal insulation materials currently available in the prior art that can meet the thermal insulation requirements and are class-A fire-resistant are roughly divided into two categories. One is a flexible class-A fire-resistant and thermal insulation material represented by rock wool, but has poor tensile strength and poor hydrophobicity, after absorbing water, not only the thermal insulation performance is greatly reduced and the thermal insulation efficiency is lost, and its tensile strength is further deteriorated, which easily leads to the potential safety hazard of external wall falling off. The other is a rigid class-A fire-resistant and thermal insulation material represented by foam glass, but it is brittle and easy to crack, difficult to process and construct.

The construction environment of building walls puts forward higher requirements for the compressive performance, thermal insulation performance and fire-resistant performance of thermal insulation materials (because the fire-resistant performance needs to meet higher requirements indoors). However, the current thermal insulation materials often fail to take into account physical properties, thermal insulation properties and fire-resistant properties, that is, the three cannot be taken into account simultaneously.

### CONTENT OF THE PRESENT INVENTION

The technical problem to be solved by the present disclosure is to overcome the above-mentioned defects in the prior art, thereby providing a fire-resistant and thermal insulation material with high tensile strength, not easy to fall off after pasting, good thermal insulation performance and a fire-resistant grade of non-combustible, and a preparation process therefor.

The present disclosure provides a preparation process for a fire-resistant and thermal insulation material, comprising the following steps: pressurizing and heating a mixture obtained by uniformly mixing a raw material composition of the fire-resistant and thermal insulation material; the pressurizing pressure is 0.28 MPa or more, and the heating temperature is 50 to 150 °C; the raw material composition of the fire-resistant and thermal insulation material comprises inorganic raw materials, organic raw materials, and water; wherein, the inorganic raw materials comprise a siliceous substance and a calcareous substance, and the organic raw materials comprise polystyrene particles; the weight ratio of the inorganic raw materials to the organic raw materials is 10 to 66.6, and the weight ratio of the siliceous substance to the calcareous substance is 0.33 to 19.

In the preparation process for the fire-resistant and thermal insulation material, some parameters may be as follows, and the parameters not involved are as described in any one of the schemes of the present disclosure (hereinafter referred to as "in the preparation process for the fire-resistant and thermal insulation material"). In the raw material composition of the fire-resistant and thermal insulation material, the siliceous substance in the inorganic raw materials may be a siliceous mineral conventionally used in the art; for example, one or more of a silicon micropowder, a microsilicon powder, a mineral slag micropowder, a fly ash, a quartz powder, a kaolin, a bentonite, a water glass and a diatomite; for another example, one or more of microsilicon powder (purchased from Shanghai Victory Industry Development Co., Ltd.), silicon micropowder (purchased from Huzhou Urban Huatian Calcite Powder Factory) and fly ash (class-C high calcium fly ash purchased from Shanghai Commercial Fly Ash Products Co., Ltd.).

In the preparation process for the fire-resistant and thermal insulation material, in the raw material composition of the fire-resistant and thermal insulation material, the calcareous substance in the inorganic raw materials may be a calcareous mineral conventionally used in the art; for example, calcium oxide and/or calcium hydroxide; for another example, calcium oxide (purchased from Taicang Orient Metallurgy Lime Product Factory).

In the preparation process for the fire-resistant and thermal insulation material, in the raw material composition of the fire-resistant and thermal insulation material, the polystyrene particles in the organic raw materials may be expandable polystyrene particles conventionally used in the art; for example, expandable polystyrene particles containing graphite (such as an expandable polystyrene particle containing graphite purchased from Wuxi Xingda New Foam Plastics Materials Co., Ltd).

The expandable polystyrene particles are pre-foamed polystyrene particles, and the pre-foamed polystyrene particles may be a commercially available pre-foamed polystyrene particle, or the pre-foamed polystyrene particles may be obtained by the following ways: before the raw material composition of the fire-resistant and thermal insulation material is mixed, the preparation process further comprises a pre-foaming step of the expandable polystyrene particles.

Wherein, the pre-foaming step can foam the polystyrene particles to a required gram weight according to a conventional foaming process in the art, for example, the pre-foaming step is to heat and pressurize the polystyrene particles to foam the polystyrene particles.

In the preparation process for the fire-resistant and thermal insulation material, in the raw material composition of the fire-resistant and thermal insulation material, the organic raw materials may further comprise a water-reducing agent. The water-reducing agent may be a water-reducing agent conventionally used in the art; for example, one or more of a ligninsulfonate water-reducing agent, a naphthalene sulfonate water-reducing agent, a melamine-based water-reducing agent, an aminosulfonate-based superplasticzer and a polycarboxylate-based high performance water-reducing agent; for another example, polycarboxylate-based high performance water-reducing agent (for example, a HF retarding superplasticizer purchased from Shanghai Dongda Chemical Co., Ltd.). The amount of the water-reducing agent may be 4.5 wt% or less of the total weight of the raw material composition of the fire-resistant and thermal insulation material; for example, 4 wt% or less; for another example, 3 wt% or less.

In the preparation process for the fire-resistant and thermal insulation material, in the raw material composition of the fire-resistant and thermal insulation material, the organic raw materials may further comprise a reinforced fiber. The reinforced fiber may be a reinforced fiber conventionally used in the art; for example, one or more of an inorganic chopped fiber, a wood fiber, a metal fiber and a fiber cotton; for another example, the fiber cotton (purchased from Shijiazhuang Dinglong Building Materials Sales Co., Ltd.). The amount of the reinforced fiber may be 25 wt% or less of the total weight of the raw material composition of the fire-resistant and thermal insulation material; for example, 13 wt% or less; for another example, 11 wt% or less.

The preparation process for the fire-resistant and thermal insulation material may comprise the following steps: mixing the raw material composition of the fire-resistant and thermal insulation material uniformly to obtain a mixture; inputting the mixture into a mold, pressurizing the mold, and then keeping the mold under pressure so that the pressure exerted on the mold reaches 0.28 MPa or more, heating the mold and the mixture in the mold so that the temperature in the mixture reaches 50 to 150 °C, heating and pressurizing until shaped, and demoulding.

In the preparation process for the fire-resistant and thermal insulation material, the mold may comprise an upper-layer mold and a lower-layer mold, and the preparation process may comprise the following steps: preliminarily shaping the mixture by using the upper-layer mold and the lower-layer mold, and after the mold enters a pressing platform, locking the upper-layer mold and the lower-layer mold until the mixture is compressed by 10 to 45 % (for example, 17 to 38 %) in a thickness direction and shaped.

In the preparation process for the fire-resistant and thermal insulation material, multiple sets of molds may be repeatedly stacked in sequence for simultaneous pressing to form multiple fire-resistant and thermal insulation boards until the mixture is compressed by 10 to 45 % (for example, 17 to 38 %) in the thickness direction and shaped.

In the preparation process for the fire-resistant and thermal insulation material, the heating temperature applied inside the mixture may be 60 to 150 °C, for example, 70 to 140 °C (80 °C, 90 °C, 100 °C, 110 °C, 120 °C or 130 °C).

In the preparation process for the fire-resistant and thermal insulation material, during the process of heating and pressurizing to shape, those skilled in the art may routinely adjust the heating and pressurizing time according to the heating method. For example, when using the conventional steam heating or a heating method using a heat-conducting liquid as a heat transfer medium, the heating time is 30 minutes or more; for another example, when using a microwave heating method, the heating time is 5 minutes or more.

In the preparation process for the fire-resistant and thermal insulation material, the preparation process may further comprise placing a reinforcing component in the mold, wherein the reinforcing component comprises one or more of a metal mesh, a glass fiber mesh, a glass steel mesh or a rib, so that the reinforcing component is embedded in at least one side of the mixture.

In the preparation process for the fire-resistant and thermal insulation material, the raw material composition of the fire-resistant and thermal insulation material is any of the following schemes:

### scheme (1):

the raw material composition of the fire-resistant and thermal insulation material comprises: 4.25 to 8.94 parts by weight of the polystyrene particles, 90 to 100 parts by weight of the inorganic raw materials and 30 to 94 parts by weight of the water, wherein the inorganic raw materials are 47 to 85 parts by weight of the siliceous substance and 9 to 47 parts by weight of the calcareous substance;

### scheme (2):

the raw material composition of the fire-resistant and thermal insulation material comprises: 3.8 to 21.4 parts by weight of the polystyrene particles, 200 to 250 parts by weight of the inorganic raw materials and 63 to 250 parts by weight of the water, wherein the inorganic raw materials are 56.2 to 208 parts by weight of the siliceous substance and 16.9 to 168.7 parts by weight of the calcareous substance;

### scheme (3):

the raw material composition of the fire-resistant and thermal insulation material comprises: 1.8 to 12 parts by weight of the polystyrene particles, 100 to 115 parts by weight of the siliceous substance, 6 to 18 parts by weight of the calcareous substance and 35 to 120 parts by weight of water.

In the preparation process for the fire-resistant and thermal insulation material, when the raw material composition of the fire-resistant and thermal insulation material is the scheme (1), the weight ratio of the siliceous substance to the calcareous substance may be 1 to 9; preferably 1.22 to 3; further preferably 1.5 to 2.33.

In the preparation process for the fire-resistant and thermal insulation material, when the raw material composition of the fire-resistant and thermal insulation material is the scheme (1), the weight ratio of the inorganic raw materials to the organic raw materials may be 10.5 to 22.1; preferably 10.5 to 18.5; further preferably 10.5 to 14.

In the preparation process for the fire-resistant and thermal insulation material, when the raw material composition of the fire-resistant and thermal insulation material is the scheme (1), in the raw material composition of the fire-resistant and thermal insulation material, the organic raw materials may comprise the water-reducing agent, and the amount of the water-reducing agent may be 0.3 to 4.8 parts.

In the preparation process for the fire-resistant and thermal insulation material, when the raw material composition of the fire-resistant and thermal insulation material is the scheme (1), in the raw material composition of the fire-resistant and thermal insulation material, the organic raw materials may comprise the reinforced fiber (for example, the inorganic chopped fiber), and the amount of the reinforced fiber may be 1 to 11 wt % of the total weight of the raw material composition of the fire-resistant and thermal insulation material.

In the preparation process for the fire-resistant and thermal insulation material, when the raw material composition of the fire-resistant and thermal insulation material is the scheme (1), the pressurizing pressure is 0.55 MPa or more; preferably 0.55 MPa to 30 MPa.

In the preparation process for the fire-resistant and thermal insulation material, when the raw material composition of the fire-resistant and thermal insulation material is the scheme (1), the density of the fire-resistant and thermal insulation material may be 230 kg/m³ or less; preferably 210 to 230 kg/m³; further preferably 220 to 228 kg/m³.

In the preparation process for the fire-resistant and thermal insulation material, when the raw material composition of the fire-resistant and thermal insulation material is the scheme (2), the weight ratio of the siliceous substance to the calcareous substance may be 0.33 to 12.33; preferably 3.67 to 5.67; further preferably 1.5 to 3.

In the preparation process for the fire-resistant and thermal insulation material, when the raw material composition of the fire-resistant and thermal insulation material is the scheme (2), the weight ratio of the inorganic raw materials to the organic raw materials may be 10.5 to 58.9; preferably 10.5 to 35.3; further preferably 10.5 to 16.

In the preparation process for the fire-resistant and thermal insulation material, when the raw material composition of the fire-resistant and thermal insulation material is the scheme (2), in the raw material composition of the fire-resistant and thermal insulation material, the organic raw materials may comprise the water-reducing agent, and the amount of the water-reducing agent may be 0.6 to 9 parts.

In the preparation process for the fire-resistant and thermal insulation material, when the raw material composition of the fire-resistant and thermal insulation material is the scheme (2), in the raw material composition of the fire-resistant and thermal insulation material, the organic raw materials may comprise the reinforced fiber (for example, the inorganic chopped fiber), and the amount of the reinforced fiber is 1 to 13 wt % of the total weight of the raw material composition of the fire-resistant and thermal insulation material.

In the preparation process for the fire-resistant and thermal insulation material, when the raw material composition of the fire-resistant and thermal insulation material is the scheme (2), the pressurizing pressure is 2.8 MPa or more; preferably 2.8 MPa to 30 MPa.

In the preparation process for the fire-resistant and thermal insulation material, when the raw material composition of the fire-resistant and thermal insulation material is the scheme (2), the density of the fire-resistant and thermal insulation material may be 525 kg/m³ or less; preferably 500 to 525 kg/m³.

In the preparation process for the fire-resistant and thermal insulation material, when the raw material composition of the fire-resistant and thermal insulation material is the scheme (3), the amount of the polystyrene particles may be 3 to 11 parts; for example, 3.4 to 10 parts (4.55 parts, 5.1 parts, 5.95 parts, 6.5 parts, 7 parts, 7.5 parts, 8 parts, 8.5 parts, 9 parts or 9.5 parts).

In the preparation process for the fire-resistant and thermal insulation material, when the raw material composition of the fire-resistant and thermal insulation material is the scheme (3), the amount of the siliceous substance may be 100 to 110 parts; for example, 100 to 107.9 parts.

In the preparation process for the fire-resistant and thermal insulation material, when the raw material composition of the fire-resistant and thermal insulation material is the scheme (3), the amount of the calcareous substance may be 6 to 12 parts.

In the preparation process for the fire-resistant and thermal insulation material, when the raw material composition of the fire-resistant and thermal insulation material is the scheme (3), the amount of the water may be 35 to 90 parts.

In the preparation process for the fire-resistant and thermal insulation material, when the raw material composition of the fire-resistant and thermal insulation material is the scheme (3), the weight ratio of the siliceous substance to the calcareous substance may be 5.6 to 19 (for example, 5.6, 9 or 19).

In the preparation process for the fire-resistant and thermal insulation material, when the raw material composition of the fire-resistant and thermal insulation material is the scheme (3), the weight ratio of the inorganic raw materials to the organic raw materials may be 12 to 35.5.

In the preparation process for the fire-resistant and thermal insulation material, when the raw material composition of the fire-resistant and thermal insulation material is the scheme (3), the pressurizing pressure may be 0.28 to 0.55 MPa; preferably, 0.35 to 0.55 MPa.

In the preparation process for the fire-resistant and thermal insulation material, when the raw material composition of the fire-resistant and thermal insulation material is the scheme (3), in the raw material composition of the fire-resistant and thermal insulation material, the organic raw materials may comprise the water-reducing agent, and the amount of the water-reducing agent may be 0 to 50 parts and not 0; for example, 3 to 42 parts (6 parts, 16 parts, 24 parts or 36 parts).

In the preparation process for the fire-resistant and thermal insulation material, when the raw material composition of the fire-resistant and thermal insulation material is the scheme (3), in the raw material composition of the fire-resistant and thermal insulation material, the organic raw materials may comprise the reinforced fiber (for example, fiber cotton), and the amount of the reinforced fiber may be 2.4 to 30 parts; for example, 4.8 to 30 parts (7.2 parts, 9.6 parts, 12 parts, 14.4 parts, 16.8 parts, 19.2 parts, 21.6 parts, 24 parts, 26.4 parts or 28.8 parts).

The present disclosure also provides a fire-resistant and thermal insulation material, which is prepared according to the preparation process for the fire-resistant and thermal insulation material as described above.

In another aspect, the present disclosure also provides a preparation process for a thermal insulation material, which is any one of the following schemes (a), (b) and (c).

### Scheme (a): a preparation process for a floor fire-resistant and thermal insulation material

In the preparation process for the floor fire-resistant and thermal insulation material, the raw material composition of the floor fire-resistant and thermal insulation material comprises: 90 to 100 parts by weight of inorganic raw materials, 4.25 to 8.94 parts by weight of the polystyrene particles and 30 to 94 parts by weight of water, wherein the inorganic raw materials comprise 47 to 85 parts by weight of a siliceous substance and 9 to 47 parts by weight of a calcareous substance, a mixture of the raw material composition is pressurized and heated in a mold, wherein the temperature in the mold is 50 to 150 °C, and the pressure applied to the mold is 0.55 MPa or more, such that the density of the material in the mold is 230 kg/m³ or less, keeping the pressurizing and heating, and demoulding.

Preferably, the density of the material is 210 to 230 kg/m³, more preferably 220 to 228 kg/m³.

Wherein, the density of the material may be 214.7 kg/m³, 218.4 kg/m³, 219 kg/m³, 220 kg/m³, 221.6 kg/m³, 222 kg/m³, 222.5 kg/m³, 223 kg/m³, 224.5 kg/ m³, 224.8 kg/m³, 225 kg/m³, 226 kg/m³, 228.5 kg/m³ or 230.4 kg/m³.

In the scheme (a), in the process of pressurizing and heating, a secondary foaming reaction of the polystyrene particles and a chemical reaction of the siliceous substance and the calcareous substance occur simultaneously, the effective cavity volume of the mold remains unchanged, and the combination of the polystyrene particles and a siliceous substance aggregate is closer, so that a compressive strength of 0.55 MPa or more and a tensile strength of 0.13 MPa or more can be achieved at a low density 230kg/m³ or less.

Preferably, the siliceous substance comprises one or more of the microsilicon powder, the kaolin, the bentonite and the diatomite.

Preferably, the calcareous substance is a substance containing calcium oxide and/or calcium hydroxide.

Preferably, the calcareous substance is calcium oxide and/or calcium hydroxide.

Preferably, the weight ratio of the siliceous substance to the calcareous substance is 1 to 9; for example, 9, 5.66, 4, 3, 2.33, 1.5, 1.22 or 1.

Preferably, the weight ratio of the siliceous substance to the calcareous substance is 1.22 to 3;
further preferably, the weight ratio of the siliceous substance to the calcareous substance is 1.5 to 2.33.

Preferably, the weight ratio of the inorganic raw materials to the polystyrene particles is 10.5 to 22.1; for example, 10.5, 11.1, 11.6, 11.9, 12.1, 13.3, 14, 16.1, 16.5, 18.5, 19.7 or 22.1.

Preferably, the weight ratio of the inorganic raw materials to the polystyrene particles is 10.5 to 18.5;
further preferably, the weight ratio of the inorganic raw materials to the polystyrene particles is 10.5 to 14.

Preferably, the raw material composition further comprises any additive that does not affect the reaction between the siliceous substance and the calcareous substance.

Preferably, the raw material composition further comprises the water-reducing agent; the water-reducing agent here includes but is not limited to the ligninsulfonate water-reducing agent, the naphthalene sulfonate water-reducing agent, the melamine-based water-reducing agent, the polycarboxylate-based high performance water-reducing agent or the aminosulfonate-based superplasticzer.

Further preferably, the amount of the water-reducing agent is 0.33 to 4.82 parts, for example, 0.33, 0.75, 1.5, 2.63, 3.94 or 4.82.

Preferably, the raw material composition further comprises the inorganic chopped fiber.

Further preferably, the amount of the inorganic chopped fiber is 1 to 11 % of the total weight of the material; for example, 1 %, 3 %, 6 %, 9 % or 11 %.

Preferably, the pressure is 0.55 MPa to 30 MPa. Wherein, the pressure may be 0.55 MPa, 0.6 MPa, 0.8 MPa, 1 MPa, 5 MPa, 10 MPa or 30 MPa.

The present disclosure also provides a floor fire-resistant and thermal insulation material, which is prepared by any of the above preparation processes.

### Scheme (b): a preparation process for a thermal insulation wall material

In the preparation process for the thermal insulation wall material, the raw material composition of the thermal insulation wall material comprises: 200 to 250 parts by weight of the inorganic raw materials, 3.8 to 21.4 parts by weight of the polystyrene particles and 63 to 250 parts by weight of the water, wherein the inorganic raw materials comprise 56.2 to 208 parts by weight of the siliceous substance and 16.9 to 168.7 parts by weight of the calcareous substance, a mixture of the raw material composition is pressurized and heated in a mold, wherein the temperature in the mold is 50 to 150 °C, and the pressure applied to the mold is 2.8 MPa or more, such that the density of the material in the mold is 525 kg/m³ or less, keeping the pressurizing and heating, and demoulding.

Wherein, the density of the material may be 496 kg/m³, 498 kg/m³, 500 kg/m³, 501 kg/m³, 503 kg/m³, 506 kg/m³, 507 kg/m³, 508 kg/m³, 509 kg/ m³, 510 kg/m³, 512 kg/m³, 514 kg/m³, 515 kg/m³, 516 kg/m³, 518 kg/m³, 520 kg/m³, 523 kg/m³ or 525 kg/m³. When the density of the material exceeds 525 kg/m³, the thermal conductivity increases, which cannot meet the requirement of less than 0.14 W/(m·K).

Preferably, the density of the material is 400 to 525 kg/m³. More preferably, the density of the material is 500 to 525kg/m³.

In the scheme (b), in the process of pressurizing and heating, the secondary foaming reaction of the polystyrene particles and the chemical reaction of the siliceous substance and the calcareous substance occur simultaneously, the effective cavity volume of the mold remains unchanged, and the combination of the polystyrene particles and the siliceous substance aggregate is closer, so that a compressive strength of 2.8 MPa or more and a tensile strength of 0.16 MPa or more can be achieved at a low density 525kg/m³ or less.

Preferably, the siliceous substance comprises one or more of the microsilicon powder, the kaolin, the bentonite and the diatomite.

Preferably, the calcareous substance is a substance containing calcium oxide and/or calcium hydroxide.

Preferably, the calcareous substance is calcium oxide and/or calcium hydroxide.

Preferably, the weight ratio of the siliceous substance to the calcareous substance is 0.33 to 12.33, for example, 0.33, 0.43, 0.54, 0.67, 0.82, 1, 1.22, 1.5, 1.86, 2.33, 3, 4, 5.67, 9 or 12.33.

Preferably, the weight ratio of the siliceous substance to the calcareous substance is 3.67 to 5.67.

Further preferably, the weight ratio of the siliceous substance to the calcareous substance is 1.5 to 3.

Preferably, the weight ratio of the inorganic raw materials to the polystyrene particles is 10.5 to 58.9, for example, 10.5, 11.0, 11.5, 12.2, 15.4, 16.0, 17.4, 19.8, 24.5, 27.8, 31.1, 35.3, 39.8, 44.7, 50.0, 55.8 or 58.9.

Preferably, the weight ratio of the inorganic raw materials to the polystyrene particles is 10.5 to 35.3.

Further preferably, the weight ratio of the inorganic raw materials to the polystyrene particles is 10.5 to 16.

Preferably, the raw material composition further comprises any additive that does not affect the reaction between the siliceous substance and the calcareous substance.

Preferably, the raw material composition further comprises the water-reducing agent. The water-reducing agent here includes but is not limited to one or more of the ligninsulfonate water-reducing agent, the naphthalene sulfonate water-reducing agent, the melamine-based water-reducing agent, the polycarboxylate-based high performance water-reducing agent and the aminosulfonate-based superplasticzer.

Further preferably, the amount of the water-reducing agent is 0.6 to 9 parts, such as 0.6, 1.2, 3, 5, 7.5 or 9.

Preferably, the raw material composition further comprises the inorganic chopped fiber.

Further preferably, the amount of the inorganic chopped fiber is 1 to 12 % of the total weight of the material, for example, 1 %, 2 %, 4 %, 8 %, 10 %, 12 % or 13 %.

The upper limit of the pressure applied to the mold is an upper limit pressure that the mold can bear. Preferably, the pressure is 2.8 MPa to 30 MPa. Wherein, the pressure may be 2.8 MPa, 3.5 MPa, 5 MPa, 10 MPa or 30 MPa.

The present disclosure also provides a thermal insulation wall material, which is prepared by any of the above preparation processes.

### Scheme (c): a preparation process for a fire-resistant and thermal insulation material

In the preparation process for the fire-resistant and thermal insulation material, the raw material composition of the fire-resistant and thermal insulation material comprises: 1.8 to 12 parts by weight of the expandable polystyrene particles, 100 to 115 parts by weight of the siliceous substance, 6 to 18 parts by weight of the calcareous substance and 35 to 120 parts by weight of the water; the preparation process comprises the following steps: mixing the raw material composition of the fire-resistant and thermal insulation material uniformly to obtain a mixture; inputting the mixture into a mold, pressurizing the mold, and then keeping the mold under pressure so that the pressure exerted on the mold reaches 0.28 to 0.55 MPa, heating the mold and the mixture in the mold so that the temperature inside the mixture reaches 50 to 150 °C, heating and pressurizing until shaped, demoulding, and maintaining.

In the scheme (c), the amount of the expandable polystyrene particles is preferably 3 to 11 parts, for example, 3.4 to 10 parts, for another example, 4.55 parts, 5.1 parts, 5.95 parts, 6.5 parts, 7 parts, 7.5 parts, 8 parts, 8.5 parts, 9 parts or 9.5 parts.

In the scheme (c), the expandable polystyrene particles are preferably expandable polystyrene particles containing graphite, such as expandable polystyrene particles containing graphite purchased from Wuxi Xingda New Foam Plastics Materials Co., Ltd.

In the scheme (c), the siliceous substance is preferably one or more of a silicon micropowder, a microsilicon powder, a mineral slag micropowder, a fly ash, a quartz powder, a kaolin, a bentonite, a water glass and a diatomite, for example, microsilicon powder purchased from Shanghai Victory Industry Development Co., Ltd.; or silicon micropowder purchased from Huzhou Urban Huatian Calcite Powder Factory; or fly ash, class-C high calcium fly ash purchased from Shanghai Commercial Fly Ash Products Co., Ltd.

In the scheme (c), the amount of the siliceous substance is preferably 100 to 110 parts, for example, 100 to 107.9 parts.

In the scheme (c), the calcareous substance is preferably calcium oxide and/or calcium hydroxide, for example, calcium oxide, which is purchased from Taicang Orient Metallurgy Lime Product Factory.

In the scheme (c), the amount of the calcareous substance is 6 to 12 parts.

In the scheme (c), the amount of the water is preferably 35 to 90 parts.

In the scheme (c), the raw material composition of the fire-resistant and thermal insulation material preferably further comprises the water-reducing agent.

Wherein, the amount of the water-reducing agent can be conventional in the art, preferably 0 to 50 parts and not 0, for example, 3 to 42 parts, for another example, 6 parts, 16 parts, 24 parts or 36 parts.

Wherein, the types of the water-reducing agent may be conventional in the art, preferably comprise one or more of the ligninsulfonate water-reducing agent, the naphthalene sulfonate water-reducing agent, the melamine-based water-reducing agent, the aminosulfonate-based superplasticzer and the polycarboxylate-based high performance water-reducing agent, more preferably the polycarboxylate-based high performance water-reducing agent, for example, HF retarding superplasticizer purchased from Shanghai Dongda Chemical Co., Ltd.

Wherein, the weight ratio of the inorganic raw materials to the organic raw materials is preferably 12 to 35.5, the inorganic raw materials are the siliceous substance and the calcareous substance, and the organic raw materials are the expandable polystyrene particles and the water-reducing agent.

In the scheme (c), the raw material composition of the fire-resistant and thermal insulation material preferably further comprises a reinforced fiber.

Wherein, the types of the reinforced fiber may be conventional in the art, and the reinforced fiber preferably comprises one or more of a wood fiber, a metal fiber and a fiber cotton; more preferably the fiber cotton, such as the fiber cotton purchased from Shijiazhuang Dinglong Building Materials Sales Co., Ltd.

Wherein, the amount of the reinforced fiber may be conventional in the art, preferably 2.4 to 30 parts, for example, 4.8 to 30 parts, for another example, 7.2 parts, 9.6 parts, 12 parts, 14.4 parts, 16.8 parts, 19.2 parts, 21.6 parts, 24 parts, 26.4 parts or 28.8 parts.

In the scheme (c), preferably, the mold comprises an upper-layer mold and a lower-layer mold, and the preparation process comprises the following steps: preliminarily shaping the mixture by using the upper-layer mold and the lower-layer mold, and after the mold enters the pressing platform, locking the upper-layer mold and the lower-layer mold until the mixture is compressed by 10 to 45 % in a thickness direction and shaped.

In the scheme (c), the mixture is preferably compressed by 17 to 38 % in the thickness direction and shaped.

In the scheme (c), preferably, multiple sets of molds are repeatedly stacked in sequence for simultaneous pressing to form multiple fire-resistant and thermal insulation boards until the mixture is compressed by 10 to 45 % in the thickness direction and shaped.

In the scheme (c), preferably, the heating temperature applied inside the mixture is 60 to 150 °C, for example, 70 to 140 °C, for another example, 80 °C, 90 °C, 100 °C, 110 °C, 120 °C or 130 °C.

In the scheme (c), preferably, the pressure applied to the mold is 0.35 to 0.55 MPa.

In the scheme (c), during the process of heating and pressurizing until shaped, those skilled in the art may routinely adjust the heating and pressurizing time according to the heating method. For example, when using the conventional steam heating or a heating method using a heat-conducting liquid as a heat transfer medium, the heating time is 30 minutes or more; for another example, when using a microwave heating method, the heating time is 5 minutes or more.

In the scheme (c), preferably, the preparation process further comprises placing a reinforcing component in the mold, wherein the reinforcing component comprises one or more of a metal mesh, a glass fiber mesh, a glass steel mesh or a rib, so that the reinforcing component is embedded in at least one side of the mixture.

In the scheme (c), the expandable polystyrene particles are pre-foamed polystyrene particles, and the pre-foamed polystyrene particles may be a commercially available pre-foamed polystyrene particle, or the pre-foamed polystyrene particles may be obtained by the following ways: before the mixture is stirred, the preparation process further comprises a pre-foaming step of the expandable polystyrene particles.

Wherein, the pre-foaming step can foam the expandable polystyrene particles to a required gram weight according to a conventional foaming process in the art, for example, the pre-foaming step is to heat and pressurize the expandable polystyrene particles to foam the expandable polystyrene particles.

The present disclosure also provides a fire-resistant and thermal insulation material, which is prepared according to the preparation process for the fire-resistant and thermal insulation material as described above.

On the basis of conforming to the common sense in the art, the above-mentioned preferred conditions may be arbitrarily combined to obtain the preferred embodiments of the present disclosure.

The reagents and raw materials used in the present disclosure are commercially available.

The positive progressive effect of the present disclosure is that: on the premise of keeping the preparation pressure low, the fire-resistant and thermal insulation material prepared by the preparation process of the present disclosure has high tensile strength, is not easy to fall off after pasting, has good thermal insulation performance, and a fire-resistant grade of non-combustible.

### DETAILED DESCRIPTION OF THE PREFERRED EMBODIMENT

The following embodiments further illustrate the present disclosure, but the present disclosure is not limited thereto.

The materials that could be used in the various embodiments and comparative embodiments of the present disclosure were specifically described as follows:
siliceous substance: microsilicon powder or fly ash in the following embodiments (except embodiment C-19) could be used interchangeably; wherein, the microsilicon powder was purchased from Shanghai Victory Industry Development Co., Ltd.; fly ash was class-C high calcium fly ash purchased from Shanghai Commercial Fly Ash Products Co., Ltd;
the siliceous substance used in embodiment C-19 was silicon micropowder purchased from Huzhou Urban Huatian Calcite Powder Factory.

Calcareous substance: calcareous substance in the following embodiments could be arbitrarily replaced with calcium oxide or calcium hydroxide; calcium oxide: also known as quicklime, purchased from Taicang Orient Metallurgy Lime Product Factory; calcium hydroxide: also known as hydrated lime, purchased from Taicang Orient Metallurgy Lime Product Factory.

Polystyrene particles (expandable polystyrene particles): purchased from Wuxi Xingda New Foam Plastics Materials Co., Ltd.

Water-reducing agent: HF retarding superplasticizer, purchased from Shanghai Dongda Chemical Co., Ltd.

Fiber cotton: Shijiazhuang Dinglong Building Materials Sales Co., Ltd.

Inorganic chopped fiber: purchased from Beijing Xinshijiye Spary-Applied Thermal and Acoustic Insulation Co., Ltd, model F-16G.

### Explanation of Terms:

Siliceous substance: refers to a substance that can react with calcium oxide/calcium hydroxide substances to generate calcium silicate.

Calcareous substance: refers to a substance containing calcium oxide and/or calcium hydroxide.

Water-reducing agent: refers to a substance that can reduce a unit water consumption, improve the fluidity of a mixture and improve the workability, including but not limited to a ligninsulfonate water-reducing agent, a naphthalene sulfonate water-reducing agent, a melamine-based water-reducing agent, an aminosulfonate-based superplasticzer and a polycarboxylate-based high performance water-reducing agent.

Inorganic chopped fiber: an inorganic fiber with a chopped length ranging from 1 mm to 25 mm.

In the following embodiments and comparative embodiments, A represents the weight of the siliceous substance, B represents the weight of the calcareous substance, C represents the weight of inorganic raw materials (that is, the sum of the siliceous substance and the calcareous substance), and D represents the weight of organic raw materials (that is, the expandable polystyrene particles, or polystyrene and water-reducing agent, or polystyrene and reinforced fiber). The data of the amount of substances in the tables are divided by 10, which is the number of parts corresponding to each substance.

In the following embodiments and comparative embodiments, the detection criteria are as follows: a compressive strength is tested according to GB/T 5486-2008 *Test Methods for Inorganic Rigid Thermal Insulation Products,* a tensile strength perpendicular to the board surface is tested according to GB/T 29906-2013 *External Thermal Insulation Composite Systems Based on Expanded Polystyrene,* a burning grade is tested according to GB 8624-2012 *Classification for Burning Behavior of Building Materials and Products,* bending deformation is tested according to GB/T 10801.1 *Molded Polystyrene Foam for Thermal Insulation,* the volumetric water absorption rate is tested according to GB/T 1034-2008 *Plastics-Determination of Water Absorption,* and the thermal conductivity is tested according to GB/T 10294 *Thermal insulation-Determination of steady-state thermal resistance and related properties-Guarded hot plate apparatus.*

### Preparation methods for a floor fire-resistant and thermal insulation material of embodiment A-1 to embodiment A-90 and comparative embodiment A-1 to comparative embodiment A-4 are as follows:

Firstly, by heating, the expanded volume of polystyrene particles was increased to obtain pre-foamed polystyrene particles. By setting a steam pressure, the density of the pre-foamed polystyrene particles changed correspondingly, so as to meet the required density requirements, so that the density of the pre-foamed polystyrene particles reached 6 to 12 g/L. The steam pressure was set to 0.2 MPa, the temperature was set to 100 °C, the time was set to 30 seconds, the pressure was kept for 10 seconds, and the pressure was reduced for 3 seconds.

Then, at 10 °C to 30 °C, water, a siliceous substance (silicon dioxide), a calcareous substance (calcium oxide or calcium hydroxide), as well as an inorganic chopped fiber and a water-reducing agent that might be used were mixed and stirred uniformly (the stirring time was adjusted according to the temperature change, and the rotating speed of a mixer was set at 300 rpm), so that all of them were mixed uniformly to be a pre-mixed cementitious material.

Then, the pre-foamed polystyrene particles were added into a mixing tank. After the mixer was started, the pre-mixed cementitious material was put into the mixer for mixing and stirring, which was fully and uniformly mixed. After many repeated tests, the stirring speed should be set at no more than 200 rpm to prevent the polystyrene particles from shrinking and deforming. In addition, the tolerable weight of the added polystyrene material might be adjusted according to the tolerable weight required by customers.

Then the stirred mixture (containing polystyrene particles foamed once) was input into a mold, the vertical height of the mold might be adjusted under pressure until it reached a set height. As the material might shrink in a certain ratio after heating and pressurizing, it was found after many tests that, taking a product thickness of 5 cm as an example, the height of a level-sensing device needed to be adjusted to 6 to 9 cm, and the shrinkage ratio was 10 to 45 %. The internal pressure of the raw material composition was kept at 0.55 MPa or more, so that the density of the raw material composition reached 230 kg/m³ or less.

Before the mold entered a pressing platform, the temperature of an oil heater was set between 50 to 150 °C to preheat the pressing platform. When the temperature reached the set value, the mold was pushed in, pressurized for 35 minutes or more to shape and then allowed to cool naturally to exit the mold. In the process of heating and pressurizing, the polystyrene particles were subjected to a secondary foaming in the mold, which further improved the compactness and the tensile strength.

Finally, the product taken from the mold was maintained in a maintenance room. The maintenance room needed to be dried and ventilated. The maintaining time was generally about 5 to 10 days, depending on the temperature and humidity.

Heating and pressurizing: to make the temperature in the mold reached 50 to 150 °C, and to make the pressure applied on the mold to be 0.55 MPa or more.

Keeping the heating and pressurizing: after the temperature in the mold reached 50 to 150 °C, and the pressure applied to the mold was 0.55 MPa or more, the temperature and pressure were kept stable for a period of time.

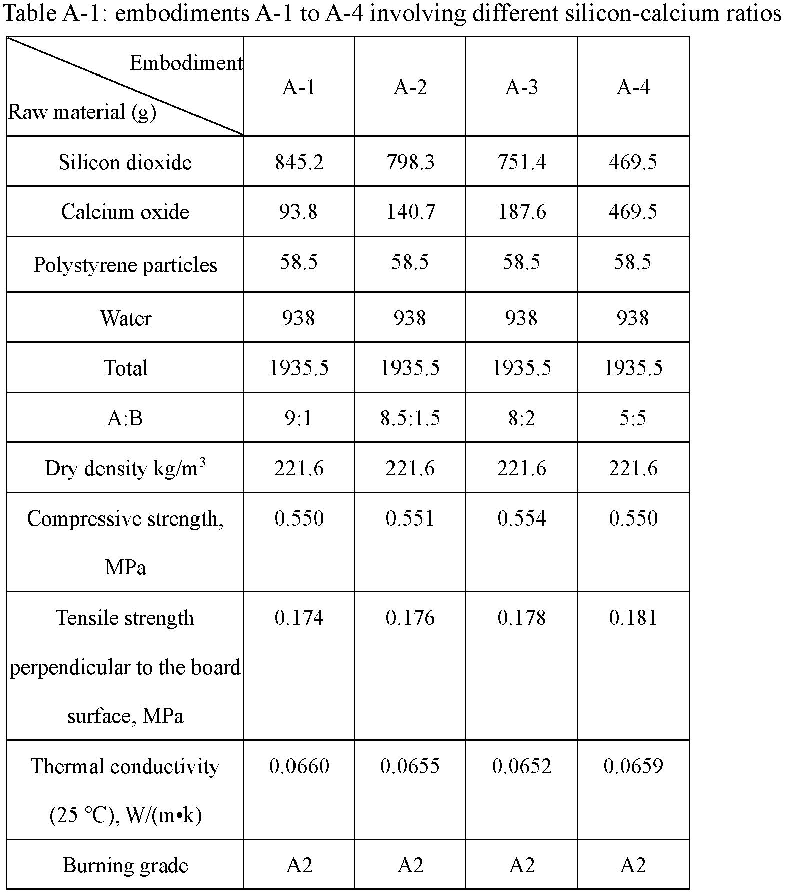

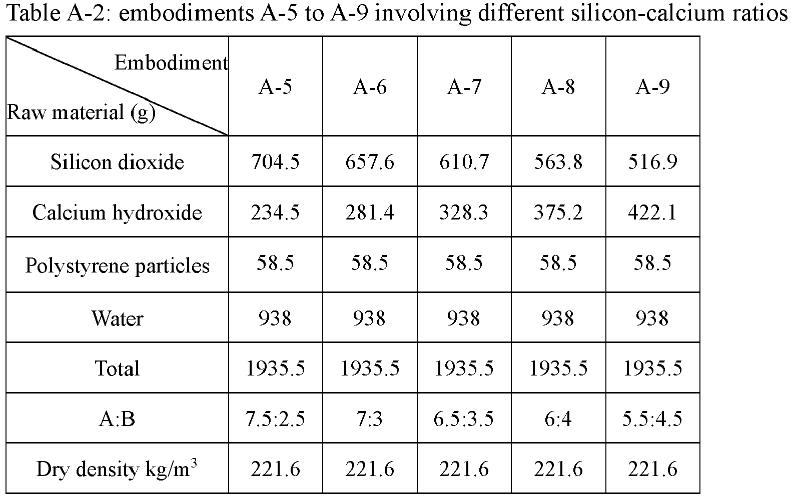

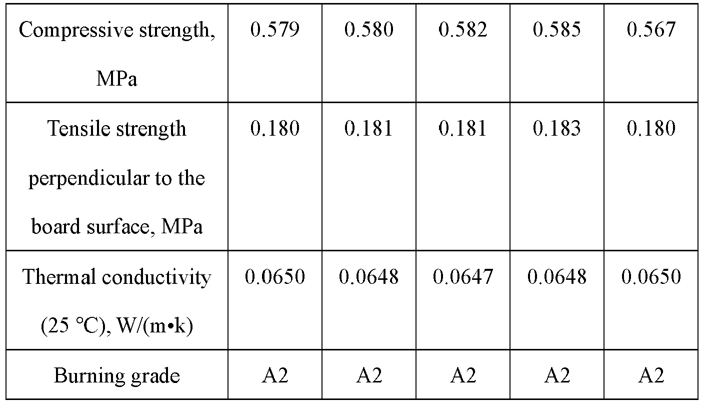

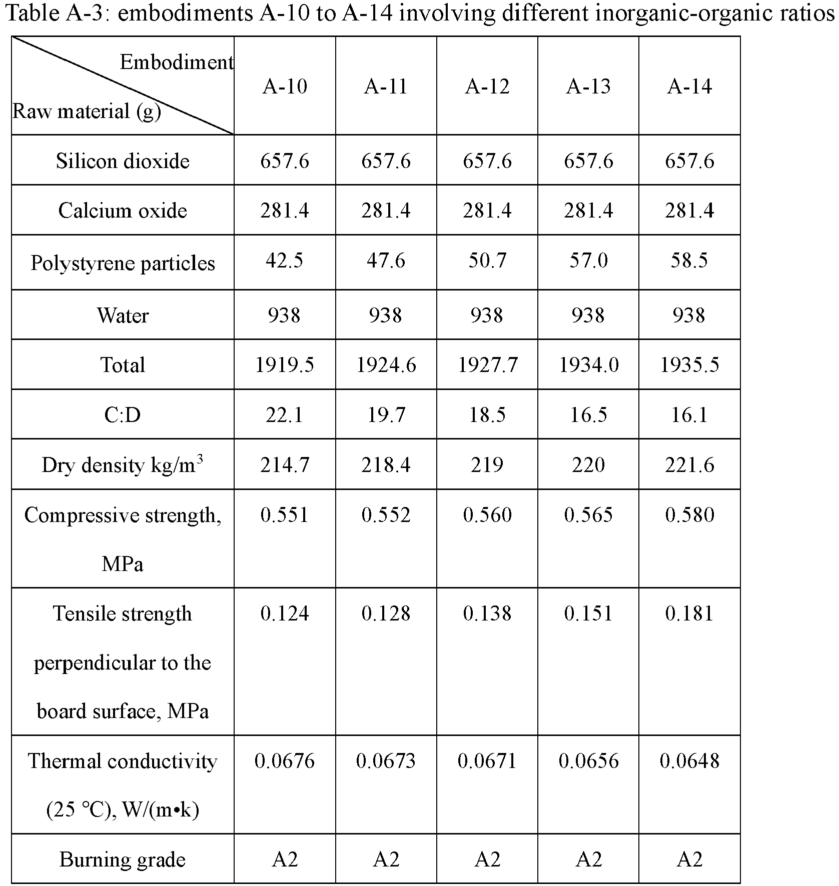

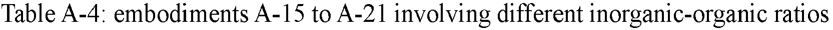

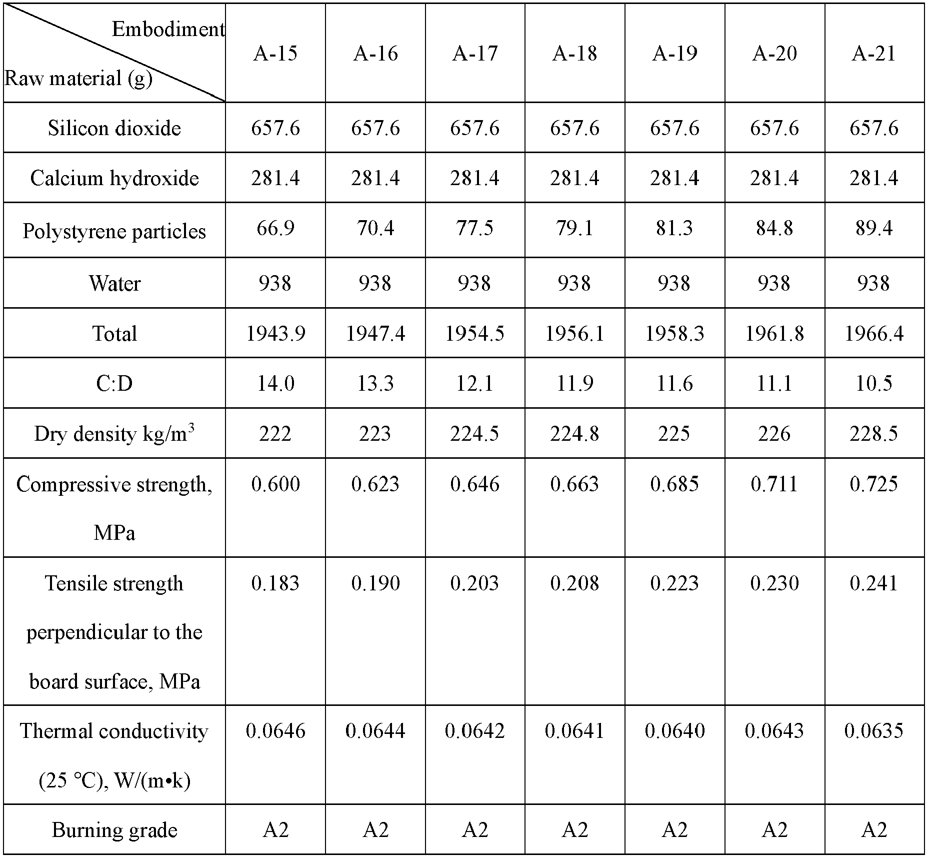

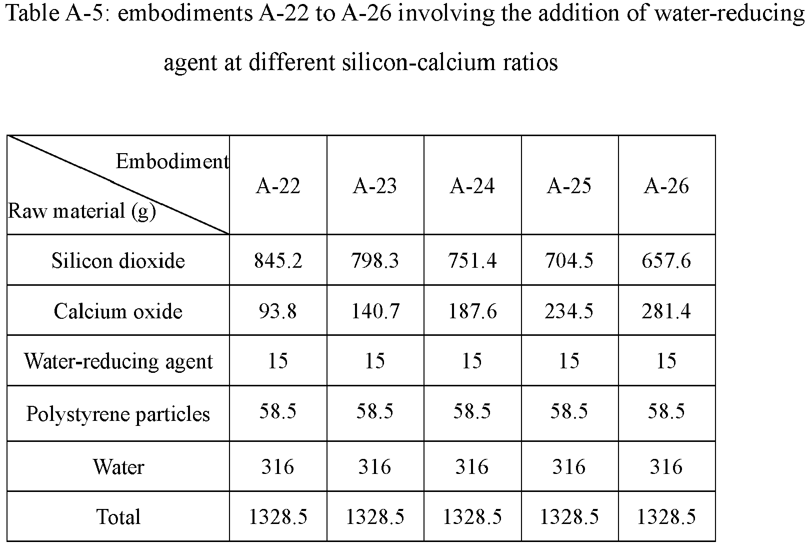

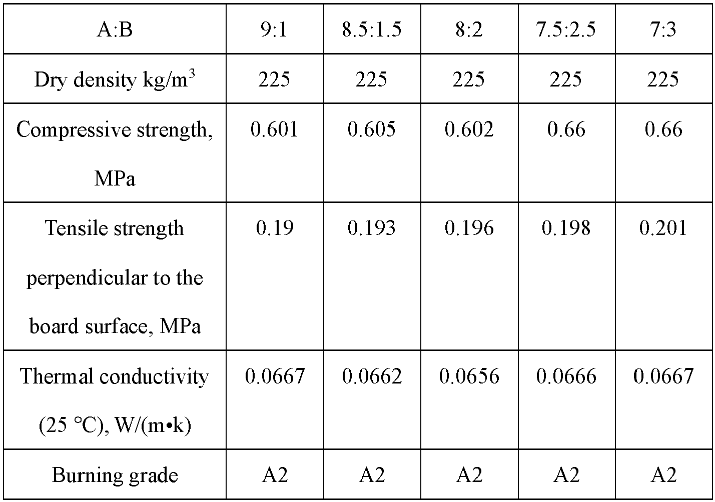

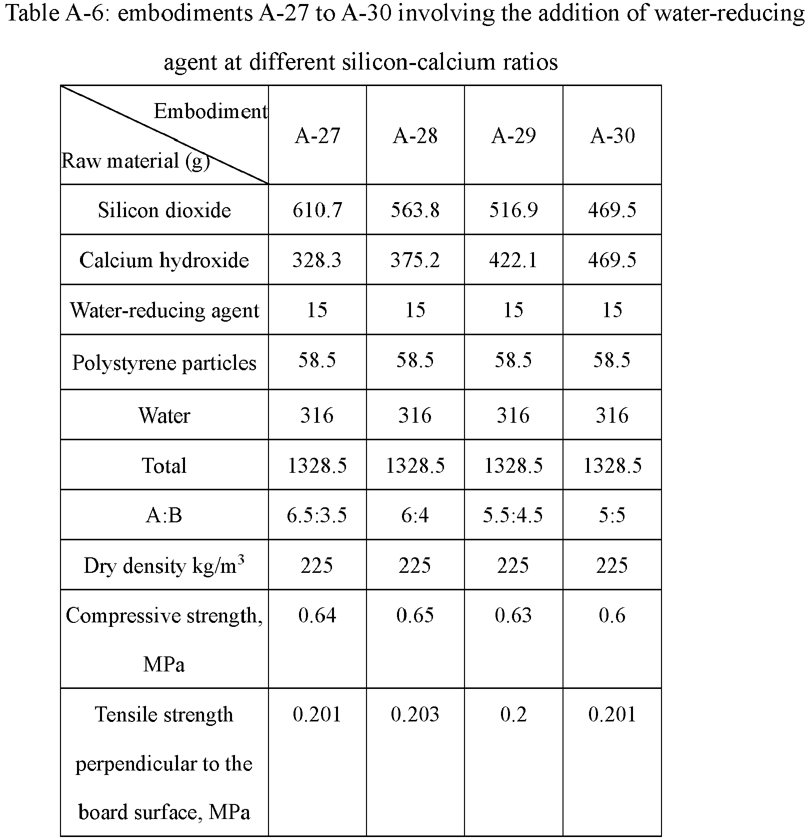

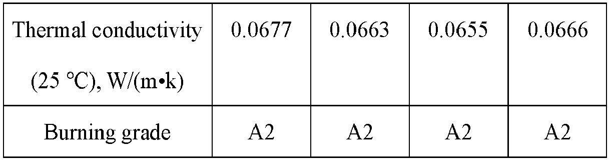

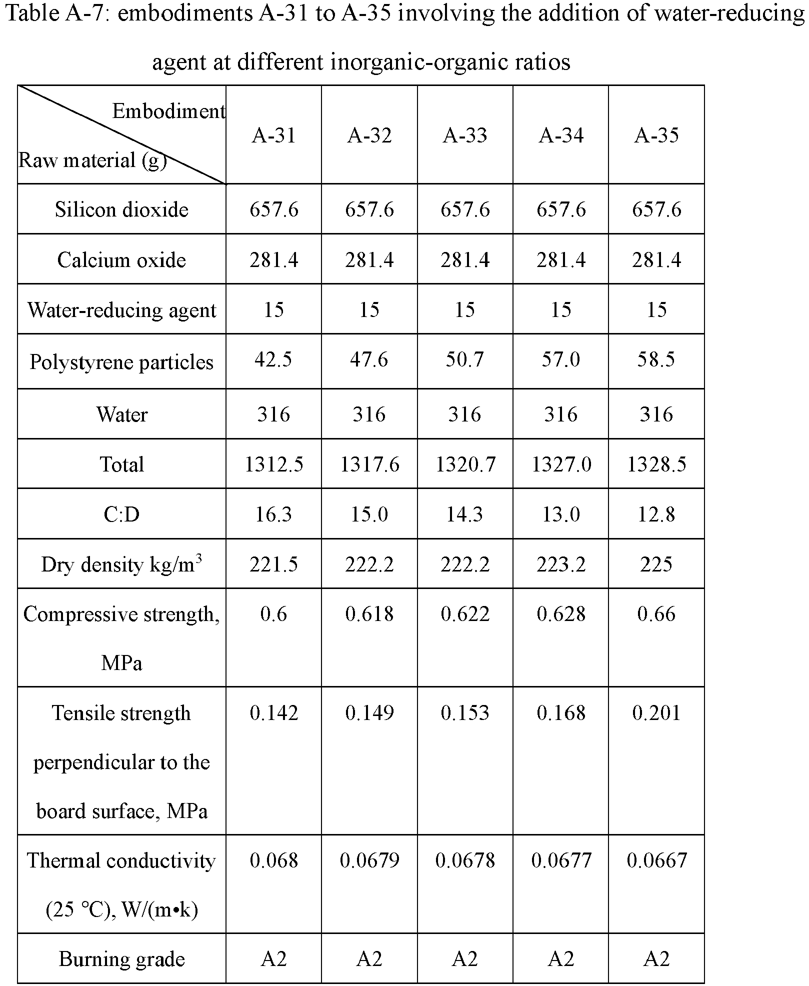

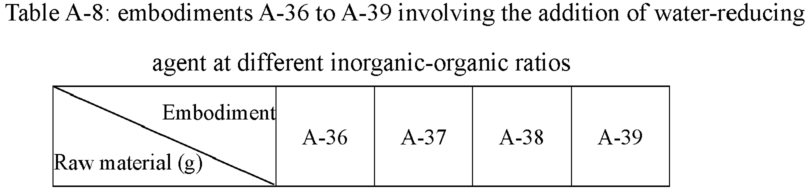

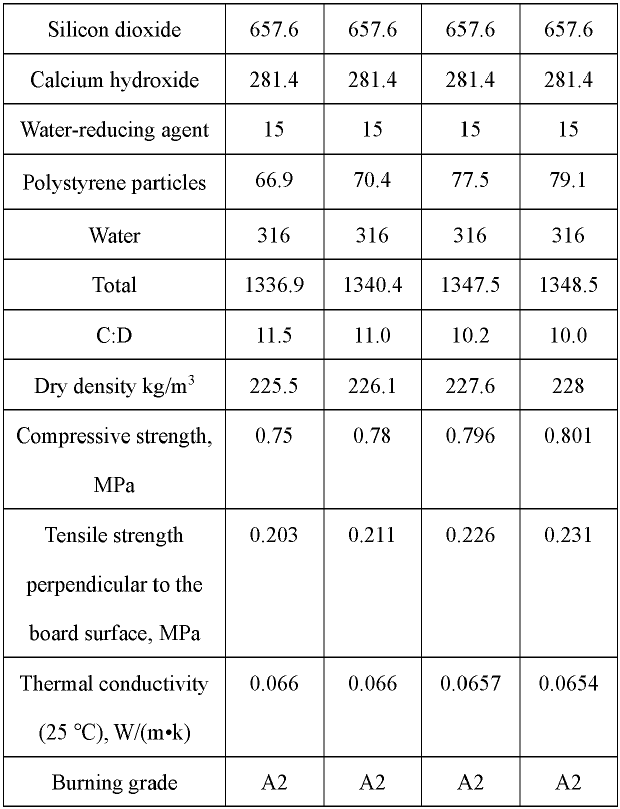

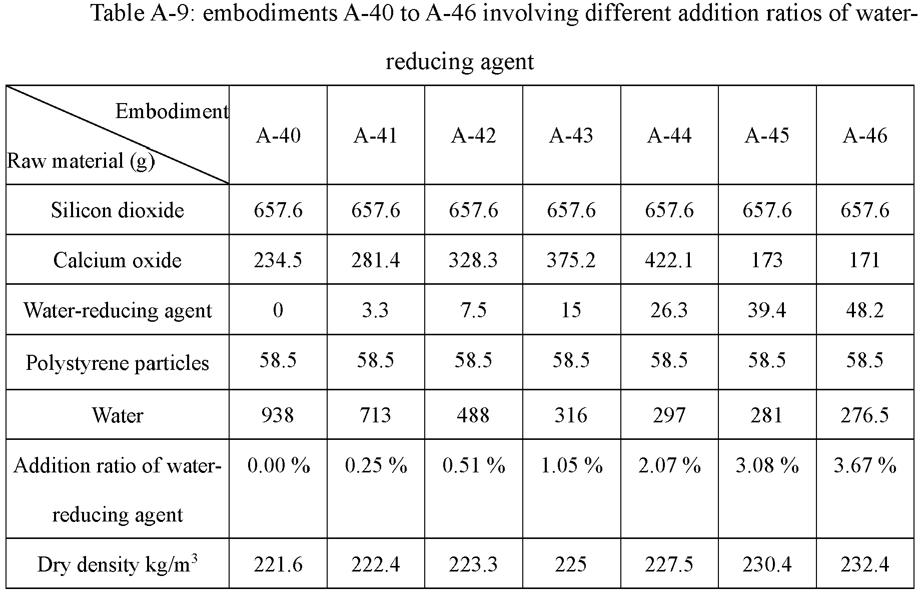

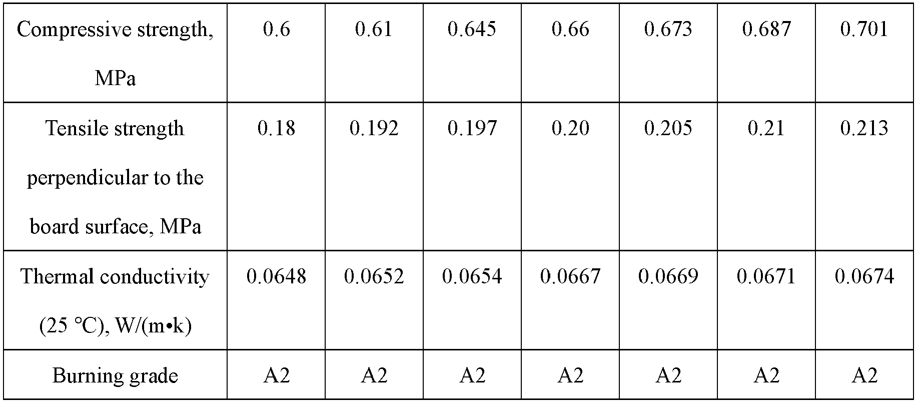

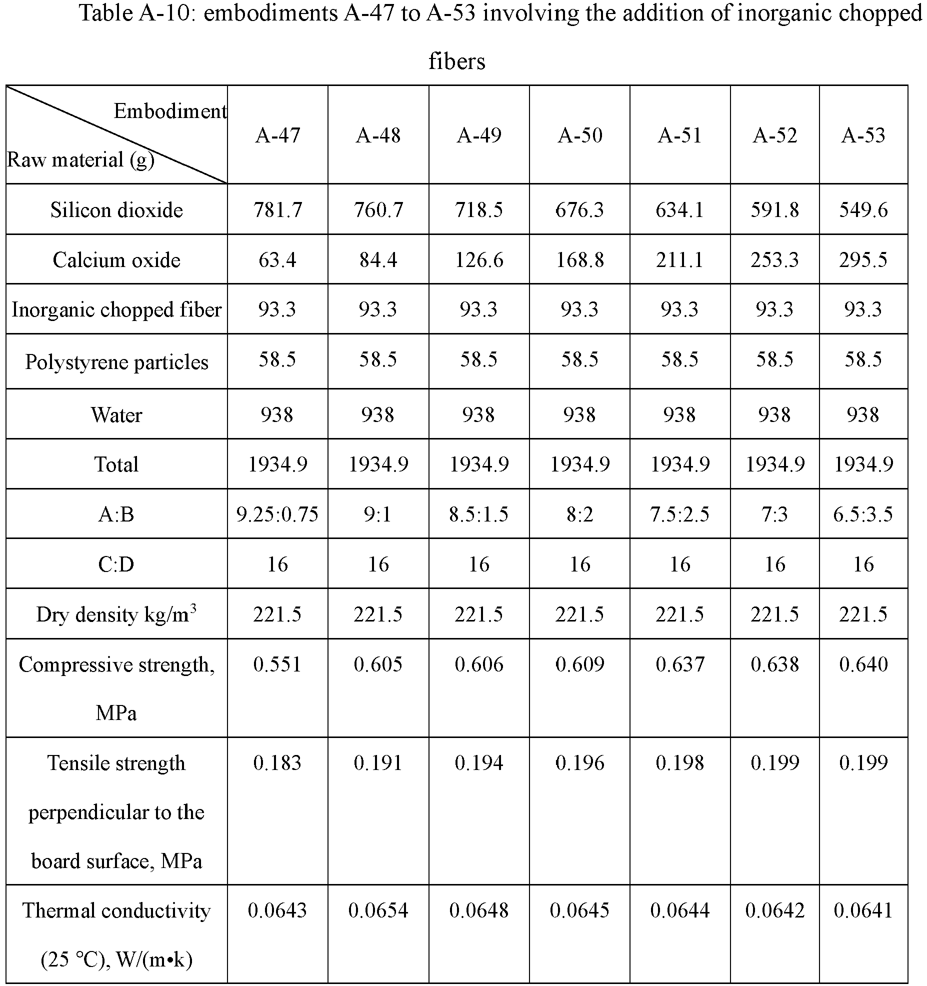

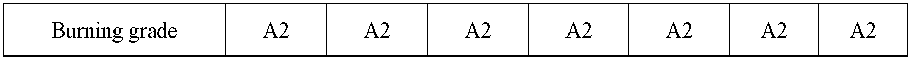

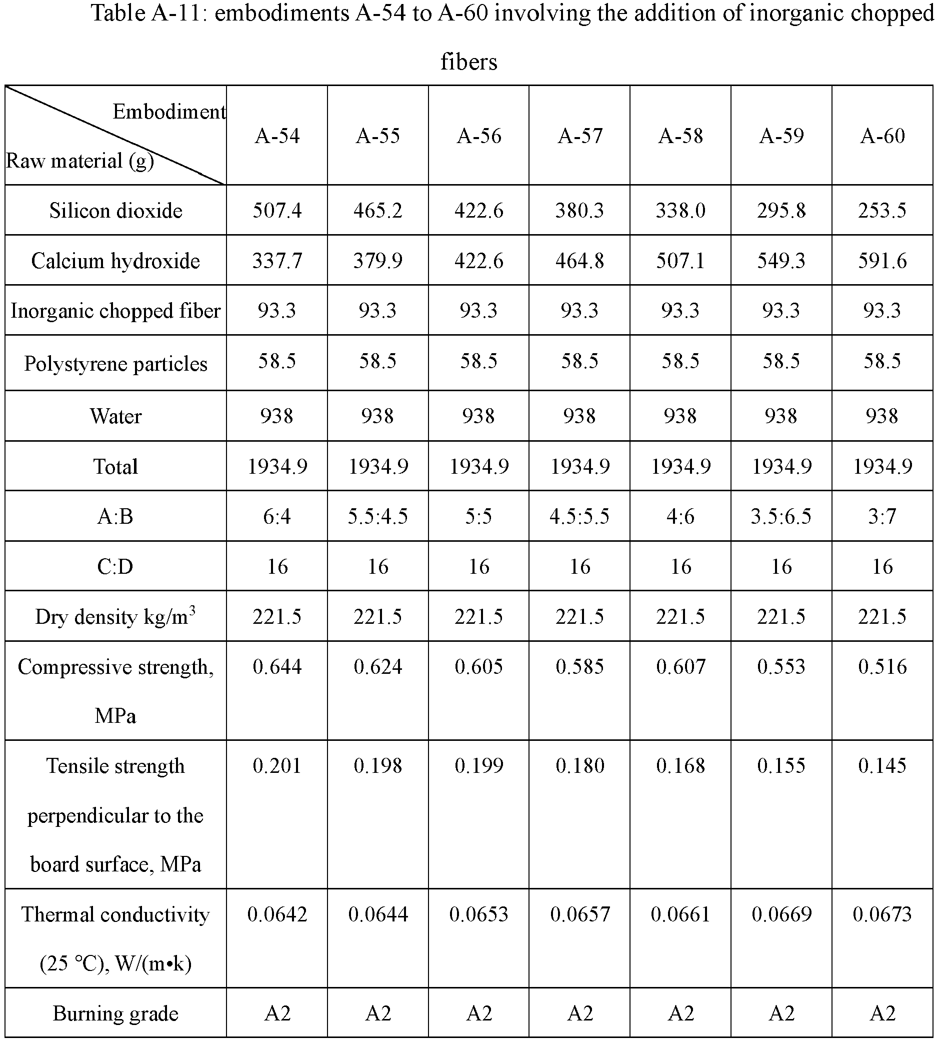

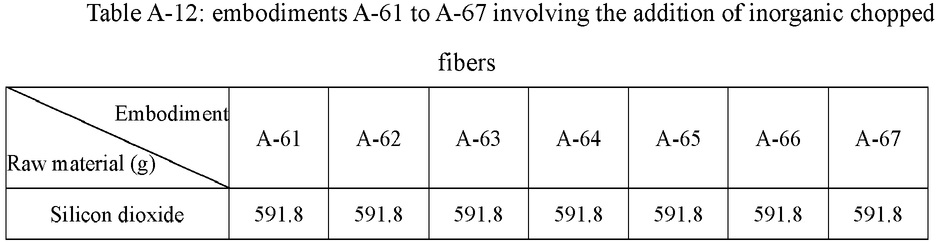

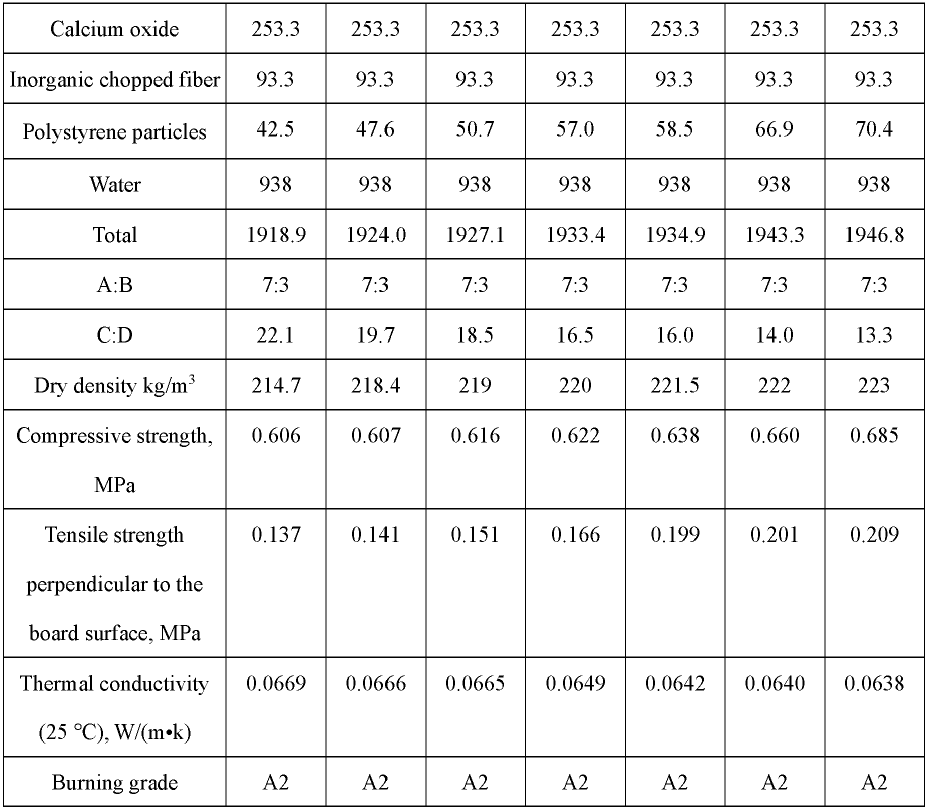

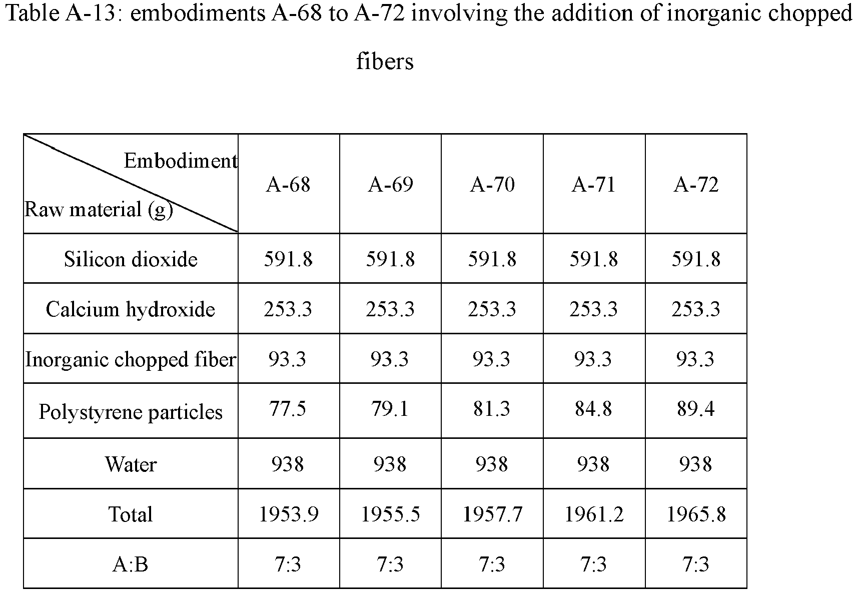

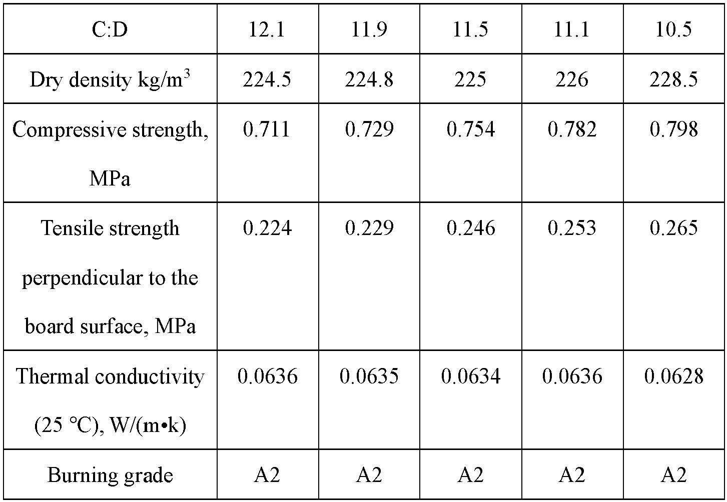

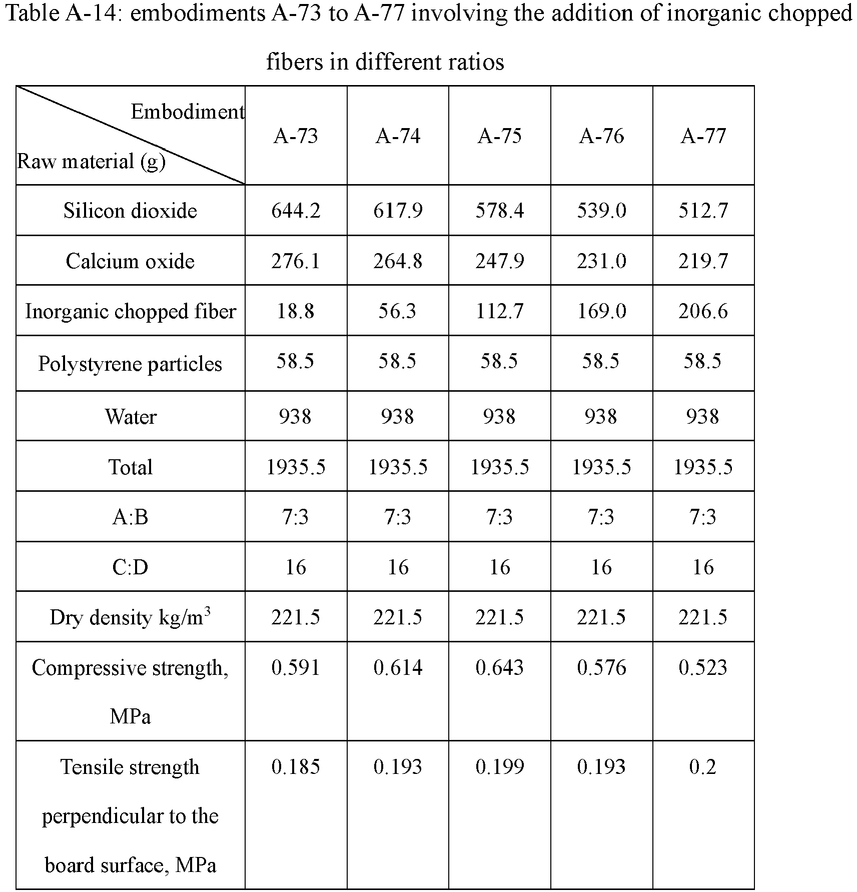

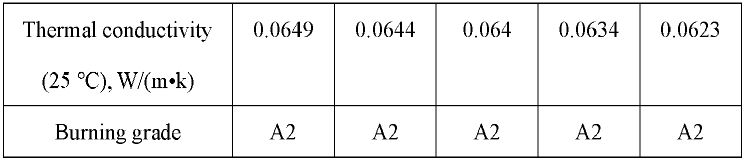

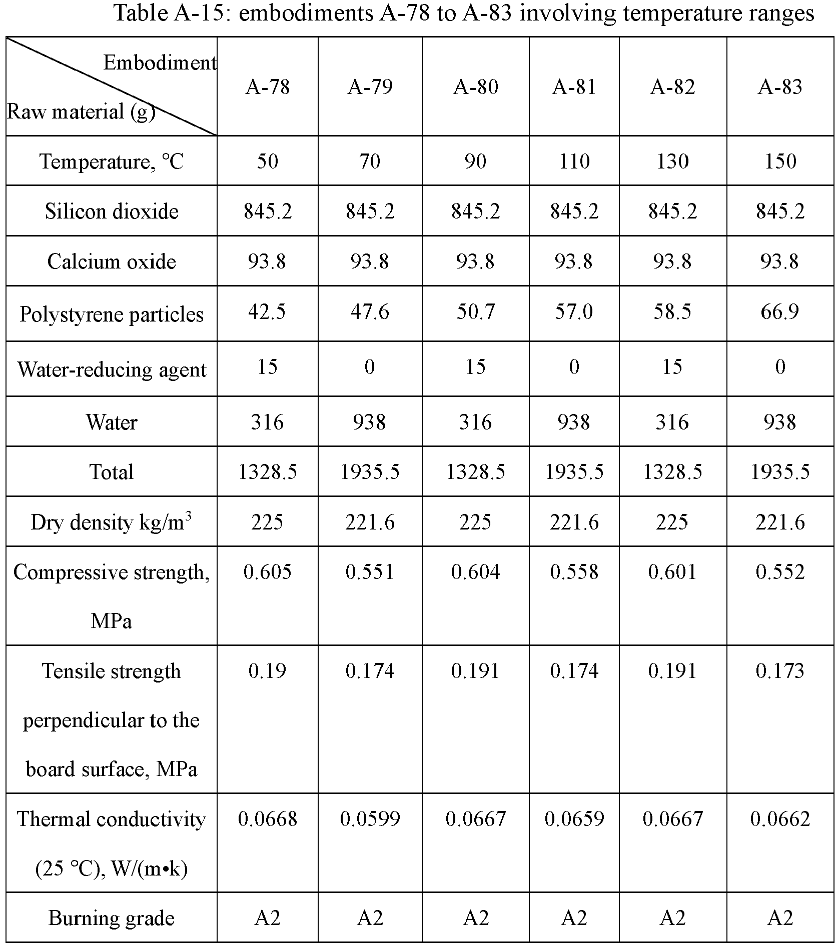

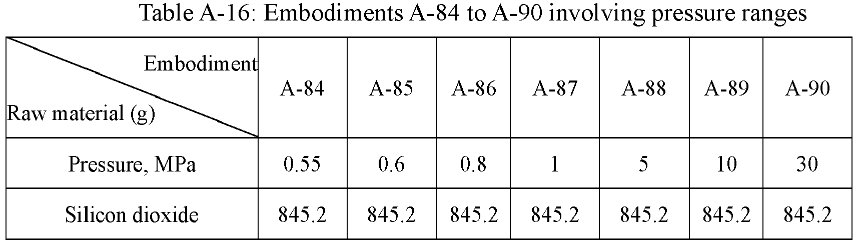

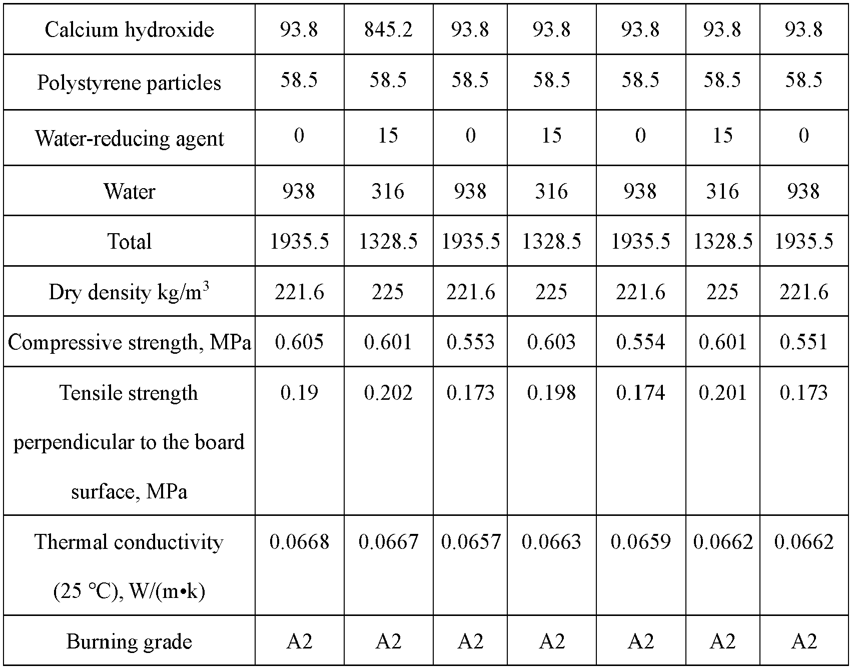

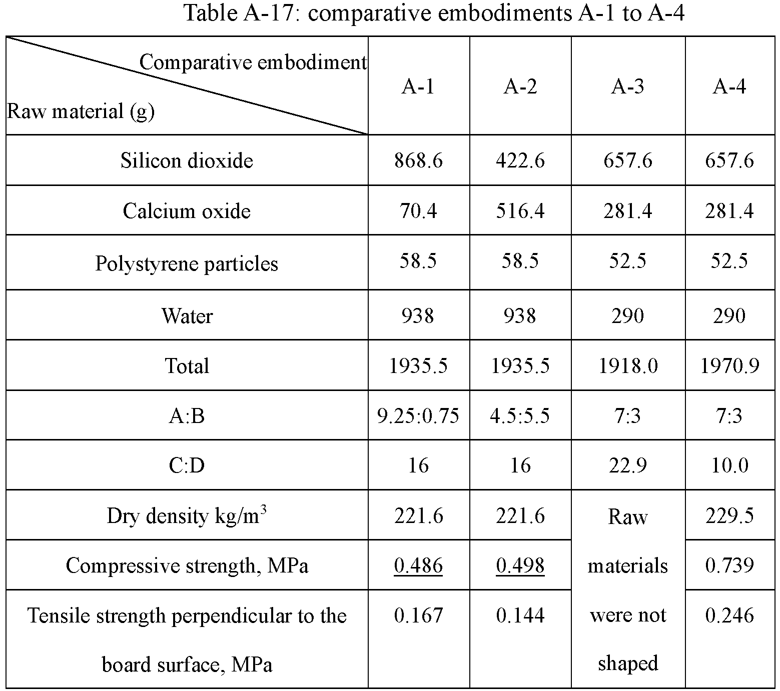

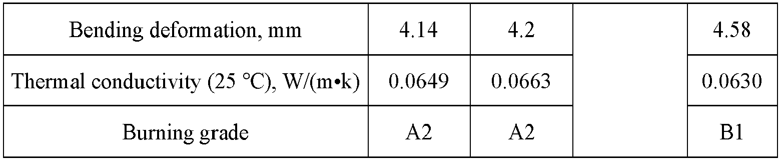

As can be seen from Table A-1, the weight ratio of the inorganic raw materials to the polystyrene particles was kept at 16, and when the weight ratio of the siliceous substance to the calcareous substance was 1-9, the compressive strength could reach 0.55 MPa or more, the tensile strength could reach 0.174 MPa or more, and the thermal conductivity was 0.066 or less. In Table 2, when the weight ratio of the siliceous substance to the calcareous substance was 1.22 to 3, the compressive strength could reach 0.567 MPa or more, the tensile strength could reach 0.18 MPa or more, and the thermal conductivity was 0.065 or less. When the weight ratio of the siliceous substance to the calcareous substance was 1.5-2.33, the compressive strength could reach 0.58 MPa or more, the tensile strength could reach 0.181 MPa or more, and the thermal conductivity was 0.0648 or less.

As can be seen from Table A-3 and Table A-4, the weight ratio of the siliceous substance to the calcareous substance was 2.33, when the weight ratio of the inorganic raw materials to the polystyrene particles was 10.5-22.1, the compressive strength could reach 0.551 MPa or more, the tensile strength could reach 0.124 MPa or more, and the thermal conductivity could reach 0.0676 or less. When the weight ratio of the inorganic raw materials to the polystyrene particles was 10.5-18.5, the compressive strength could reach 0.56 MPa or more, the tensile strength could reach 0.138 MPa or more, and the thermal conductivity could reach 0.0671 or less. When the weight ratio of the inorganic raw material to the polystyrene particles was 10.5-14, the compressive strength could reach 0.6 MPa or more, the tensile strength could reach 0.183 MPa or more, and the thermal conductivity could reach 0.0646 or less.

As can be seen from Table A-5 and Table A-6, the weight ratio of the inorganic raw materials to the polystyrene particles was kept at 16, when the weight ratio of the siliceous substance to the calcareous substance was in the range of 1 to 9, a water-reducing agent of 1 % of the total weight of the materials was added, the compressive strength could reach 0.6 MPa or more, the tensile strength could reach 0.19 MPa or more, and the thermal conductivity could reach 0.0667 or less. When the weight ratio of the siliceous substance to the calcareous substance was greater than 9, the compressive strength was 0.54, which did not meet the compressive requirements. When the weight ratio of the siliceous substance to the calcareous substance was less than 1, it also did not meet the compressive requirements.

As can be seen from Table A-7 and Table A-8, the weight ratio of the siliceous substance to the calcareous substance was kept at 2.33, when the weight ratio of the inorganic raw materials to the polystyrene particles was 10-16.3, the water-reducing agent of 1 % of the total weight of the materials was added, the compressive strength could reach 0.6 MPa or more, the tensile strength could reach 0.142 MPa or more, and the thermal conductivity could reach 0.068 or less. Even the weight ratio of the inorganic raw materials to the polystyrene particles was less than 10.5, such as 10.2 or 10, adding a water-reducing agent could still keep the fire resistance performance of the final product at A2 level. However, when the weight ratio of the inorganic raw materials to the polystyrene particles was 9.7, the fire resistance performance of the final product was at B1 level. When the weight ratio of the inorganic raw materials to the polystyrene particles was 16.8, the thermal conductivity was 0.0686, which did not meet the thermal insulation requirements.

It can also be seen from Table A-7 and Table A-8 that the addition of the polystyrene particles could significantly improve the tensile strength of the thermal insulation material product. In particular, in Table 8, the tensile strength reached 0.18 MPa or more.

It can be seen from Table A-9 that the addition of water-reducing agent within 4 % could effectively improve the tensile strength and compressive strength. When the addition of water-reducing agent higher than 4 %, the material was difficult to be shaped.

As can be seen from Table A-10 and Table A-11, the weight ratio of the inorganic raw materials to the polystyrene particles was kept at 16, when the weight ratio of the siliceous substance to the calcareous substance was in the range of 1 to 9, an inorganic chopped fiber of 10 % of the total weight of the materials was added, the compressive strength could reach 0.551 MPa or more, the tensile strength could reach 0.145 MPa or more, and the thermal conductivity could reach 0.0673 or less. When the weight ratio of the siliceous substance to the calcareous substance was greater than 9, the material could not be shaped.

As can be seen from Table A-12 and Table A-13, the weight ratio of the siliceous substance to the calcareous substance was kept at 7:3, when the weight ratio of the inorganic raw materials to the polystyrene particles was in the range of 10.5 to 22.1, the inorganic chopped fiber of 10 % of the total weight of the materials was added, the compressive strength could reach 0.606 MPa or more, the tensile strength could reach 0.137 MPa or more, and the thermal conductivity could reach 0.0669 or less. When the weight ratio of the inorganic raw materials to the polystyrene particles was less than 10, the fire resistance performance of the final product was B1. When the weight ratio of the inorganic raw materials to the polystyrene particles was greater than 22.1, the material could not be shaped.

As can be seen from Table A-14, the addition of different amounts of inorganic chopped fibers was helpful to improve the strength.

As can be seen from Table A-15, the temperature could be 50 to 150 °C. When the temperature was less than 50 °C, both the tensile strength and the compressive strength decreased sharply. When the temperature was higher than 150 °C, the aggregate was charred.

As can be seen from Table A-16, the pressure was 0.55 MPa or more, up to the limit strength of the steel mold of 235 MPa. When the pressure was less than 0.55 MPa, the compressive strength of the final product was less than 0.55 MPa, and when the pressure was greater than 235 MPa, the mold was crushed.

It can be seen from Table A-17 that when the weight ratio of the siliceous substance to the calcareous substance was greater than 9 or less than 1 without adding the water-reducing agent and the inorganic chopped fiber, the compressive strength was less than 0.5 MPa, thus the compressive strength was not up to standard. When the weight ratio of the inorganic raw materials to the polystyrene particles was greater than 22.1, the material could not be shaped and manufactured. When the weight ratio of the inorganic raw materials to the polystyrene particles was less than 10.5, the fire resistance performance was B1, thus the fire resistance performance was not up to the standard.

### Preparation methods for a thermal insulation wall material of embodiment B-1 to embodiment B-118 and comparative embodiment B-1 to comparative embodiment B-4 are as follows:

Firstly, by heating, the expanded volume of polystyrene particles was increased to obtain pre-foamed polystyrene particles. By setting a steam pressure, the density of the pre-foamed polystyrene particles changed correspondingly, so as to meet the required density requirements, so that the density of the pre-foamed polystyrene particles reached 6 to 12 g/L. The steam pressure was set to 0.2 MPa, the temperature was set to 100 °C, the time was set to 30 seconds, the pressure was kept for 10 seconds, and the pressure was reduced for 3 seconds.

Then, at 10 °C to 30 °C, water, a siliceous substance (silicon dioxide), a calcareous substance (calcium oxide or calcium hydroxide), as well as an inorganic chopped fiber and a water-reducing agent that might be used were mixed and stirred uniformly (the stirring time was adjusted according to the temperature change, and the rotating speed of a mixer was set at 300 rpm), so that all of them were mixed uniformly to be a pre-mixed cementitious material.

Then, the pre-foamed polystyrene particles were added into a mixing tank. After the mixer was started, the pre-mixed cementitious material was put into the mixer for mixing and stirring, which was fully and uniformly mixed. After many repeated tests, the stirring speed should be set at no more than 200 rpm to prevent the polystyrene particles from shrinking and deforming. In addition, the tolerable weight of the added polystyrene material might be adjusted according to the tolerable weight required by customers.

Then the stirred mixture (containing polystyrene particles foamed once) was input into a mold, the vertical height of the mold might be adjusted under pressure until it reached a set height. As the material might shrink in a certain ratio after heating and pressurizing, it was found after many tests that, taking a product thickness of 5 cm as an example, the height of a level-sensing device needed to be adjusted to 6 to 9 cm, and the shrinkage ratio was 10 to 45 %. The internal pressure of the raw material composition was kept at 2.8 MPa or more, so that the density of the raw material composition reached 525 kg/m³ or less.

Before the mold entered a pressing platform, the temperature of an oil heater was set between 50 to 150 °C to preheat the pressing platform. When the temperature reached the set value, the mold was pushed in, pressurized for 35 minutes or more to shape and then allowed to cool naturally to exit the mold. In the process of heating and pressurizing, the polystyrene particles were subjected to a secondary foaming in the mold, which further improved the compactness and the tensile strength.

Finally, the product taken from the mold was maintained in a maintenance room. The maintenance room needed to be dried and ventilated. The maintaining time was generally about 5 to 10 days, depending on the temperature and humidity.

Heating and pressurizing: to make the temperature in the mold reached 50 to 150 °C, and to make the pressure applied on the mold to be 2.8 MPa or more.

Keeping the heating and pressurizing: after the temperature in the mold reached 50 to 150 °C, and the pressure applied to the mold was 2.8 MPa or more, the temperature and pressure were kept stable for a period of time.

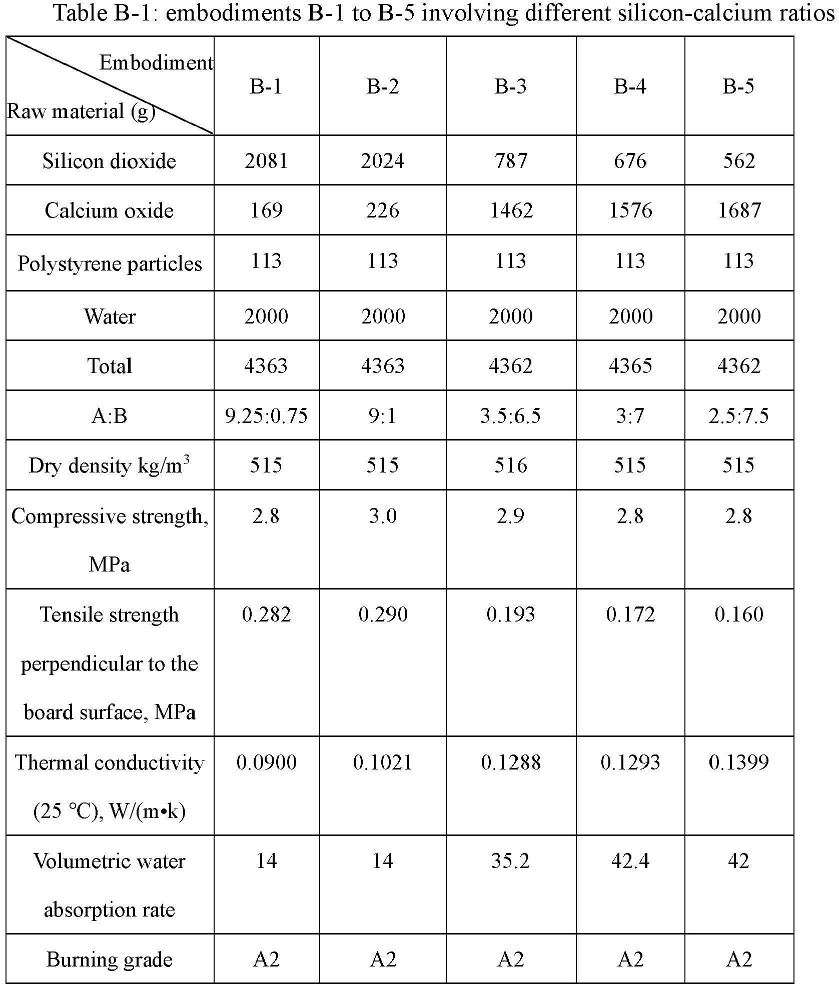

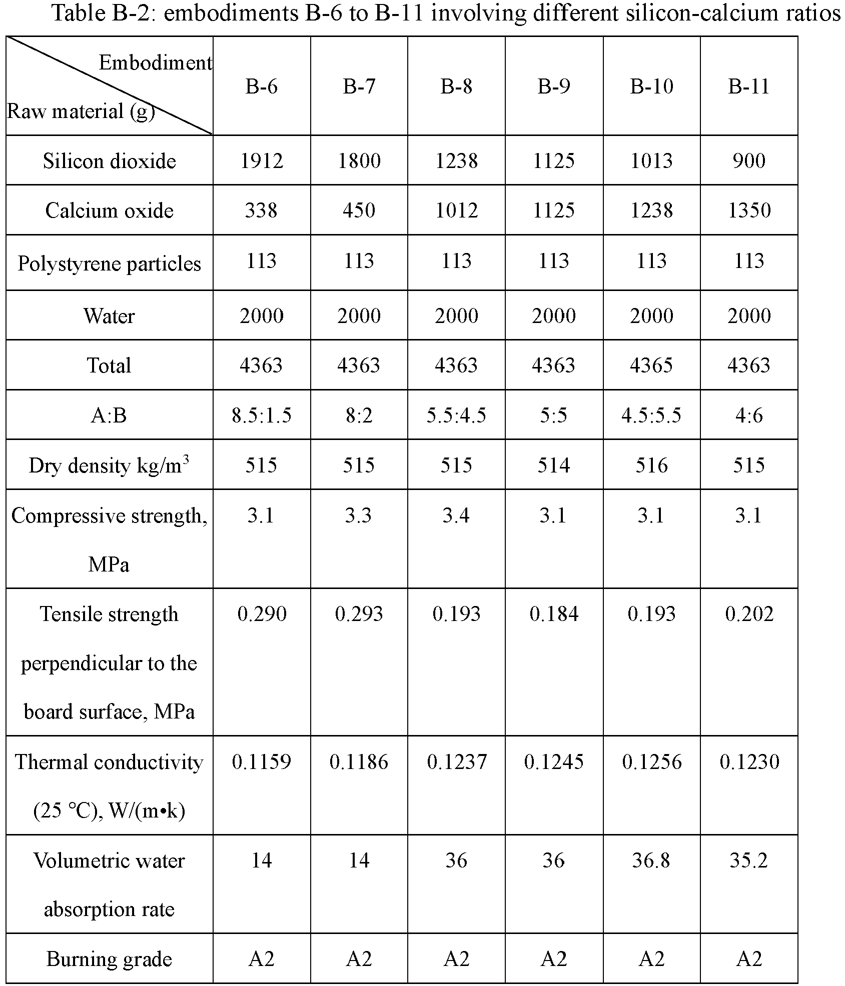

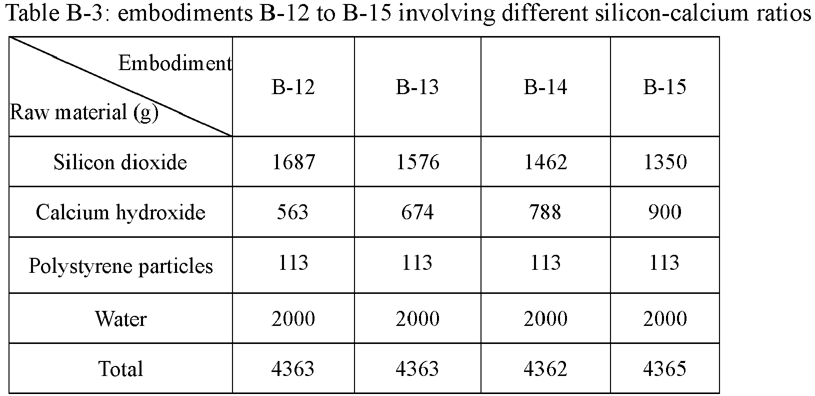

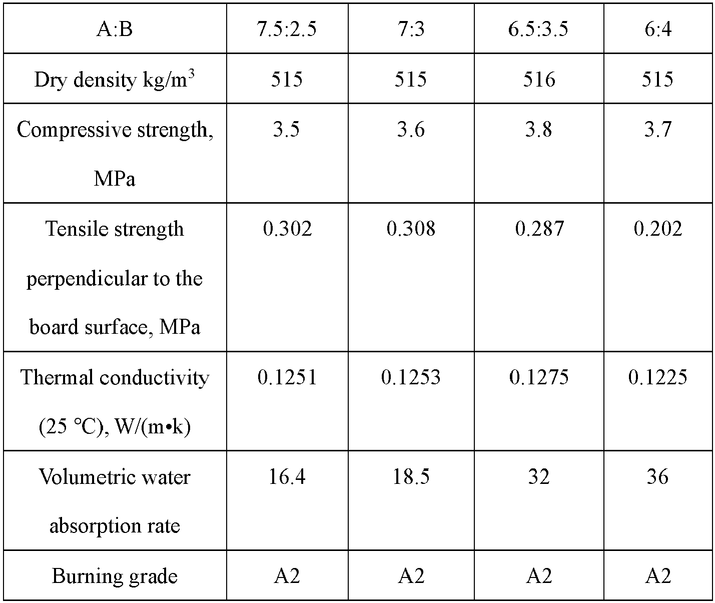

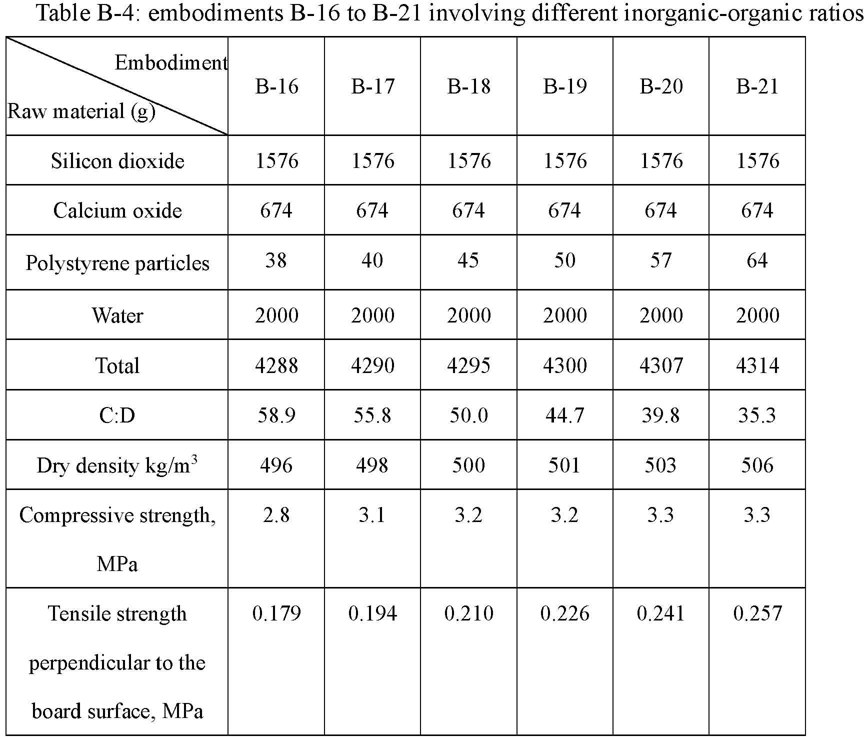

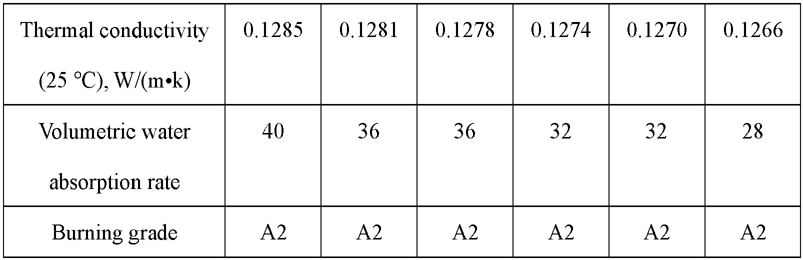

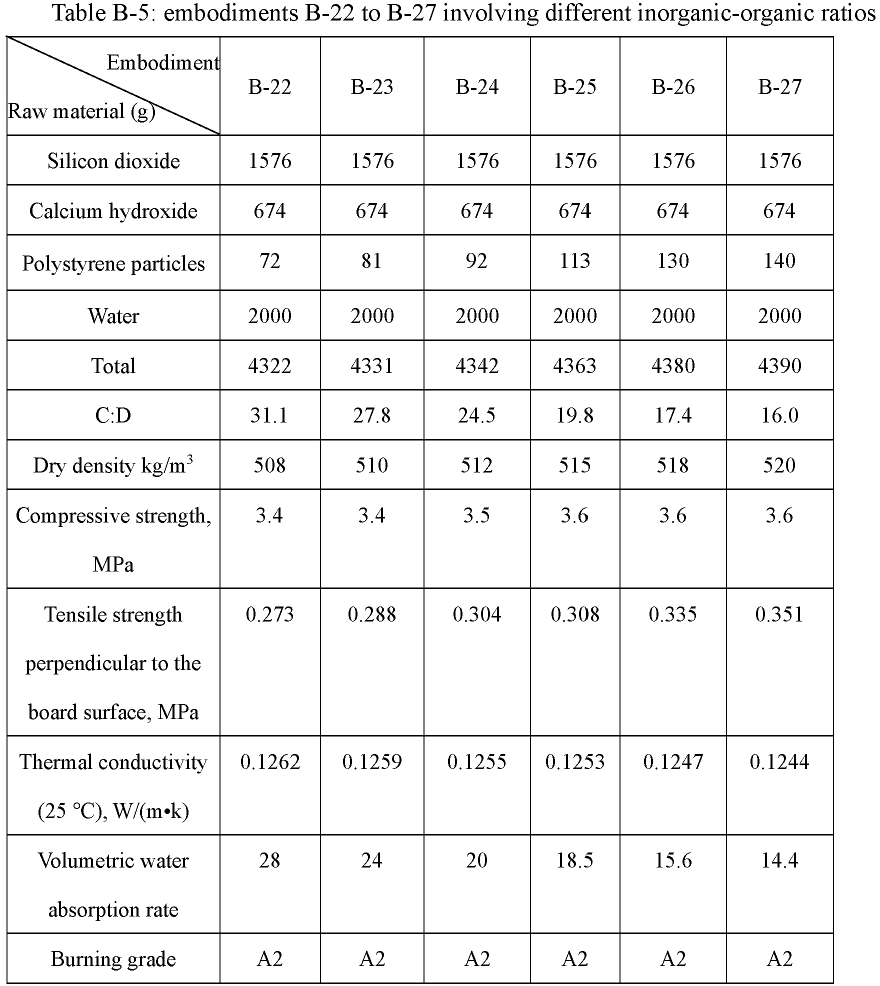

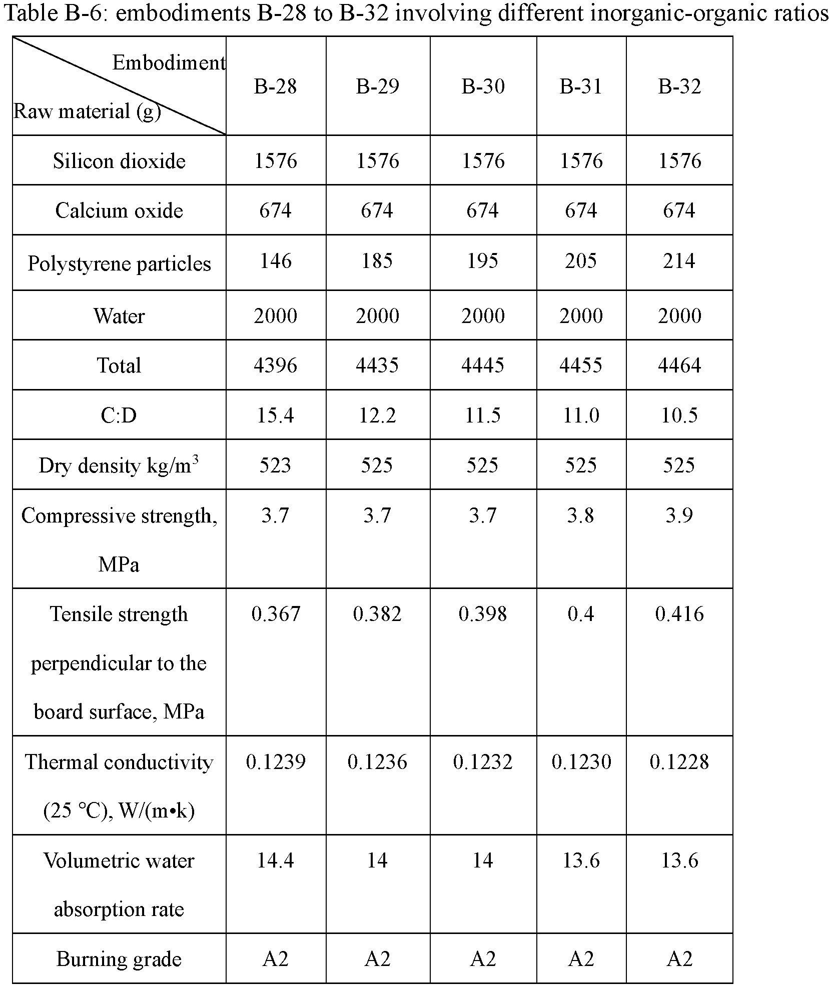

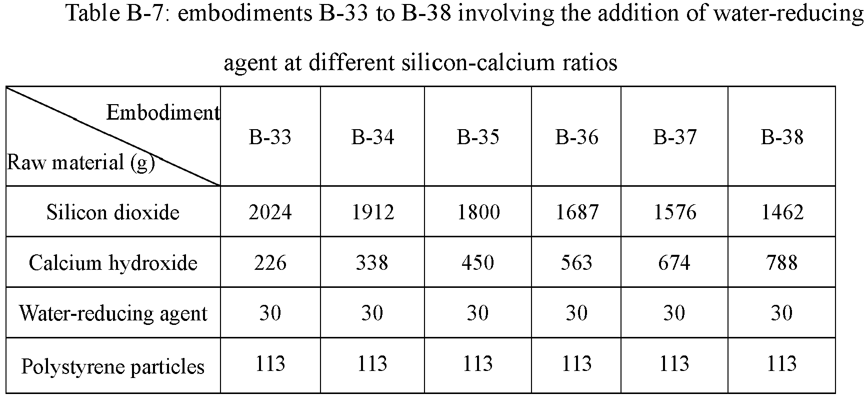

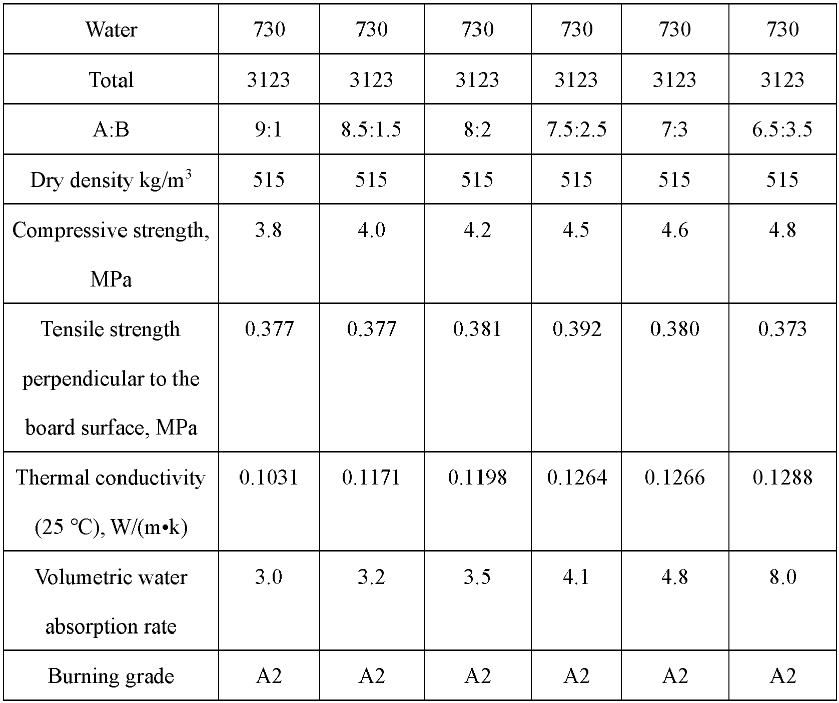

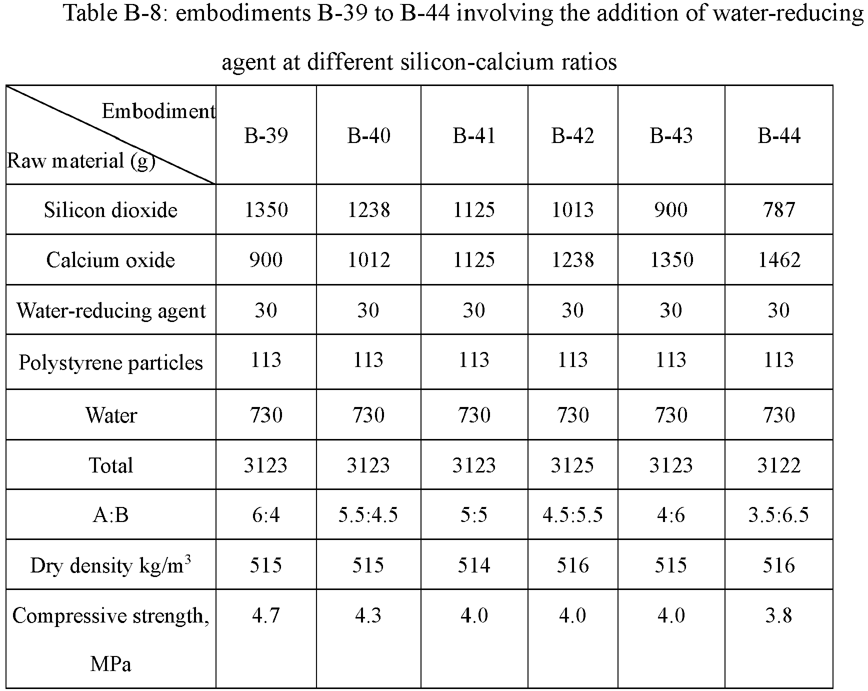

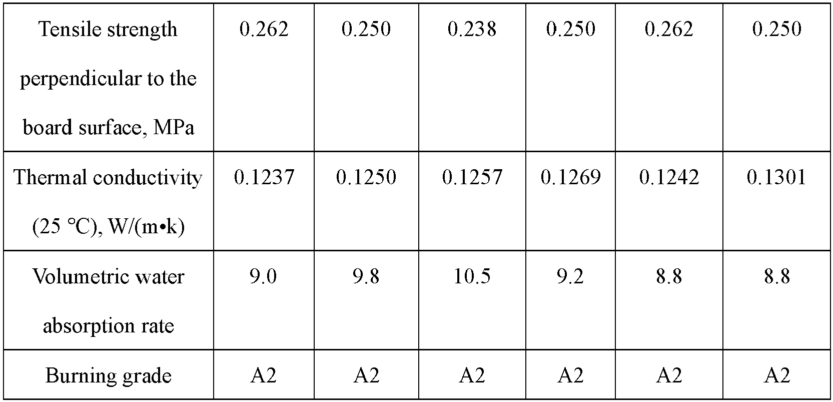

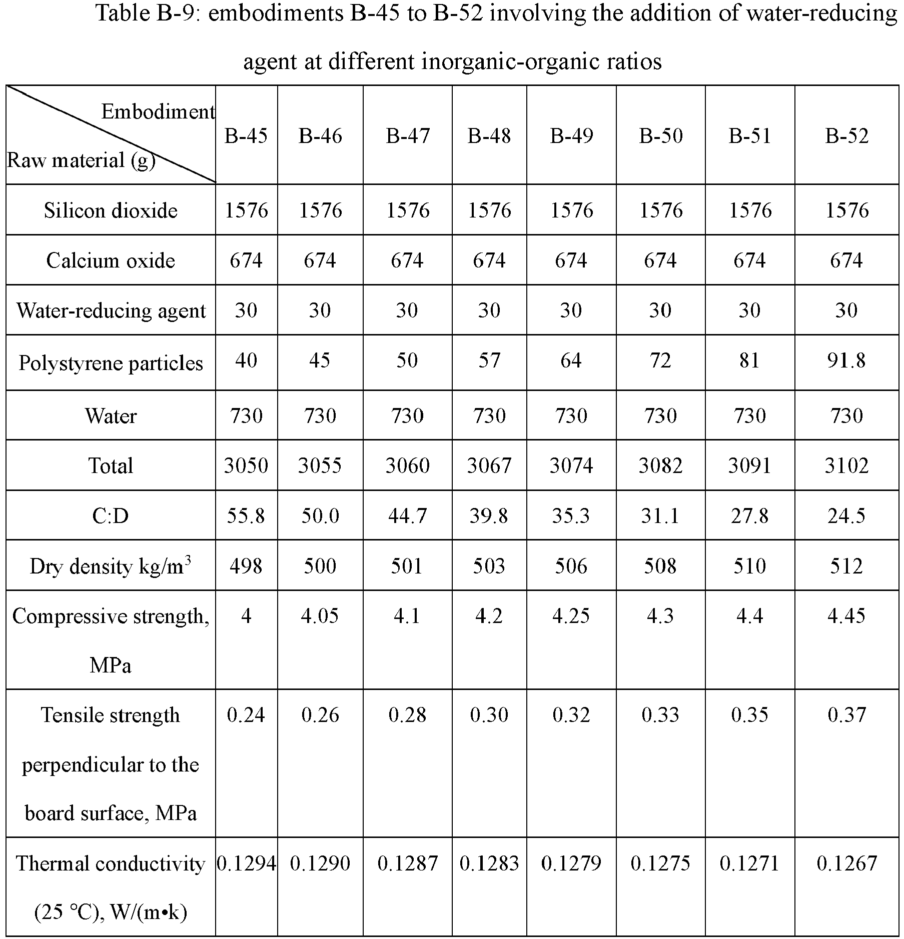

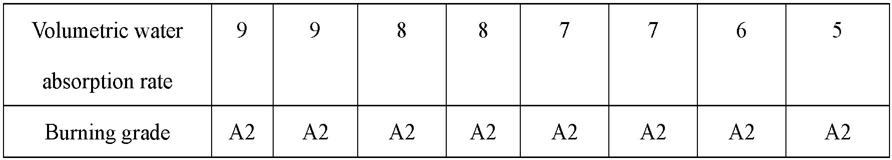

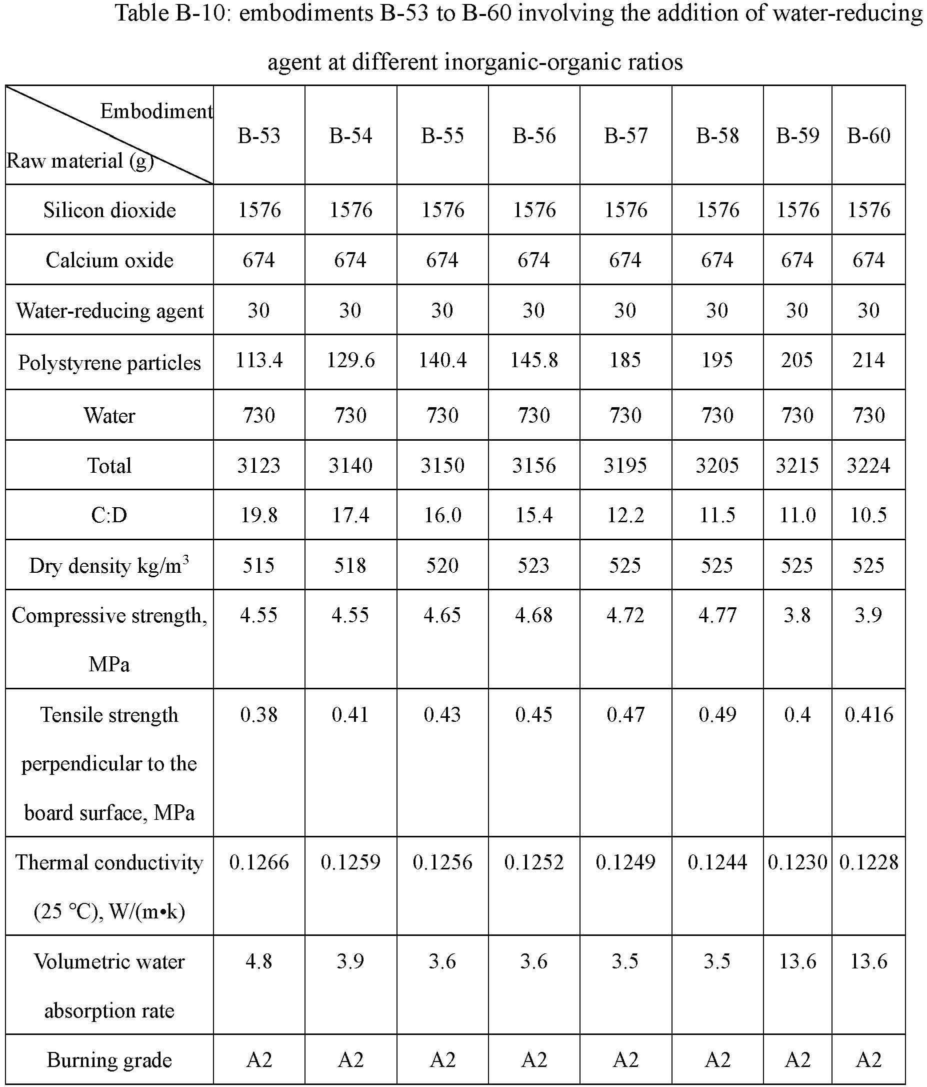

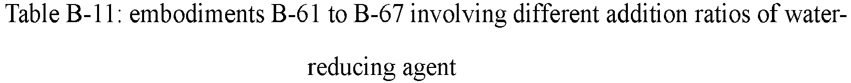

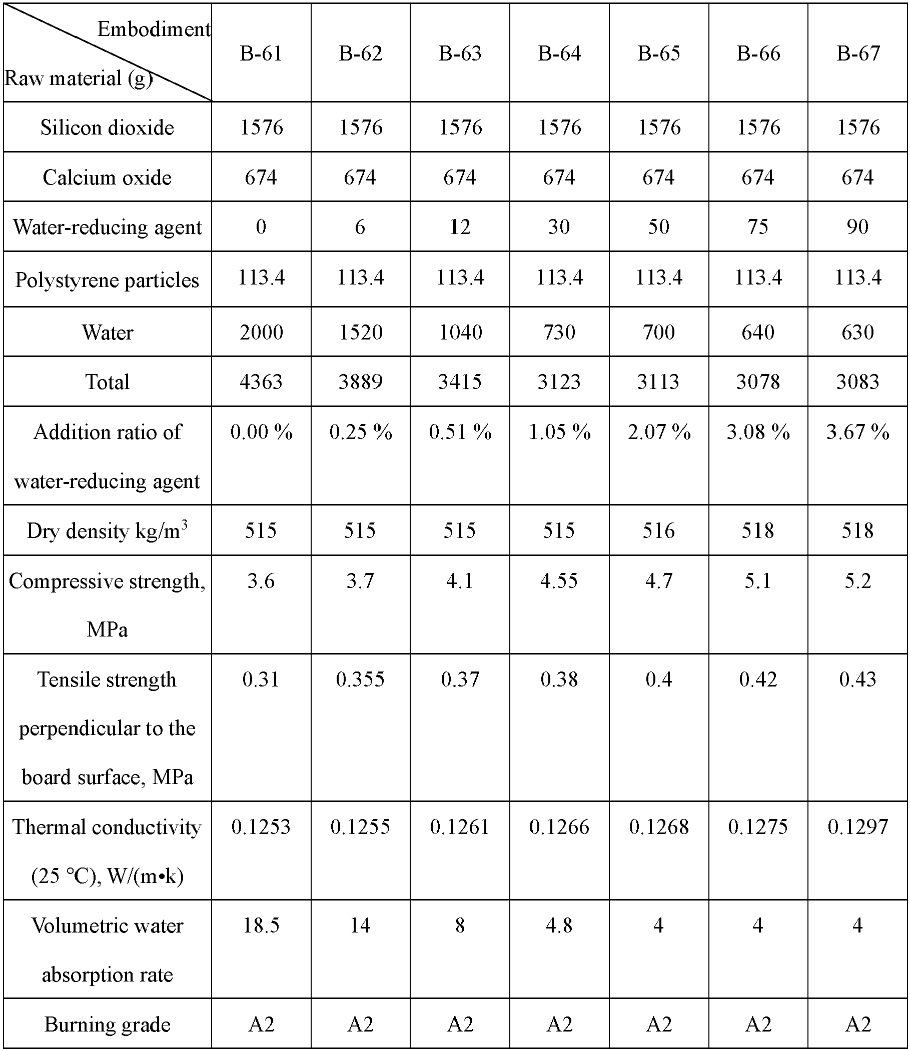

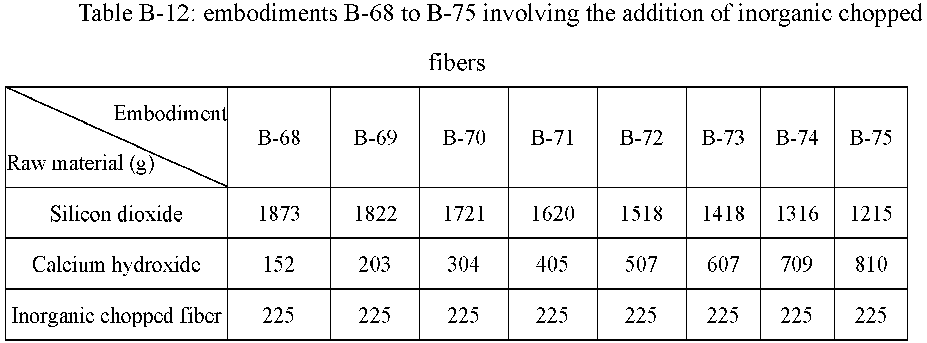

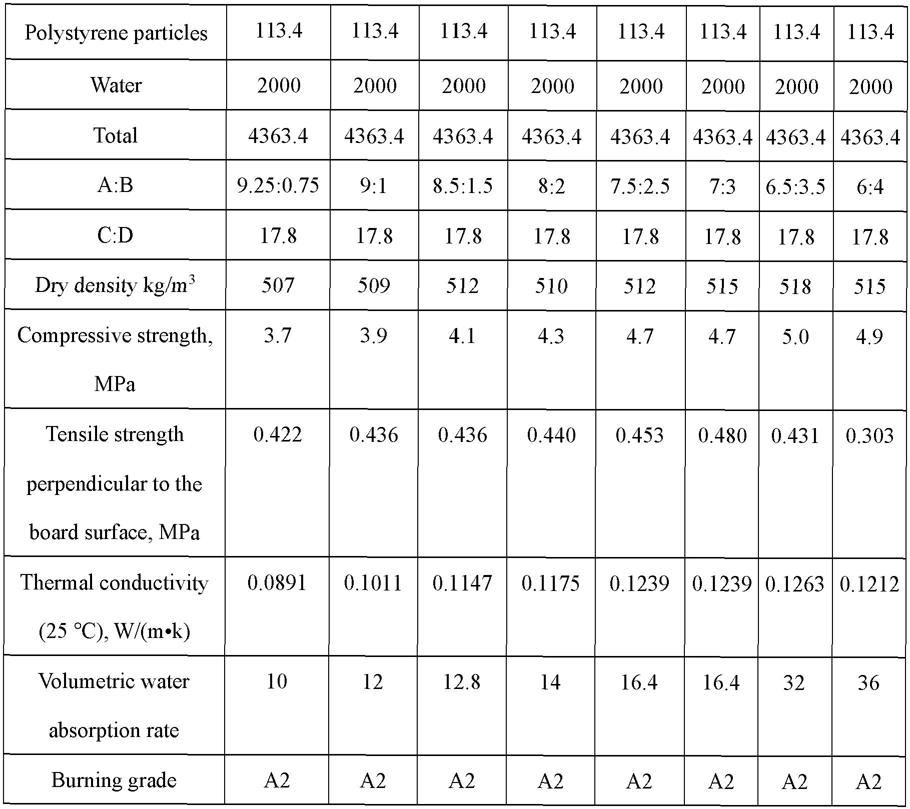

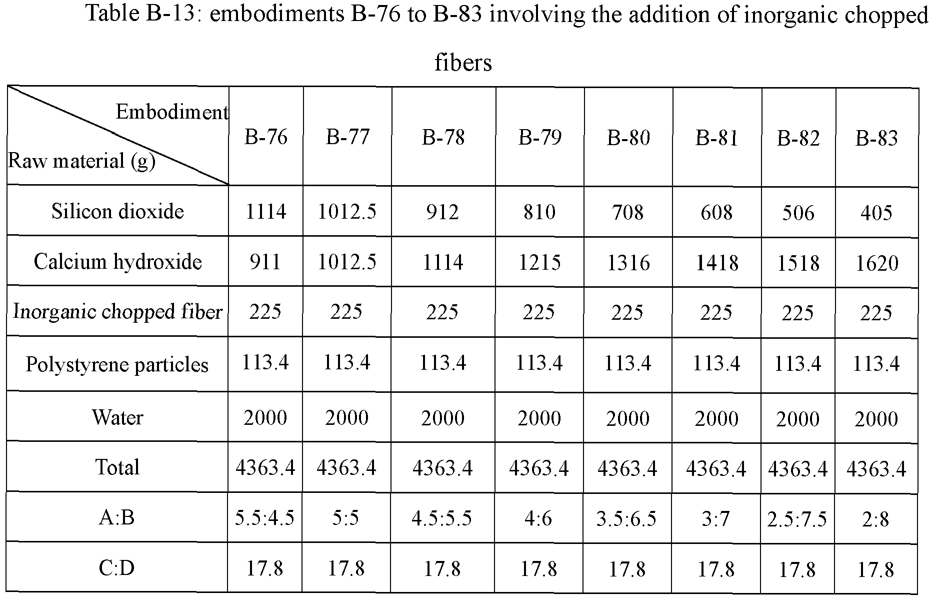

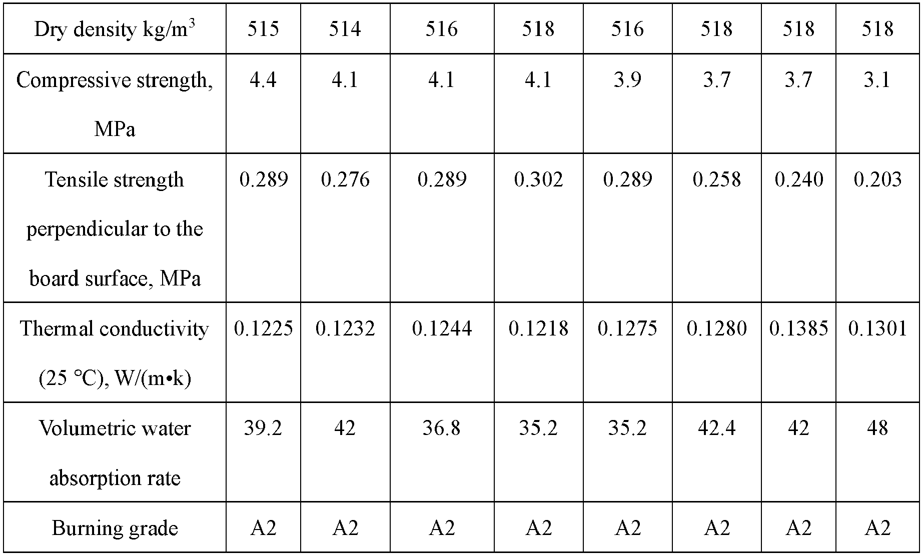

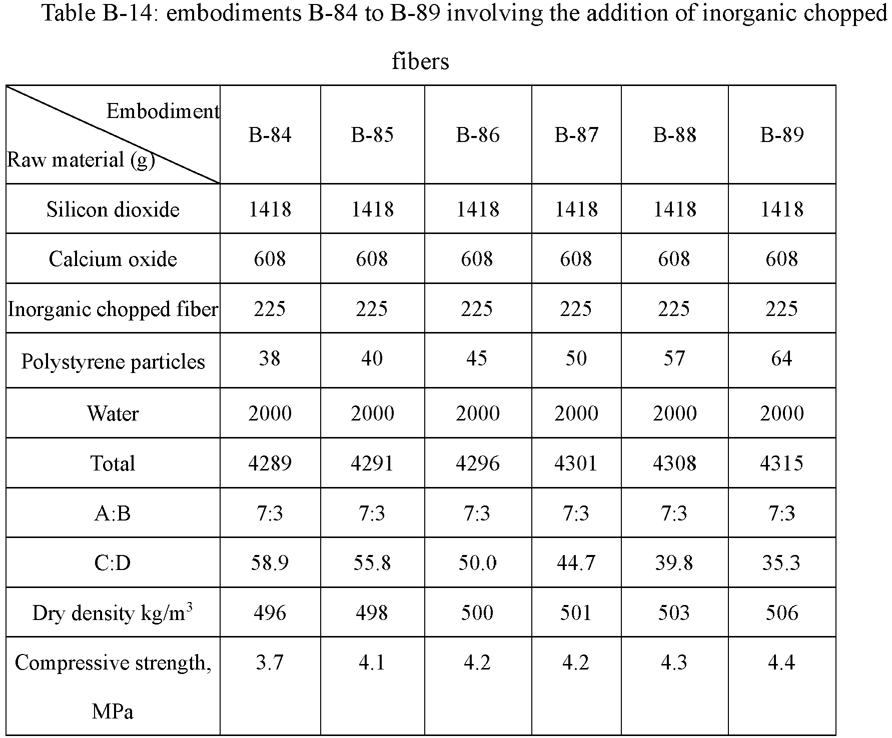

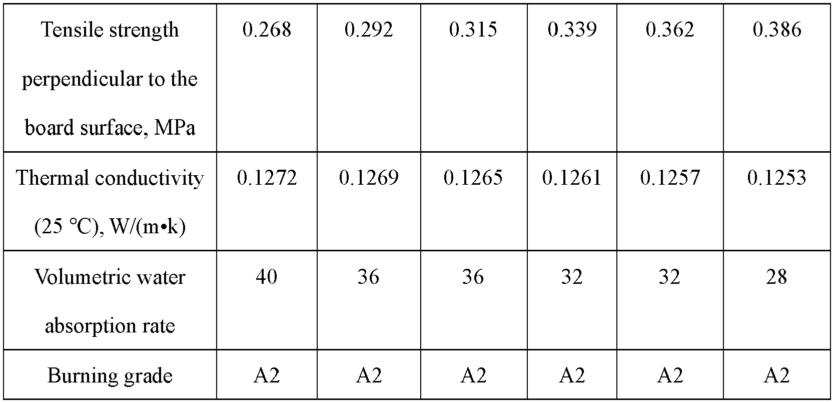

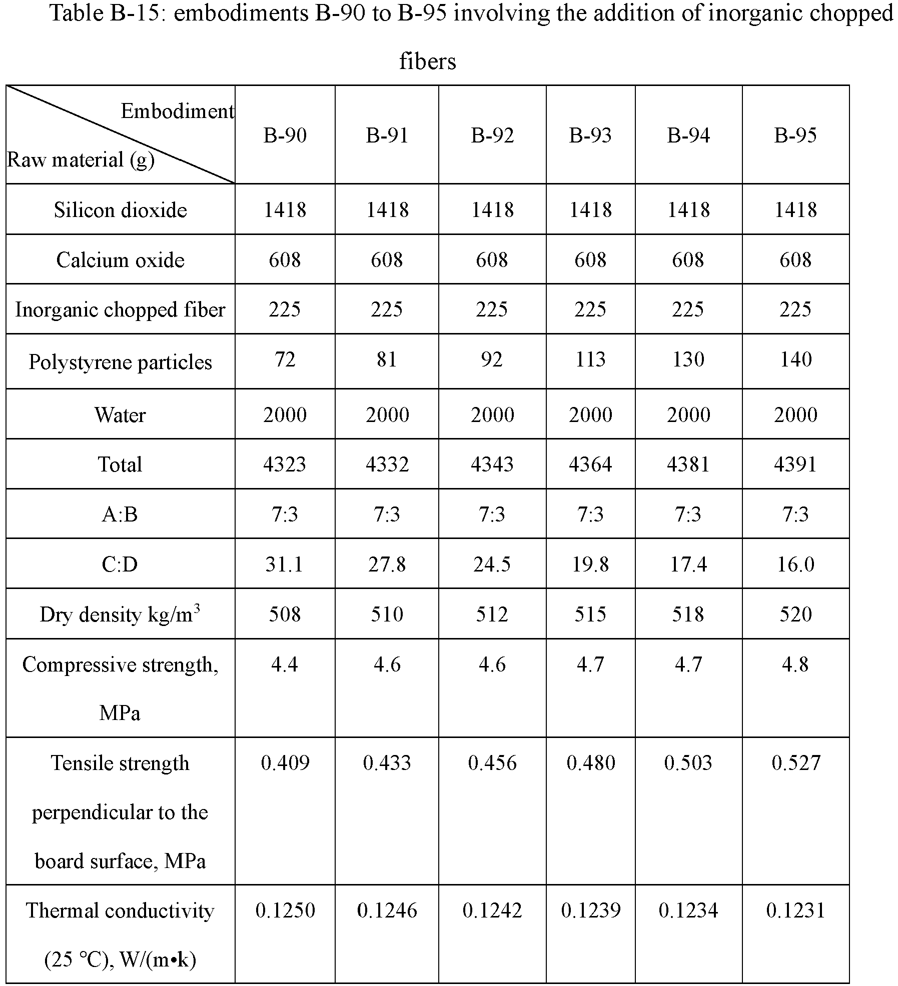

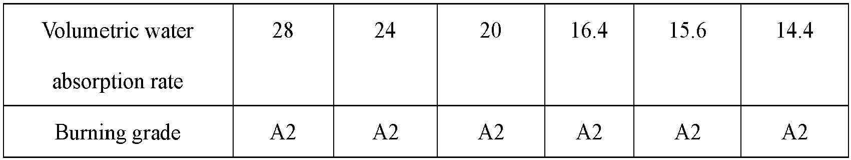

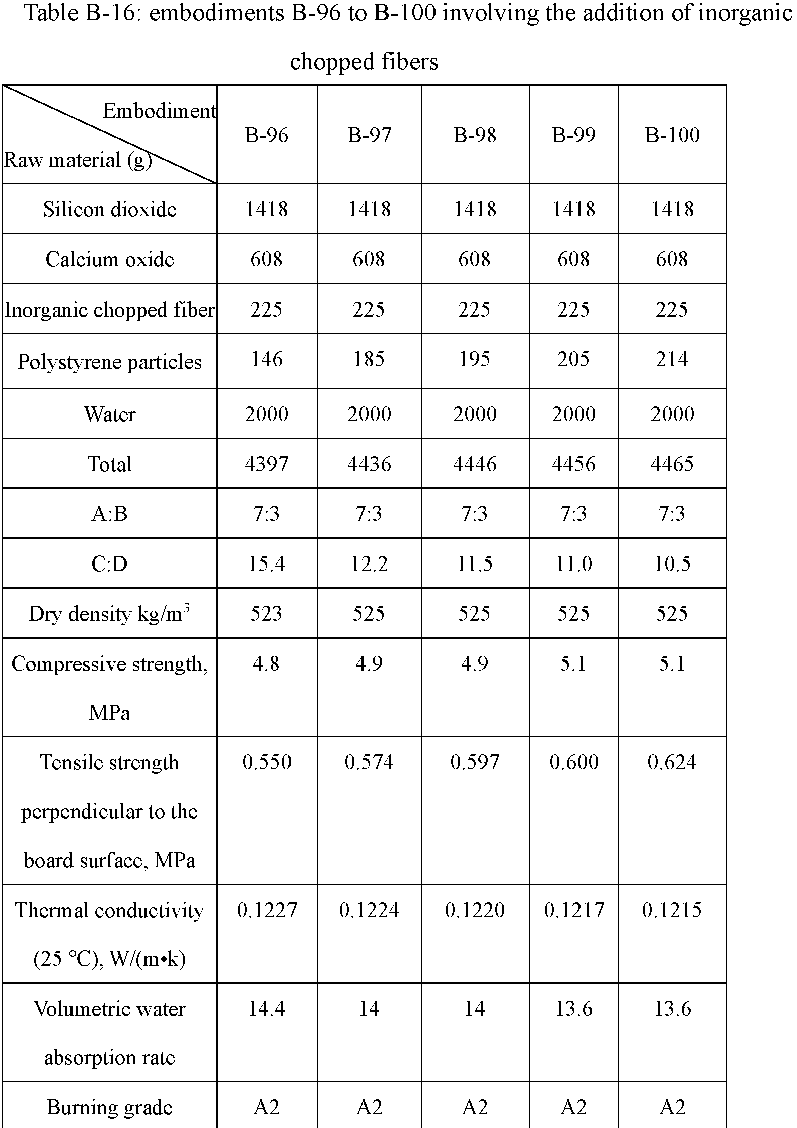

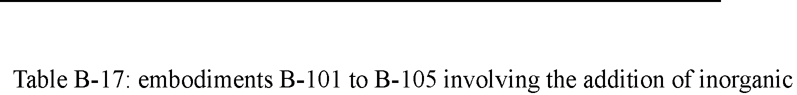

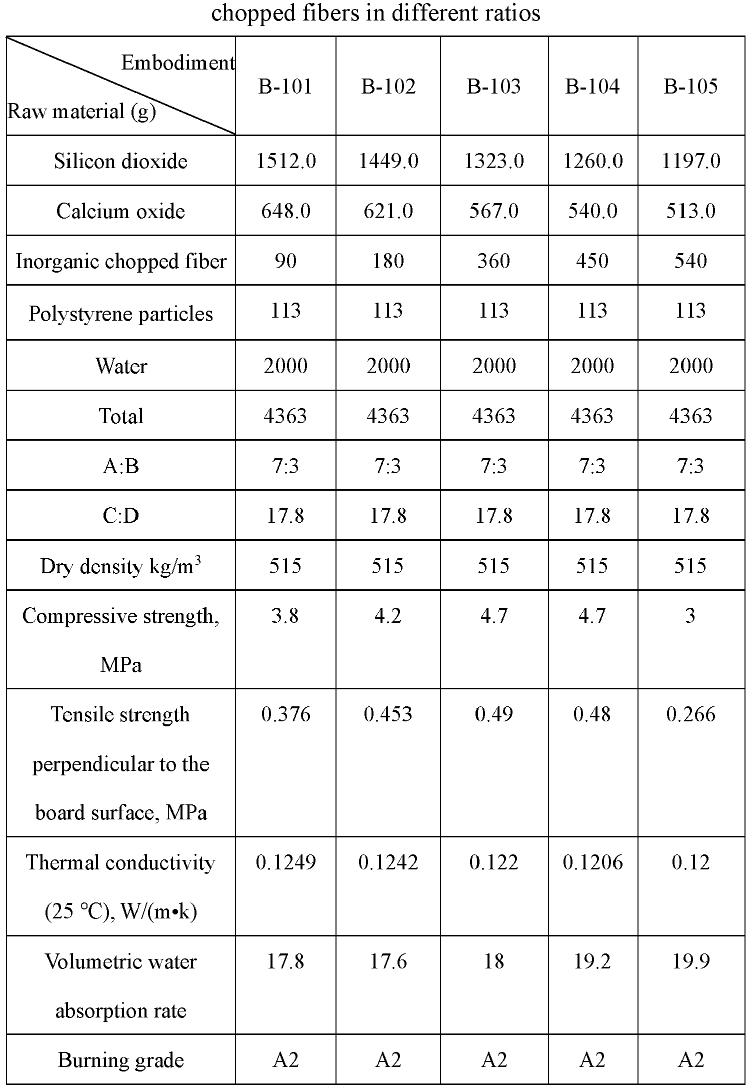

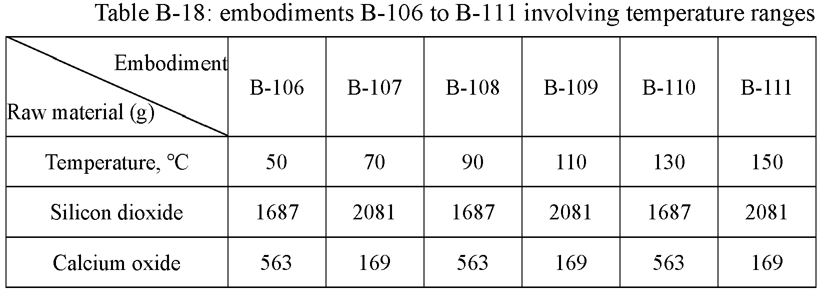

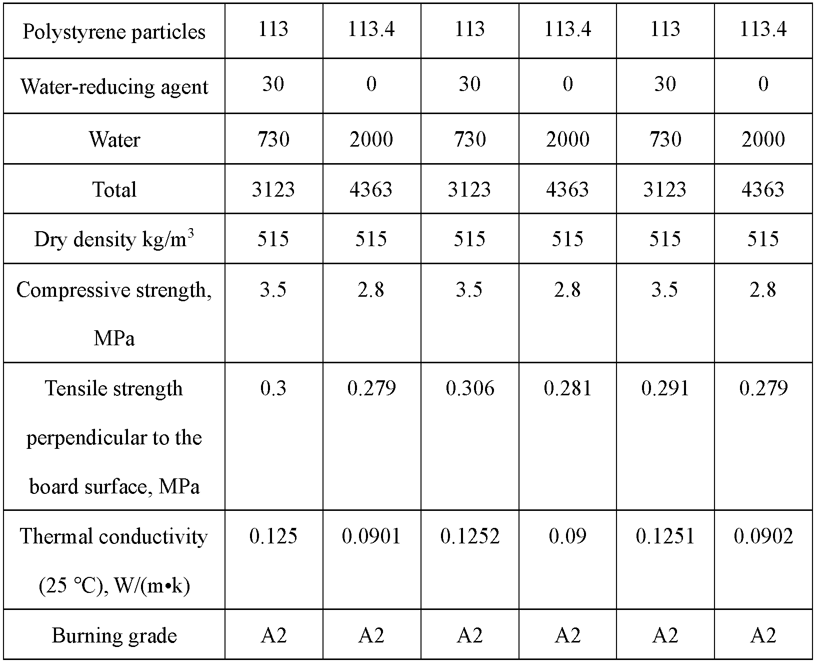

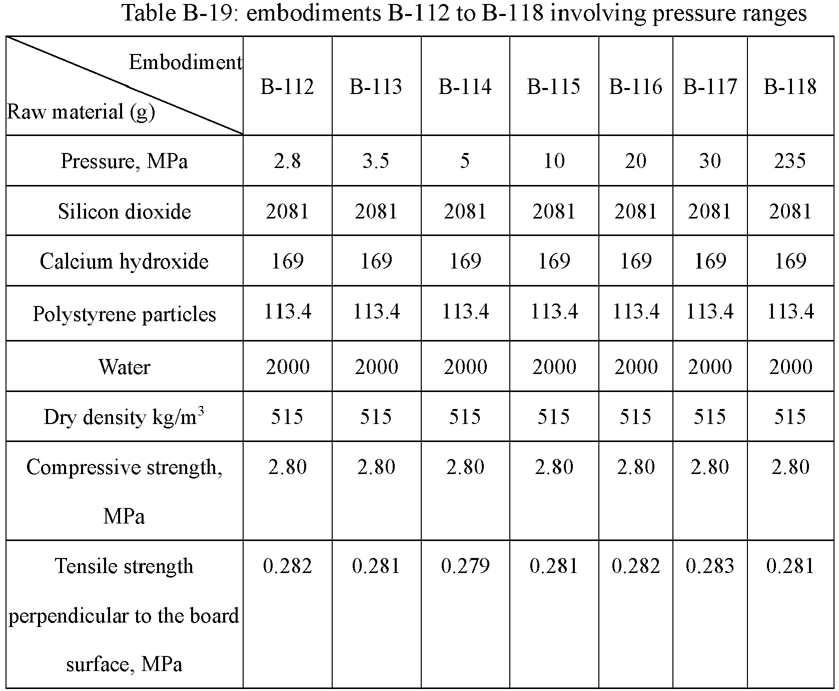

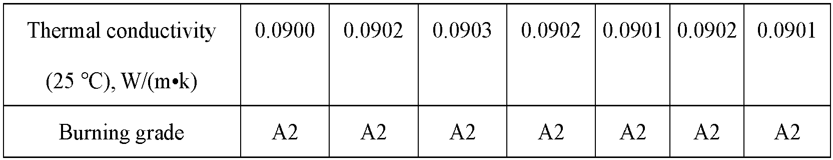

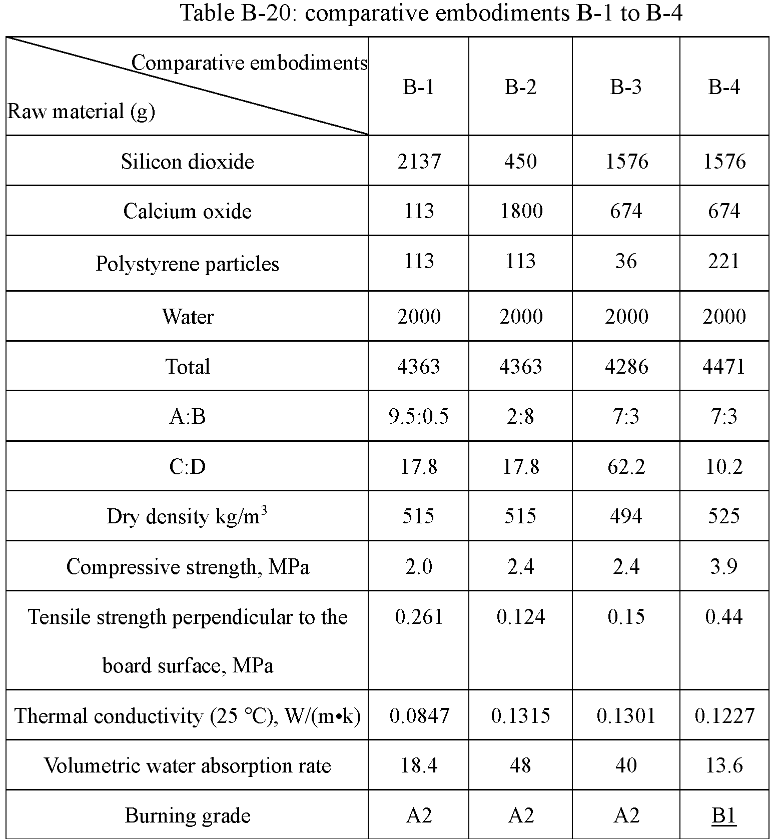

As can be seen from Table B-1, the weight ratio of the inorganic raw materials to the polystyrene particles was kept at 19.8, when the weight ratio of the siliceous substance to the calcareous substance was 0.33 to 12.33, the compressive strength could reach 2.8 MPa or more, the tensile strength could reach 0.160 MPa or more, and the thermal conductivity was 0.14 or less. In Table 2, when the weight ratio of the siliceous substance to the calcareous substance was 3.67 to 5.67, the compressive strength could reach 3.1 MPa or more, the tensile strength could reach 0.184 MPa or more, and the thermal conductivity was 0.126 or less. In Table 3, when the weight ratio of the siliceous substance to the calcareous substance was 1.5 to 3, the compressive strength could reach 3.5 MPa or more, the tensile strength could reach 0.202 MPa or more, and the thermal conductivity was 0.1275 or less.

As can be seen from Table B-4, the weight ratio of the siliceous substance to the calcareous substance was kept at 2.33, when the weight ratio of the inorganic raw materials to the polystyrene particles was 35.3 to 58.9, the compressive strength could reach 2.8 MPa or more, the tensile strength could reach 0.179 MPa or more, and the thermal conductivity could reach 0.1285 or less. In Table 5, when the weight ratio of the inorganic raw material to the polystyrene particles was 16 to 31.1, the compressive strength could reach 3.4 MPa or more, the tensile strength could reach 0.273 MPa or more, and the thermal conductivity could reach 0.1262 or less. In Table 6, when the weight ratio of the inorganic raw material to the polystyrene particles was 10.5 to 15.4, the compressive strength could reach 3.7 MPa or more, the tensile strength could reach 0.367 MPa or more, and the thermal conductivity could reach 0.124 or less.

In combination with Table B-1 to Table B-6, it can be seen that the present disclosure had great advantages in the volumetric water absorption rate of the final product, and the volumetric water absorption rates of embodiments 1 to 32 were basically kept between 10 % and 40 %, which were advantageous in the same type of products. In addition, under the condition that the dry density was less than 525 kg/m³, the compressive strength could reach 2.8 MPa or more, even 3.5 MPa or more.

As can be seen from Table B-7 and Table B-8, the weight ratio of the inorganic raw materials to the polystyrene particles was kept at 19.8, when the weight ratio of the siliceous substance to the calcareous substance was in the range of 0.54 to 9, a water-reducing agent of 1.3 % of the total weight of the materials was added, the compressive strength could reach 3.8 MPa or more, the tensile strength could reach 0.238 MPa or more, and the thermal conductivity could reach 0.127 or less. When the weight ratio of the siliceous substance to the calcareous substance was greater than 12.33, the compressive strength was less than 3.8 MPa, which did not meet the compressive requirements. When the weight ratio of the siliceous substance to the calcareous substance was less than 0.54, the compressive strength was also less than 3.8 MPa.

As can be seen from Table B-9 and Table B-10, the weight ratio of the siliceous substance to the calcareous substance was kept at 2.33, when the weight ratio of the inorganic raw materials to the polystyrene particles was 10.5 to 55.8, the water-reducing agent of 1.3 % of the total weight of the materials was added, the compressive strength could reach 3.8 MPa or more, the tensile strength could reach 0.24 MPa or more, and the thermal conductivity could reach 0.1294 or less. When the weight ratio of the inorganic raw materials to the polystyrene particles was 55.8 or more, the thermal conductivity was greater than 0.13, which did not meet the thermal insulation requirements.

The addition of water-reducing agent also brought another significant effect, that is, the volumetric water absorption rate of the product was greatly reduced. The vast majority of the embodiments in Table 7- Table 11 had a volumetric water absorption rate of less than 10 %, which was very low in this type of thermal insulation material. It can be seen from Table 11 that the addition of water-reducing agent within 4 % could effectively improve the tensile strength and compressive strength. When the addition of water-reducing agent higher than 4 %, the material was difficult to be shaped.

As can be seen from Table B-12 and Table B-13, the weight ratio of the inorganic raw materials to the polystyrene particles was kept at 17.8, when the weight ratio of the siliceous substance to the calcareous substance was in the range of 0.25 to 12.33, an inorganic chopped fiber of about 5 % of the total weight of the materials was added, the compressive strength could reach 3.1 MPa or more, the tensile strength could reach 0.203 MPa or more, and the thermal conductivity could reach 0.1385 or less. When the weight ratio of the siliceous substance to the calcareous substance was greater than 12.33, the material cannot be shaped.

As can be seen from Table B-14, Table B-15 and Table B-16, the weight ratio of the siliceous substance to the calcareous substance was kept at 7:3, when the weight ratio of the inorganic raw materials to the polystyrene particles was in the range of 10.5 to 58.9, the inorganic chopped fiber of about 5 % of the total weight of the materials was added, the compressive strength could reach 3.7 MPa or more, the tensile strength could reach 0.268 MPa or more, and the thermal conductivity could reach 0.1272 or less. When the weight ratio of the inorganic raw materials to the polystyrene particles was less than 10, the fire resistance performance of the final product was B1. When the weight ratio of the inorganic raw materials to the polystyrene particles was greater than 58.9, the material cannot be shaped.

As can be seen from Table B-17, the addition of different amounts of inorganic chopped fibers was helpful to improve the strength.

As can be seen from Table B-18, the temperature could be 50 to 150 °C. When the temperature was less than 50 °C, both the tensile strength and the compressive strength decreased sharply. When the temperature was higher than 150 °C, the aggregate was charred.

As can be seen from Table B-19, the pressure was 2.8 MPa or more, up to the limit strength of the steel mold of 235 MPa. When the pressure was less than 2.8 MPa, the compressive strength of the final product was less than 2.8 MPa, and when the pressure was greater than 235 MPa, the mold was crushed.

It can be seen from Table B-20 that when the weight ratio of the siliceous substance to the calcareous substance was greater than 12.33 or less than 0.33 without adding the water-reducing agent and the inorganic chopped fiber, the compressive strength was less than 2.5 MPa, thus the compressive strength was not up to standard. When the weight ratio of the inorganic raw materials to the polystyrene particles was greater than 58.9, the compressive strength was less than 2.5 MPa, so the compressive strength did not meet the standard. When the weight ratio of the inorganic raw materials to the polystyrene particles was less than 10.5, the fire resistance performance was B1, thus the fire resistance performance was not up to the standard.

### Preparation methods for a fire-resistant and thermal insulation material of embodiment C-1 to embodiment C-103 and comparative embodiment C-1 to comparative embodiment C-20 are as follows:

Firstly, by heating, the expanded volume of expandable polystyrene particles was increased to obtain pre-foamed expandable polystyrene particles. By setting a steam pressure, the density of the pre-foamed polystyrene particles changed correspondingly, so as to meet the required density requirements, so that the density of the pre-foamed expandable polystyrene particles reached 4 to 25 g/L.

Then, water, a siliceous substance, a calcareous substance (calcium oxide or calcium hydroxide), as well as a fiber cotton and a water-reducing agent that might be used were mixed and stirred uniformly at room temperature, so that all of them were mixed uniformly to be a pre-mixed cementitious material.

Then, the pre-foamed expandable polystyrene particles were added into a mixing tank, and after the mixer was started, the pre-mixed cementitious material was put into the mixer for mixing and stirring, which was fully and uniformly mixed to obtain a mixture of all the raw materials.

Then the stirred mixture (containing pre-foamed expandable polystyrene particles) was input into a mold, the vertical height of the mold might be adjusted under pressure until it reached a set height. As the material might shrink in a certain ratio after heating and pressurizing, it was found after many tests that, taking a product thickness of 5 cm as an example, the height of a level-sensing device needed to be adjusted to 6 to 9 cm, and the shrinkage ratio was 10 to 45 %. The pressure applied to the mold was kept at 0.28 to 0.55 MPa, so that the density of the raw material composition reached 230 kg/m³ or less.

Before the mold entered a pressing platform, the temperature of an oil heater was set between 50 to 150 °C to preheat the pressing platform. When the temperature reached the set value, the mold was pushed in, pressurized and heated to shape and then allowed to cool naturally to exit the mold. In the process of heating and pressurizing, the expandable polystyrene particles were heated in the mold for re-foaming, which further improved the compactness and the tensile strength.

Finally, the product taken from the mold was maintained.

The temperature of the oil heater involved in Table 3-1 to Table 3-10 below was 130 °C, and the pressure applied to the mold was 0.55 MPa;
the mass units of raw materials in Table 3-1 to Table 3-12 below are all g.

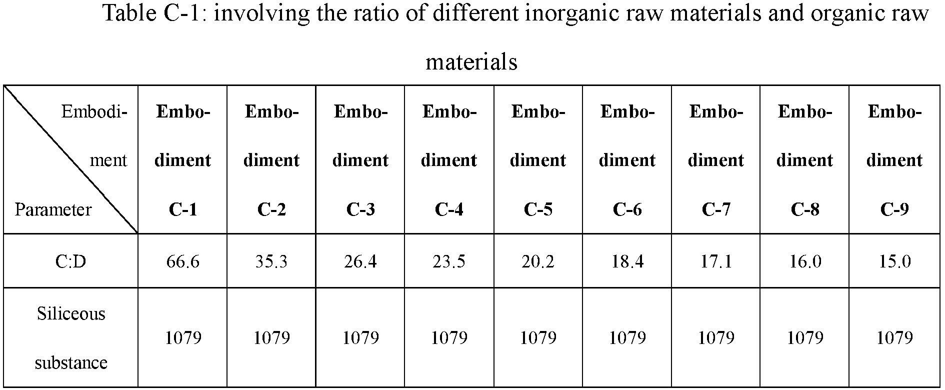

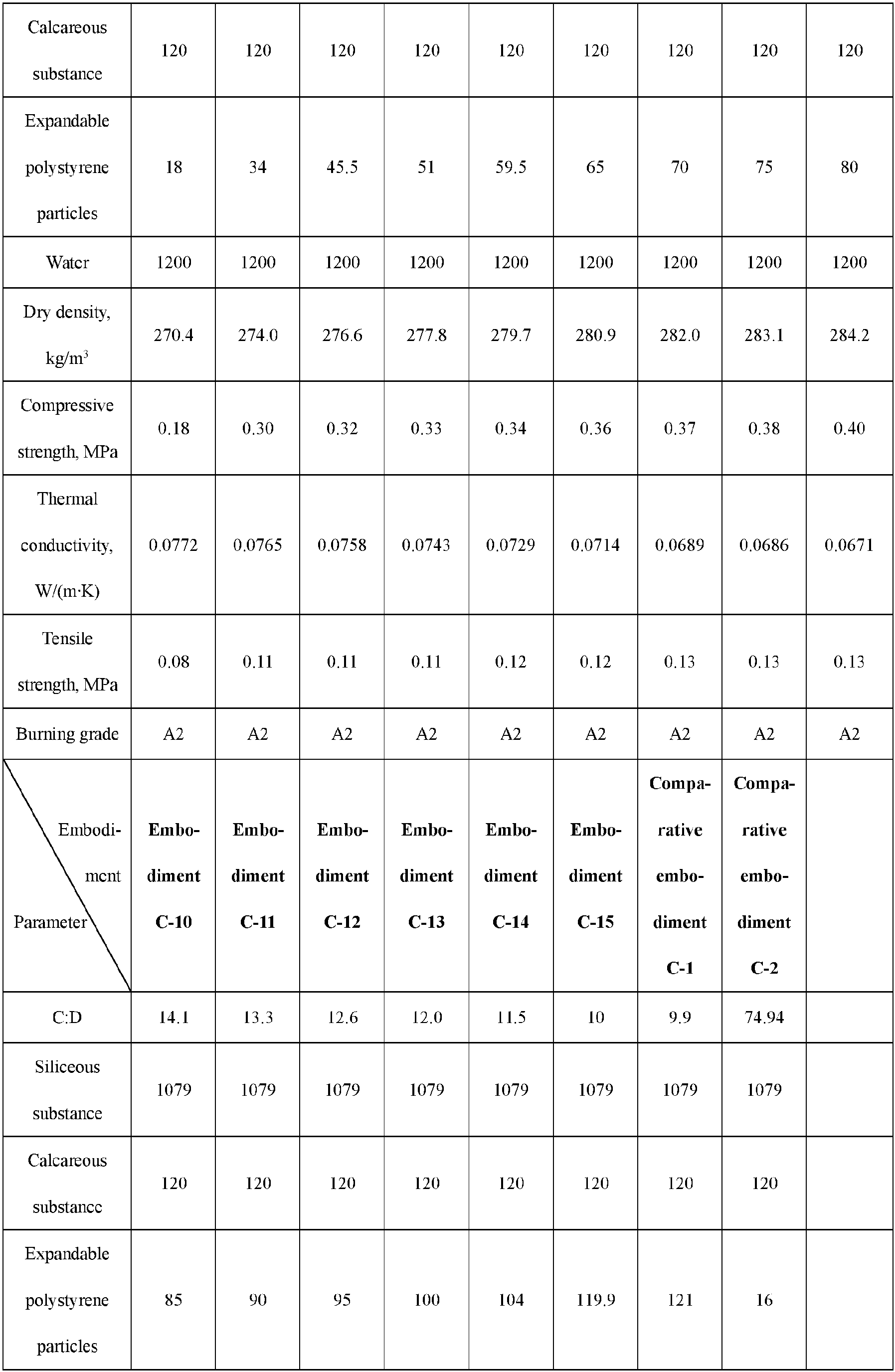

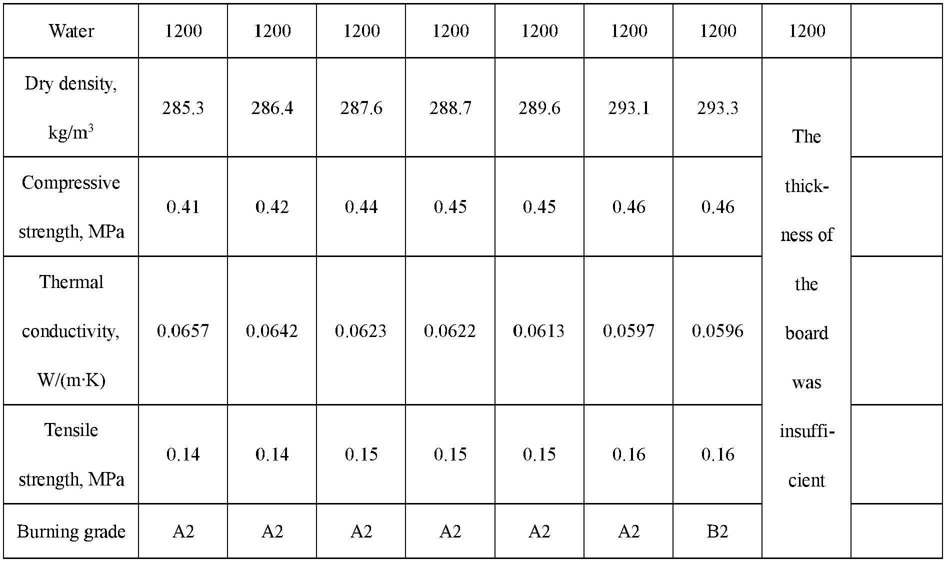

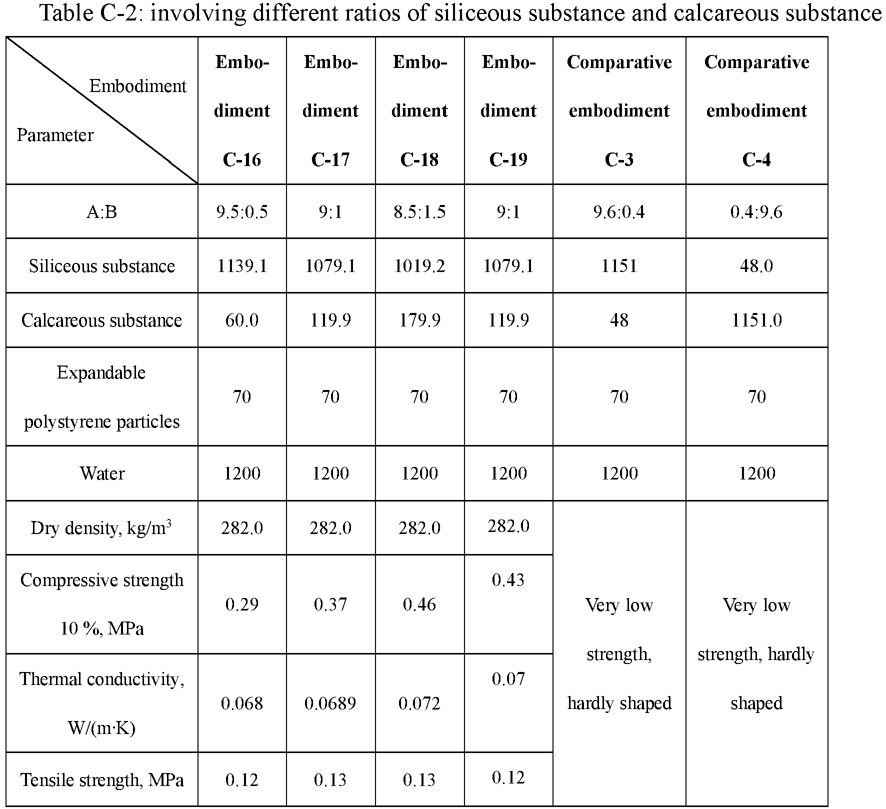

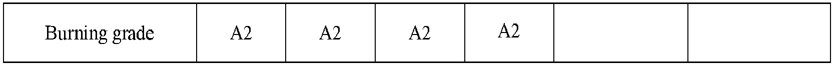

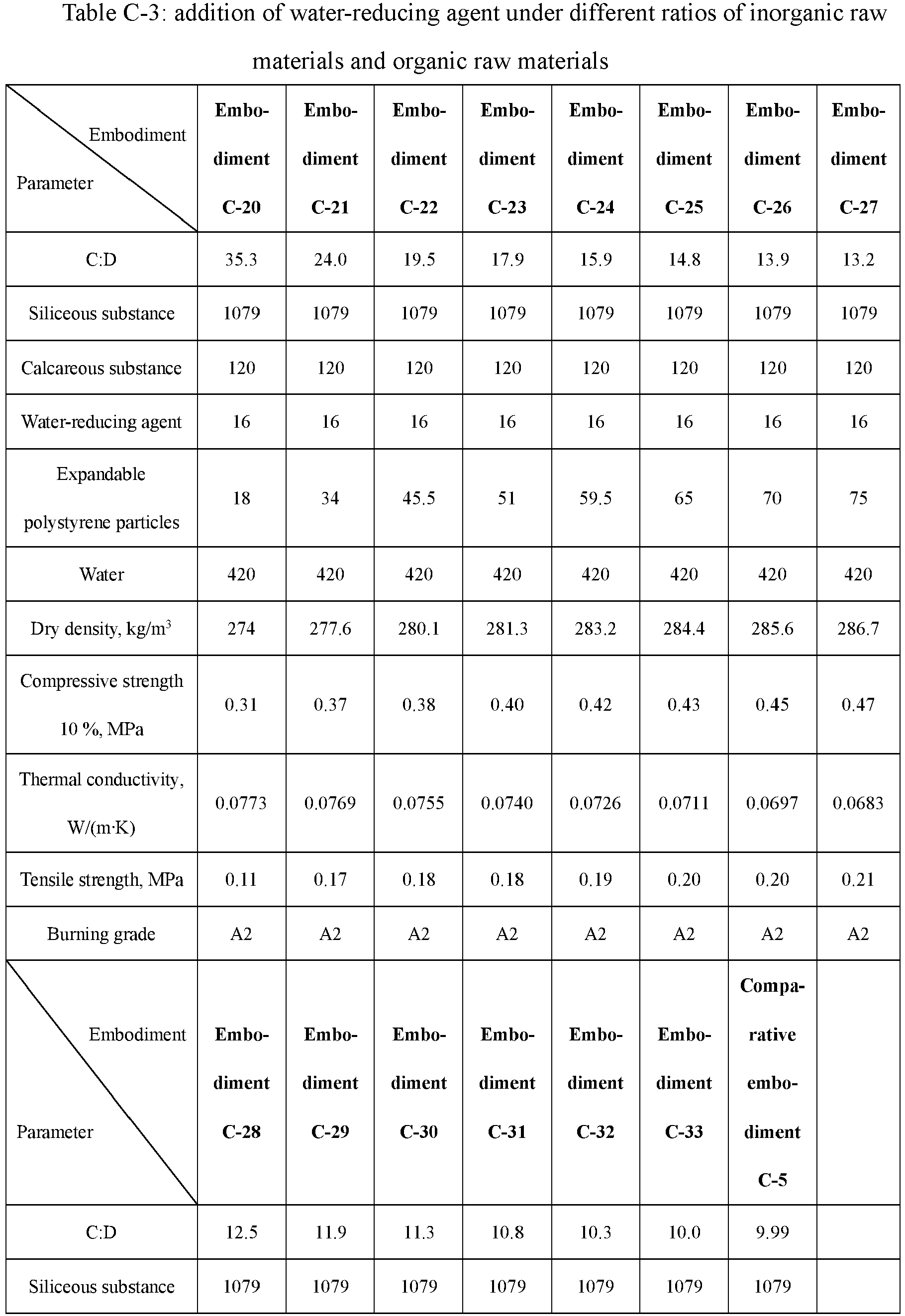

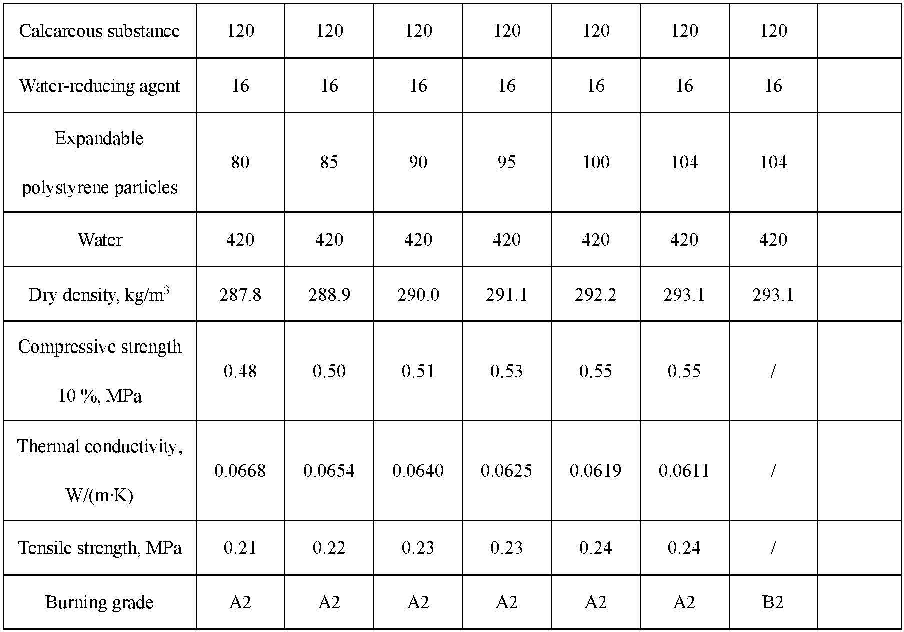

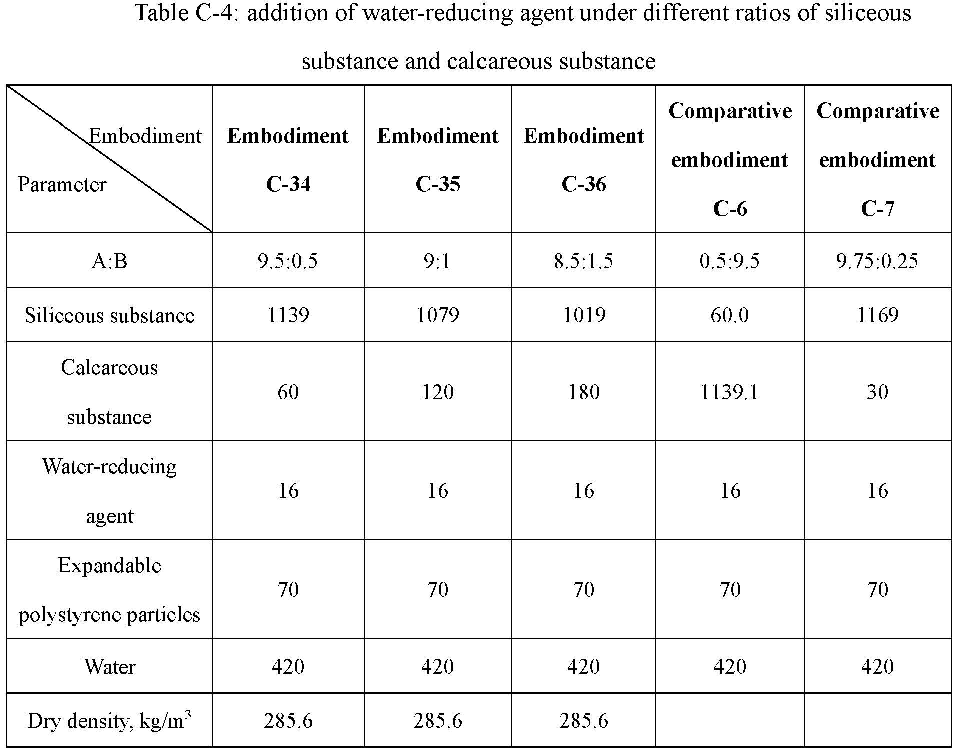

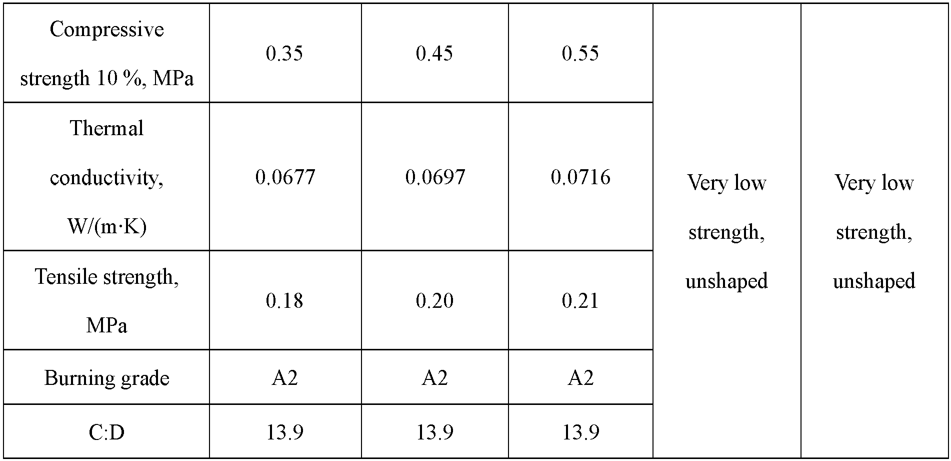

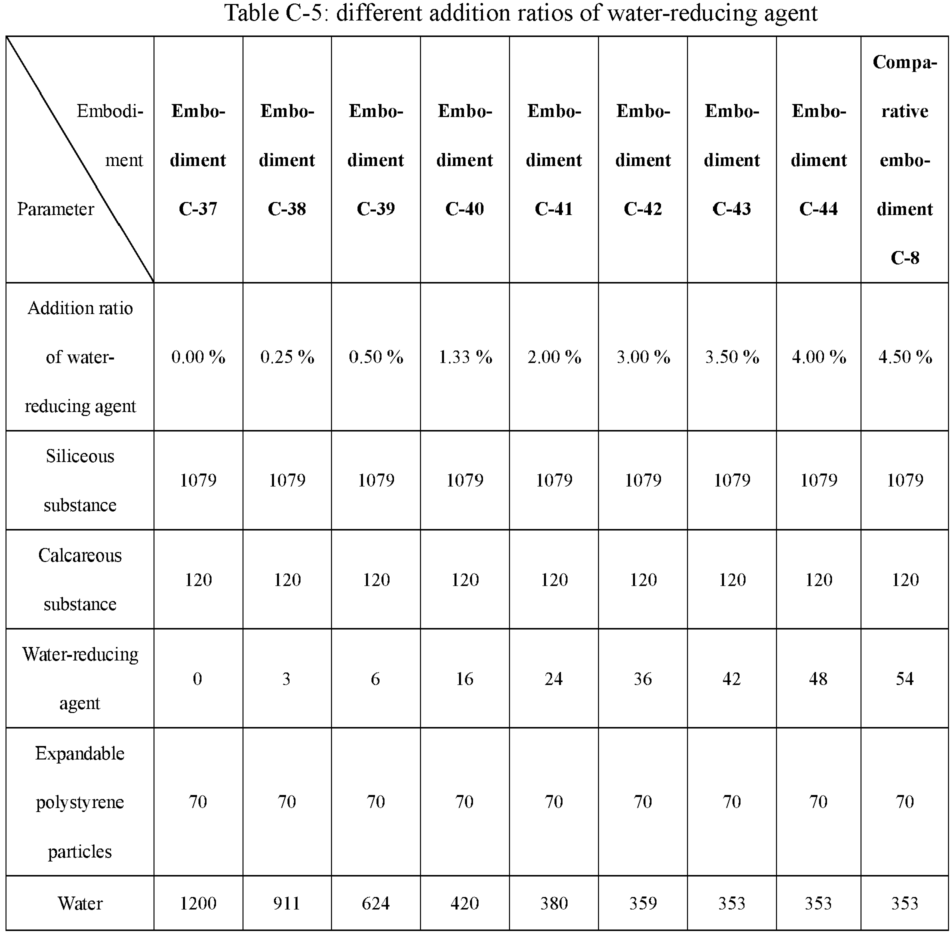

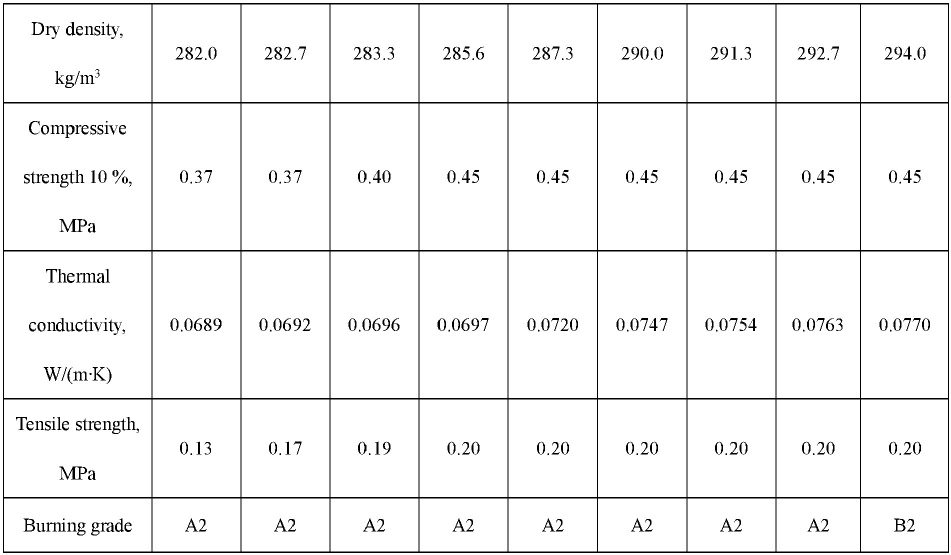

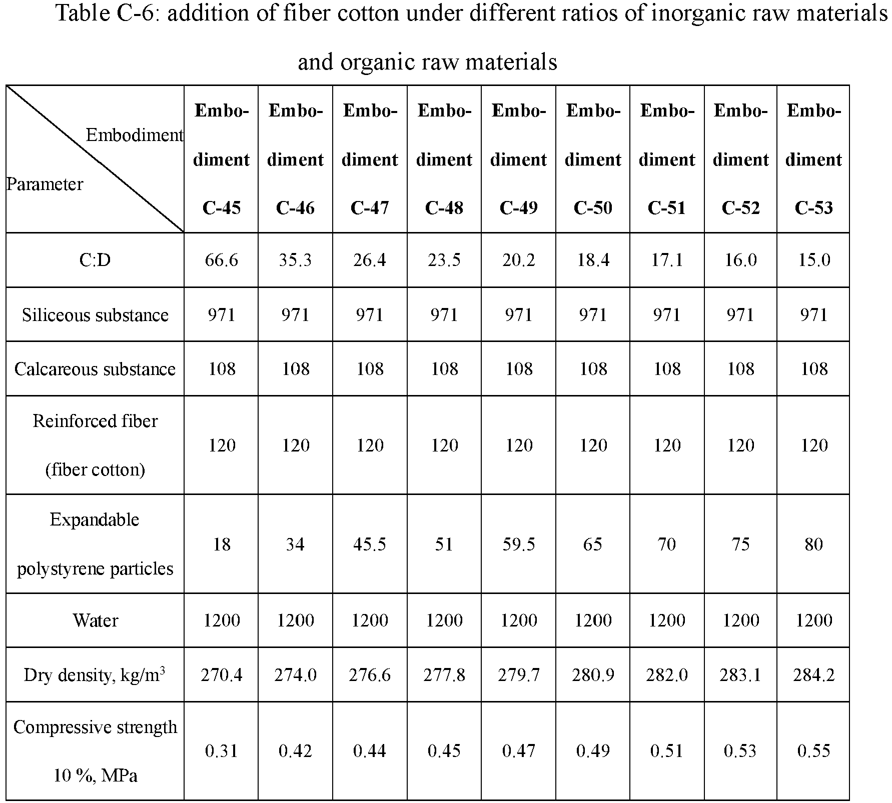

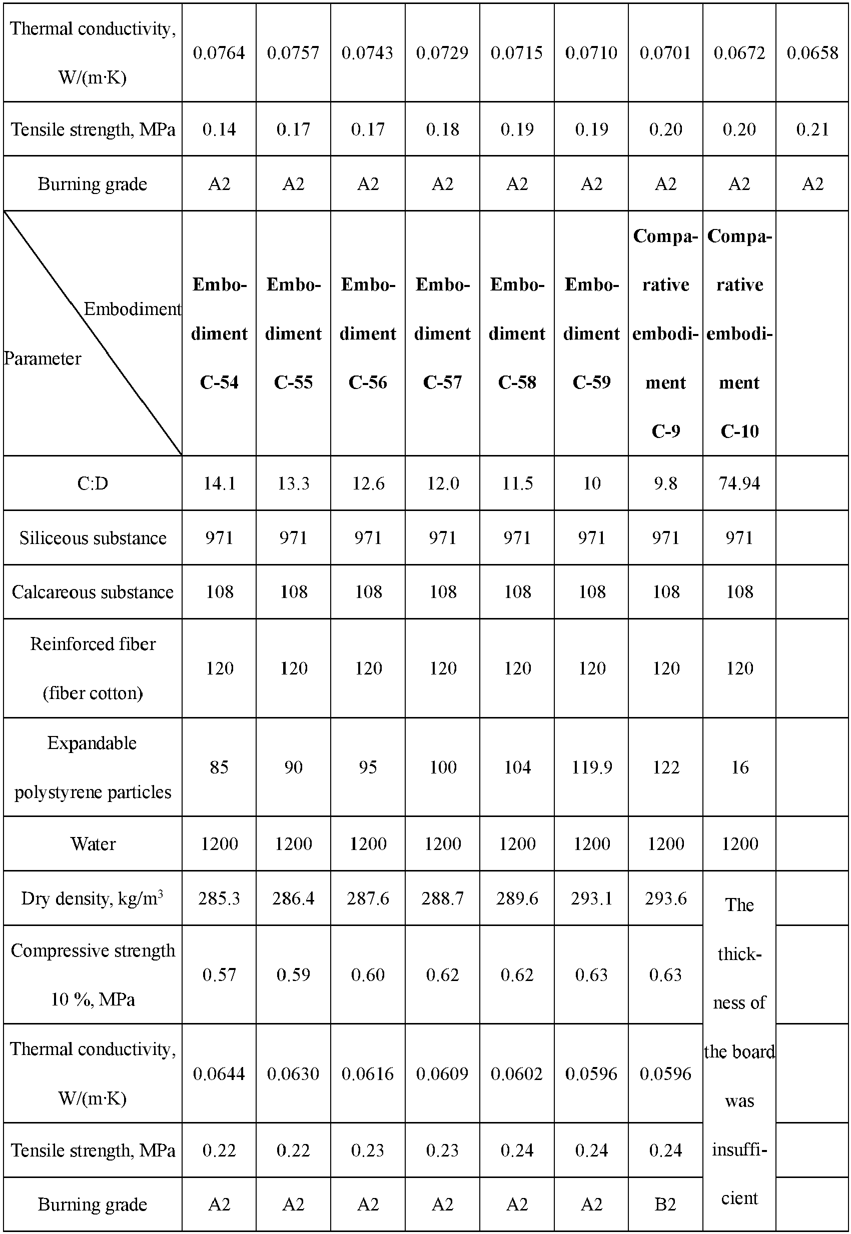

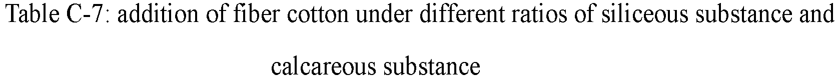

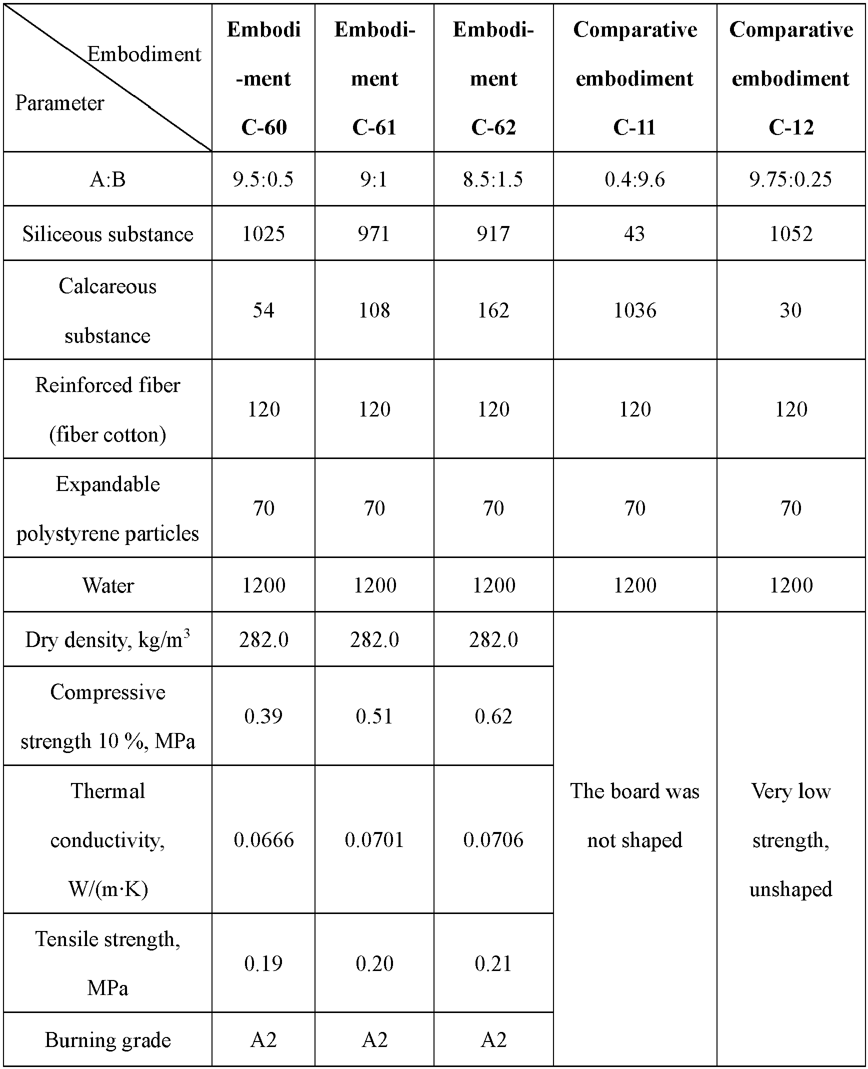

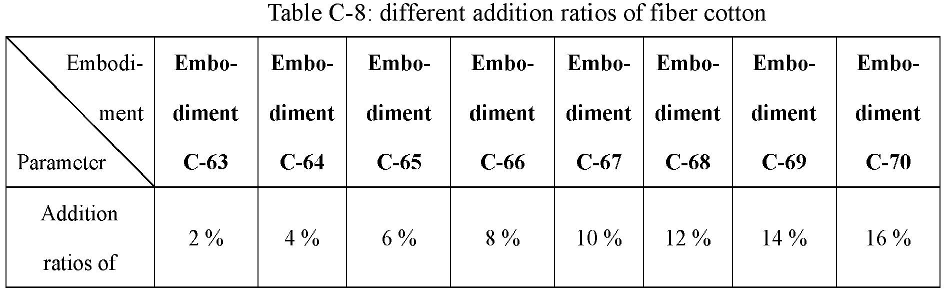

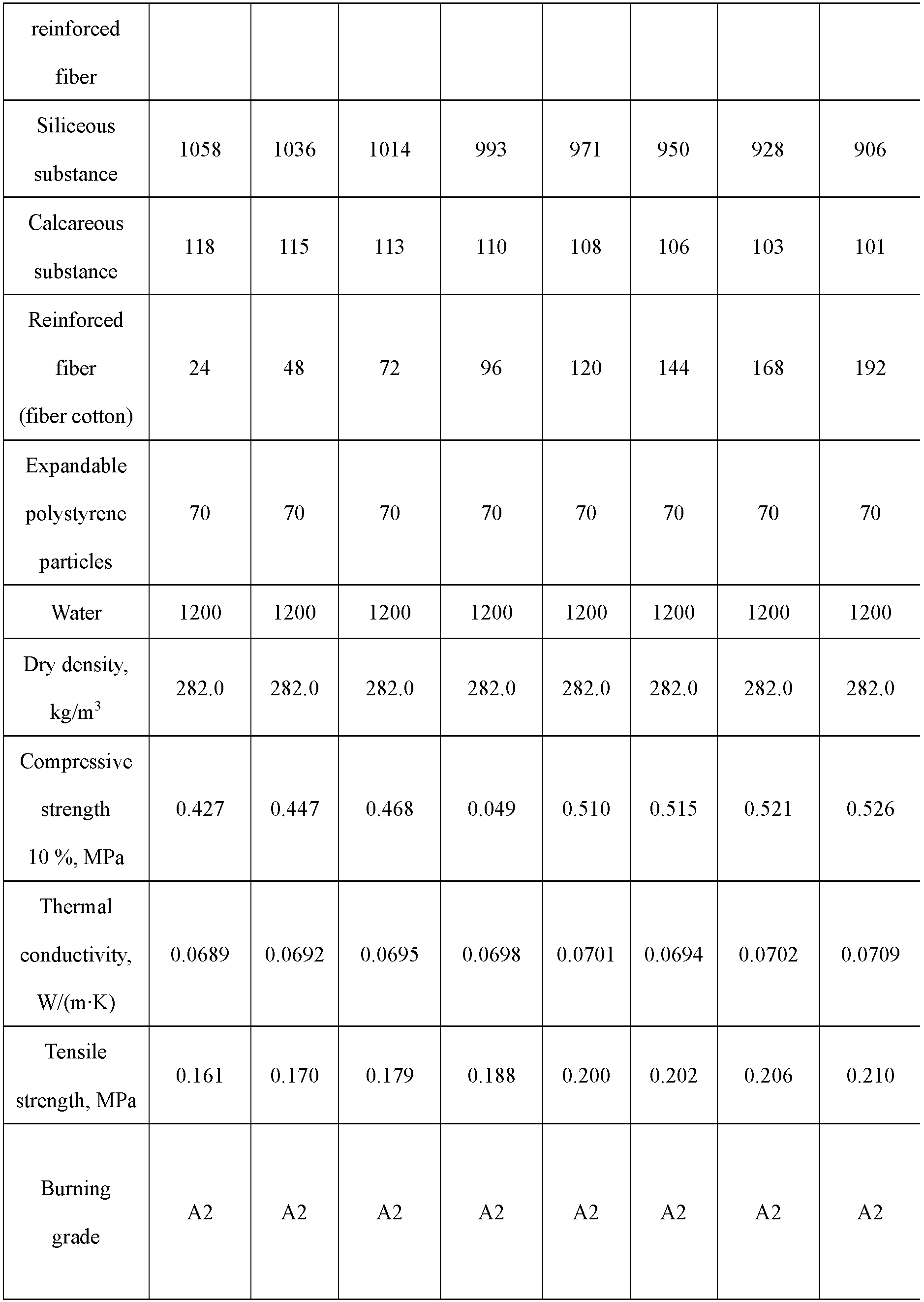

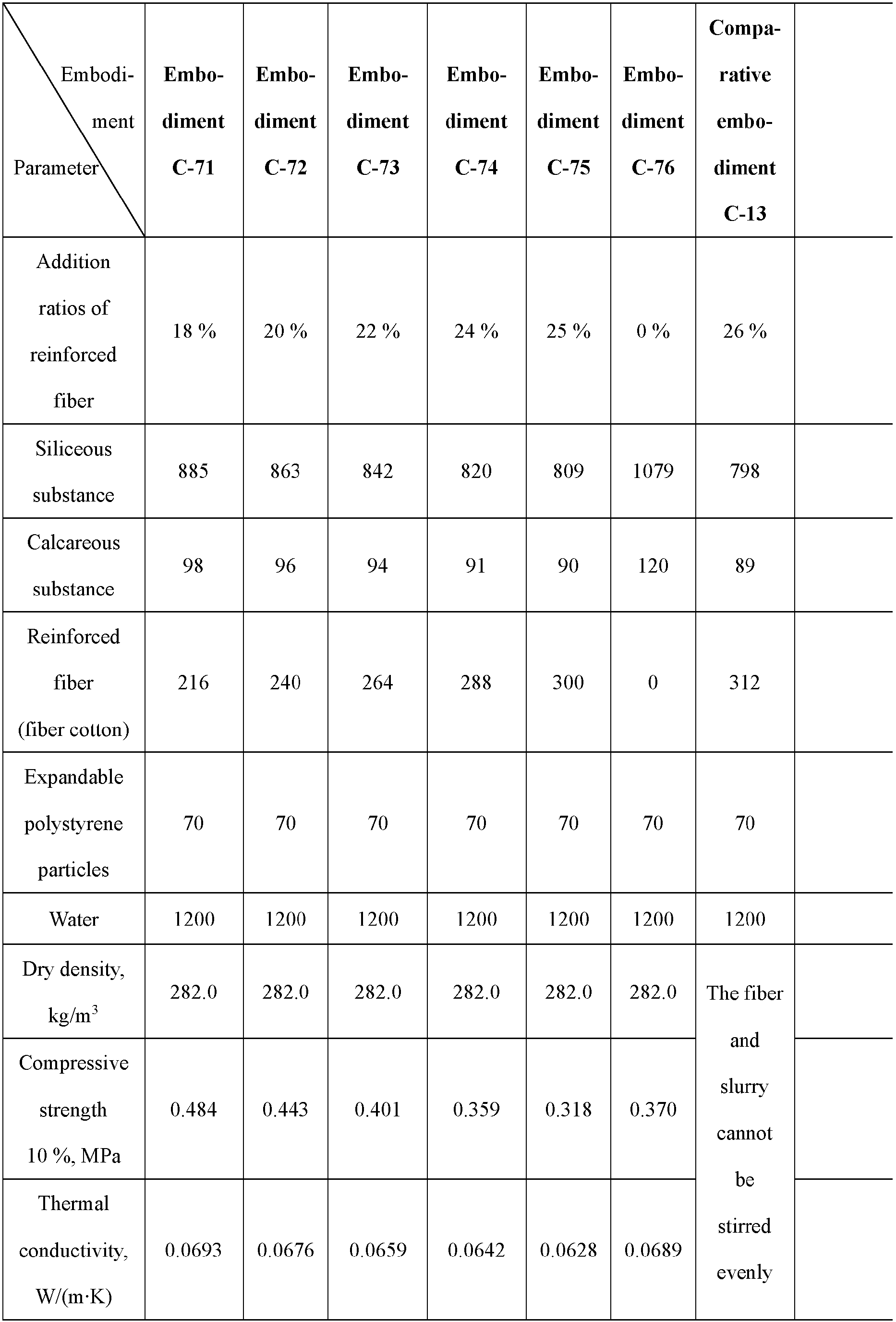

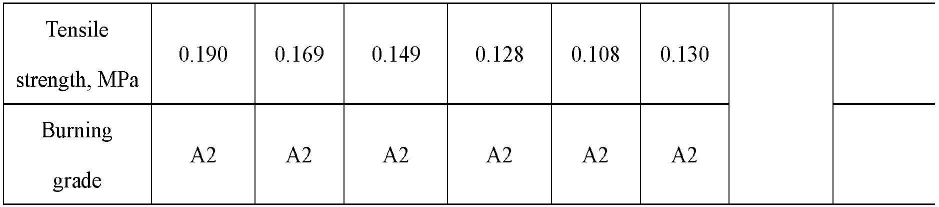

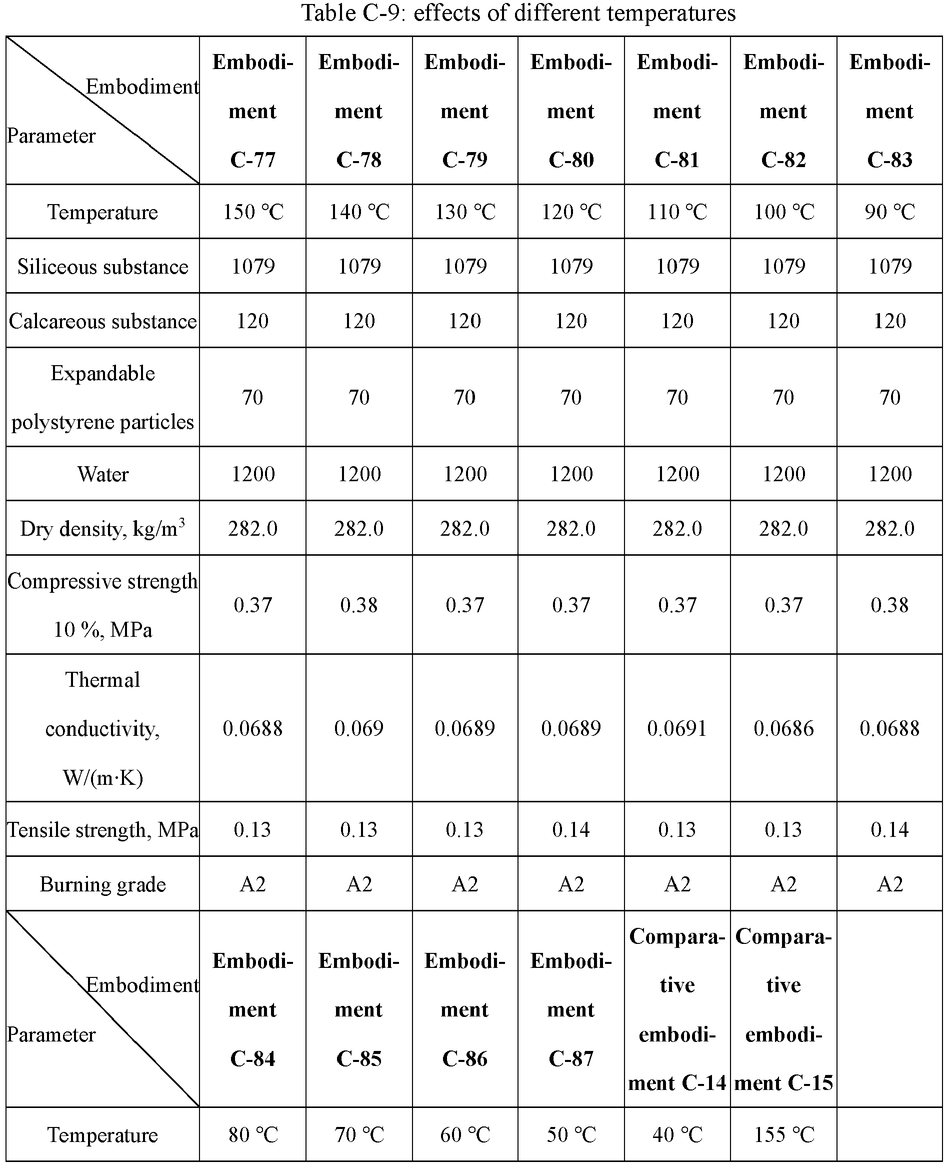

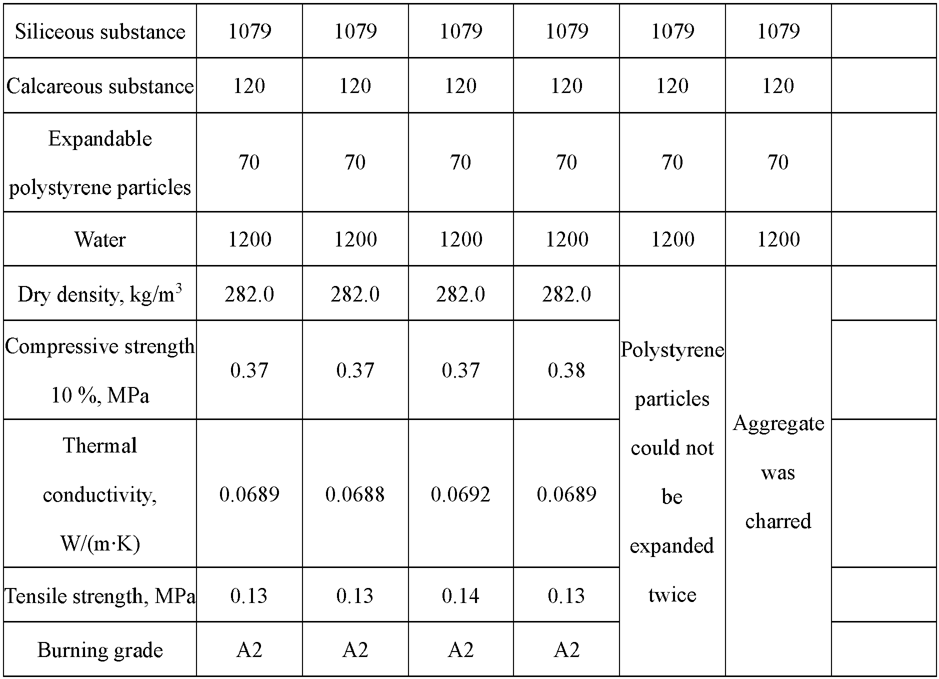

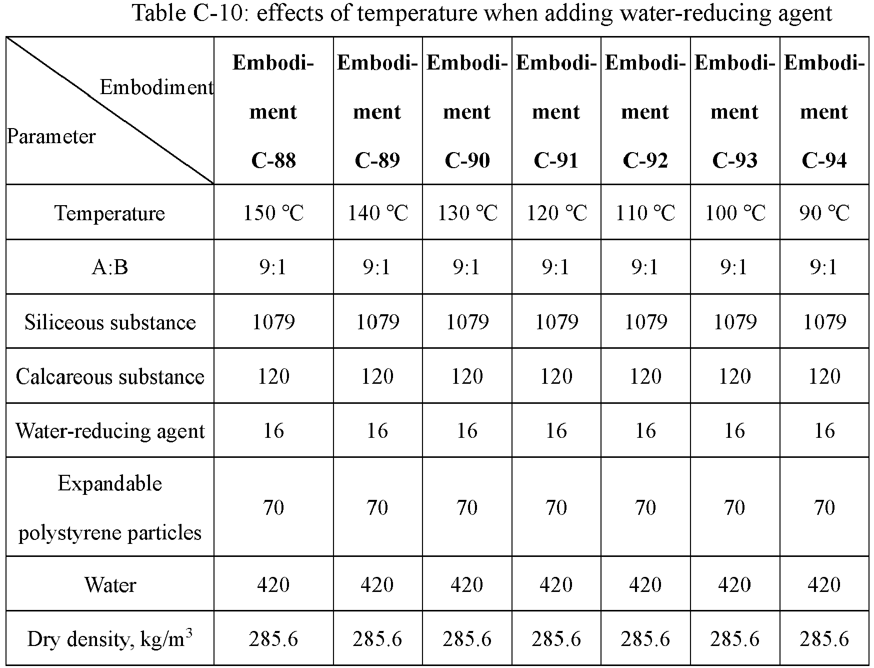

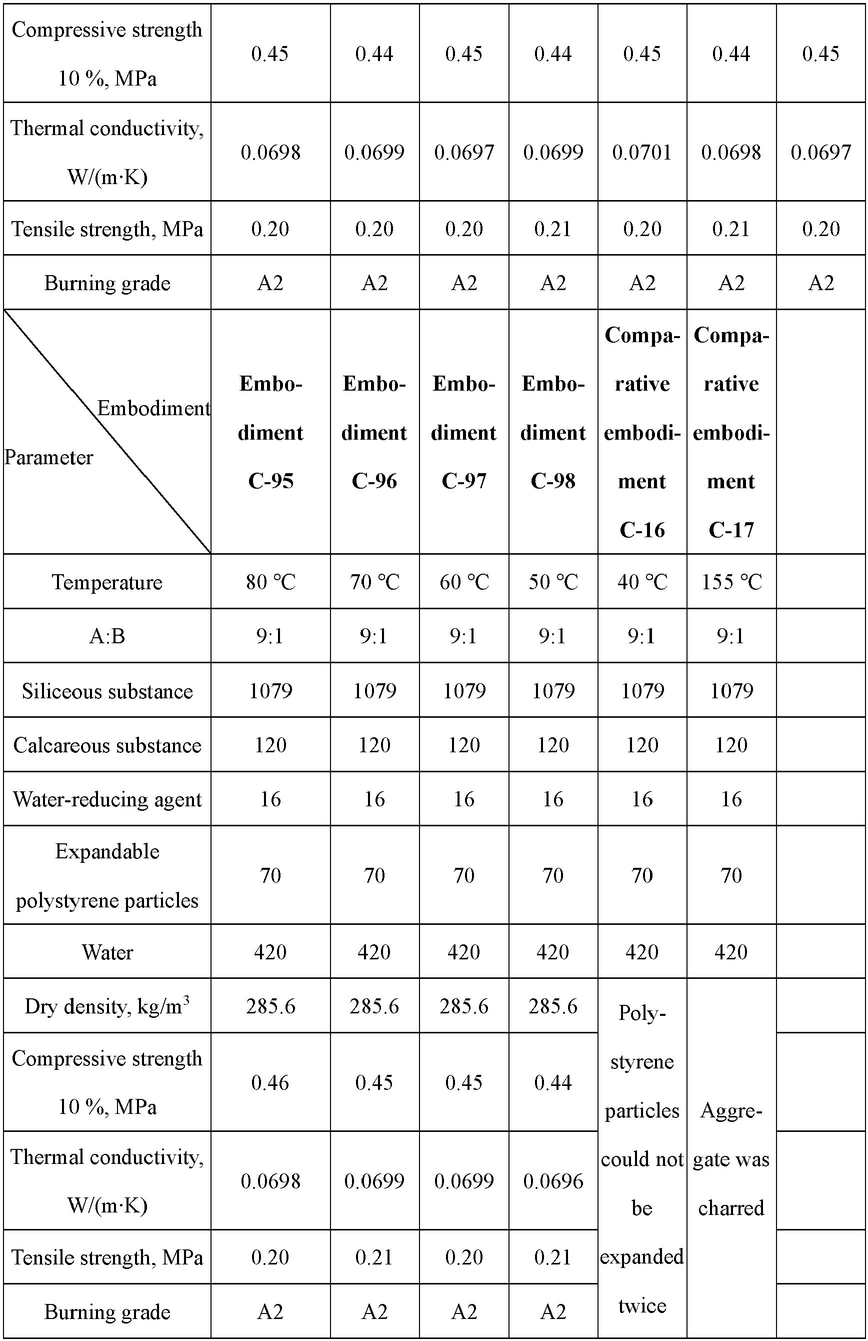

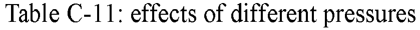

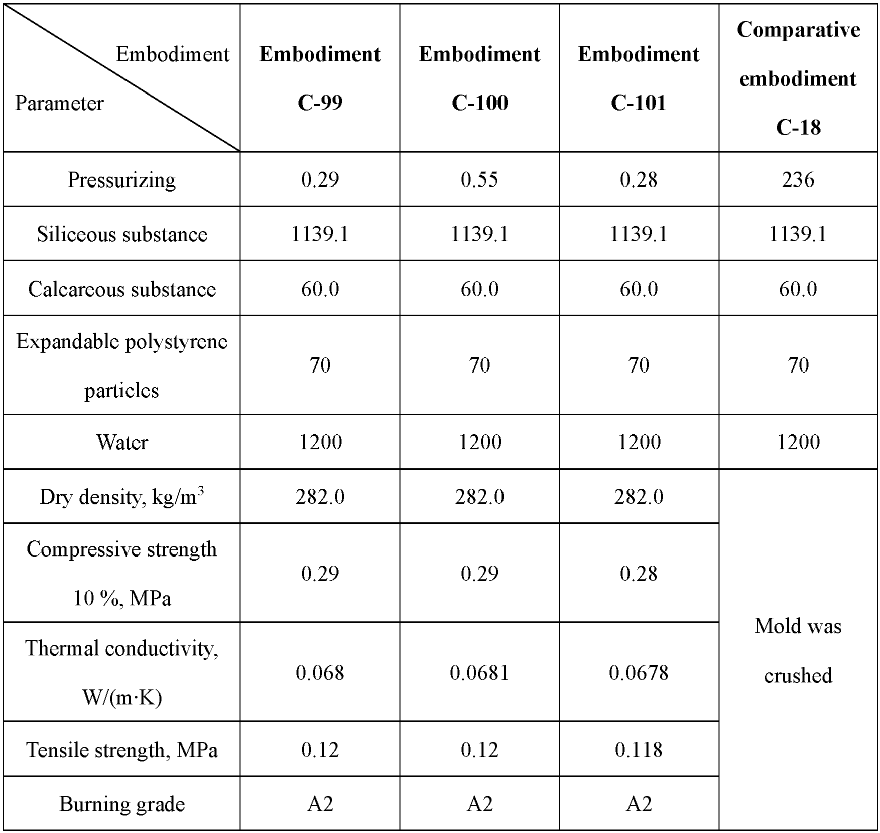

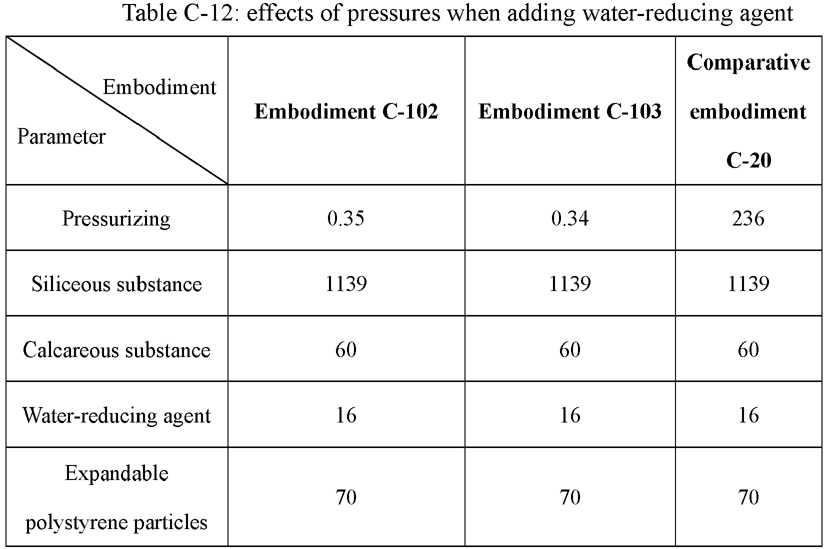

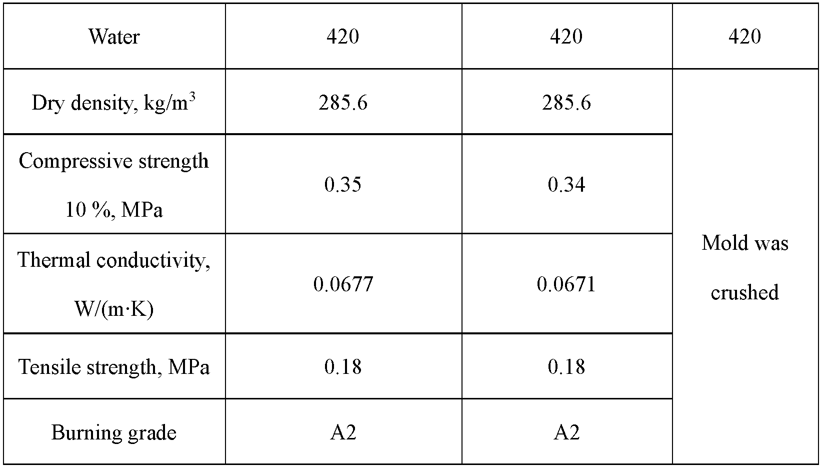

In combination with embodiment C-1 to embodiment C-15, embodiment C-20 to embodiment C-33, embodiment C-45 to embodiment C-59 and comparative embodiment C-1 to comparative embodiment C-2, comparative embodiment C-5, comparative embodiment C-9 to the comparative embodiment C-10, it can be seen that in comparative embodiment C-1 to comparative embodiment C-2, since the organic raw materials were not within the scope defined in the present disclosure, the thickness of the fire-resistant and thermal insulation material was insufficient, and could not be shaped or the burning grade could only reach grade B.

In combination with embodiment C-16 to embodiment C-19, embodiment C-34 to embodiment C-36, embodiment C-60 to embodiment C-62, comparative embodiment C-3 to comparative embodiment C-4, comparative embodiment C-6 to comparative embodiment C-7, comparative embodiment C-11 to comparative embodiment C-12, it can be seen that since the siliceous substance and the calcareous substance were not within the scope defined in the present disclosure, the resulting thermal insulation material had a very low strength and was hardly shaped.

In combination with embodiment C-37 to embodiment C-44 and comparative embodiment C-8, it can be seen that when the addition ratio of water-reducing agent was 4.5 % or more, the burning grade could only reach grade B.

In combination with embodiment C-63 to embodiment C-76 and comparative embodiment C-13, it can be seen that when the addition ratio of reinforced fiber was 26 % or more, the fiber and slurry of the fire-resistant and thermal insulation material could not be stirred evenly.

In combination with embodiment C-77 to embodiment C-98 and comparative embodiment C-14 to comparative embodiment C-17, it can be seen that when the temperature was not in the range of 50 to 150 °C, the expandable polystyrene particles could not be foamed again or the aggregate was charred.

In combination with embodiment C-99 to embodiment C-103 and comparative embodiment C-18 to comparative embodiment C-20, it can be seen that when the pressure was in a low-pressure range of 0.28 to 0.55 MPa, a good effect could still be obtained, but when the pressure exceeded 235 MPa, the mold was crushed.

Although the specific embodiments of the present disclosure have been described above, those skilled in the art should understand that these are only examples, and the protection scope of the present disclosure is defined by the appended claims. Those skilled in the art can make various changes or modifications to these embodiments without departing from the principle and essence of the present disclosure, but these changes and modifications all fall within the protection scope of the present disclosure.

## Claims

1. A preparation process for a fire-resistant and thermal insulation material, comprising the following steps: pressurizing and heating a mixture obtained by uniformly mixing a raw material composition of the fire-resistant and thermal insulation material; the pressurizing pressure is 0.28 MPa or more, and the heating temperature is 50 to 150 °C; the raw material composition of the fire-resistant and thermal insulation material comprises inorganic raw materials, organic raw materials, and water; wherein, the inorganic raw materials comprise a siliceous substance and a calcareous substance, and the organic raw materials comprise polystyrene particles; the weight ratio of the inorganic raw materials to the organic raw materials is 10 to 66.6, and the weight ratio of the siliceous substance to the calcareous substance is 0.33 to 19.

2. The preparation process for the fire-resistant and thermal insulation material as claimed in claim 1, wherein,
in the raw material composition of the fire-resistant and thermal insulation material, the siliceous substance in the inorganic raw materials is one or more of a silicon micropowder, a microsilicon powder, a mineral slag micropowder, a fly ash, a quartz powder, a kaolin, a bentonite, a water glass and a diatomite;
and/or, in the raw material composition of the fire-resistant and thermal insulation material, the calcareous substance in the inorganic raw materials is calcium oxide and/or calcium hydroxide;
and/or, in the raw material composition of the fire-resistant and thermal insulation material, the polystyrene particles in the organic raw materials are expandable polystyrene particles; for example, expandable polystyrene particles containing graphite;
and/or, in the raw material composition of the fire-resistant and thermal insulation material, the organic raw materials comprise a water-reducing agent and/or a reinforced fiber.

3. The preparation process for the fire-resistant and thermal insulation material as claimed in claim 2, wherein,
in the raw material composition of the fire-resistant and thermal insulation material, the expandable polystyrene particles in the organic raw materials are pre-foamed polystyrene particles, and the pre-foamed polystyrene particles are obtained by the following methods: before the raw material composition of the fire-resistant and thermal insulation material is mixed, the preparation process further comprises a pre-foaming step of the expandable polystyrene particles; for example, the pre-foaming step is to heat and pressurize the expandable polystyrene particles to foam the expandable polystyrene particles;
and/or, in the raw material composition of the fire-resistant and thermal insulation material, the water-reducing agent is one or more of a ligninsulfonate water-reducing agent, a naphthalene sulfonate water-reducing agent, a melamine-based water-reducing agent, an aminosulfonate-based superplasticzer and a polycarboxylate-based high performance water-reducing agent;
and/or, in the raw material composition of the fire-resistant and thermal insulation material, the amount of the water-reducing agent is 4.5 wt% or less of the total weight of the raw material composition of the fire-resistant and thermal insulation material; for example, 4 wt% or less; for another example, 3 wt% or less;
and/or, in the raw material composition of the fire-resistant and thermal insulation material, the reinforced fiber is one or more of an inorganic chopped fiber, a wood fiber, a metal fiber and a fiber cotton;
and/or, in the raw material composition of the fire-resistant and thermal insulation material, the amount of the reinforced fiber is 25 wt% or less of the total weight of the raw material composition of the fire-resistant and thermal insulation material; for example, 13 wt% or less; for another example, 11 wt% or less.

4. The preparation process for the fire-resistant and thermal insulation material as claimed in any one of claims 1 to 3, wherein,
the preparation process comprises the following steps: mixing the raw material composition of the fire-resistant and thermal insulation material uniformly to obtain a mixture; inputting the mixture into a mold, pressurizing the mold, and then keeping the mold under pressure so that the pressure exerted on the mold reaches 0.28 MPa or more, heating the mold and the mixture in the mold so that the temperature inside the mixture reaches 50 to 150 °C, heating and pressurizing until shaped, and demoulding.

5. The preparation process for the fire-resistant and thermal insulation material as claimed in claim 4, wherein,
the mold comprises an upper-layer mold and a lower-layer mold, and the preparation process comprises the following steps: preliminarily shaping the mixture by using the upper-layer mold and the lower-layer mold, and after the mold enters a pressing platform, locking the upper-layer mold and the lower-layer mold until the mixture is compressed by 10 to 45 % in a thickness direction and shaped;
and/or, the heating temperature applied inside the mixture is 60 °C to 150 °C;
and/or, the preparation process further comprises placing a reinforcing component in the mold, wherein the reinforcing component comprises one or more of a metal mesh, a glass fiber mesh, a glass steel mesh or a rib, so that the reinforcing component is embedded in at least one side of the mixture.

6. The preparation process for the fire-resistant and thermal insulation material as claimed in claim 5, wherein,
the mixture is compressed by 17 to 38 % in the thickness direction and shaped;
and/or, multiple sets of molds are repeatedly stacked in sequence for simultaneous pressing to form multiple fire-resistant and thermal insulation boards;
and/or, the heating temperature applied inside the mixture is 70 °C to 140 °C.

7. The preparation process for the fire-resistant and thermal insulation material as claimed in any one of claims 1 to 6, wherein,
the raw material composition of the fire-resistant and thermal insulation material is any of the following schemes:
scheme (1):
the raw material composition of the fire-resistant and thermal insulation material comprises: 4.25 to 8.94 parts by weight of the polystyrene particles, 90 to 100 parts by weight of the inorganic raw materials and 30 to 94 parts by weight of the water, wherein the inorganic raw materials are 47 to 85 parts by weight of the siliceous substance and 9 to 47 parts by weight of the calcareous substance;
scheme (2):
the raw material composition of the fire-resistant and thermal insulation material comprises: 3.8 to 21.4 parts by weight of the polystyrene particles, 200 to 250 parts by weight of the inorganic raw materials and 63 to 250 parts by weight of the water, wherein the inorganic raw materials are 56.2 to 208 parts by weight of the siliceous substance and 16.9 to 168.7 parts by weight of the calcareous substance;
scheme (3):
the raw material composition of the fire-resistant and thermal insulation material comprises: 1.8 to 12 parts by weight of the polystyrene particles, 100 to 115 parts by weight of the siliceous substance, 6 to 18 parts by weight of the calcareous substance and 35 to 120 parts by weight of water.

8. The preparation process for the fire-resistant and thermal insulation material as claimed in claim 7, wherein,
when the raw material composition of the fire-resistant and thermal insulation material is scheme (1),
the weight ratio of the siliceous substance to the calcareous substance is 1 to 9; preferably 1.22 to 3; further preferably 1.5 to 2.33;
and/or, the weight ratio of the inorganic raw materials to the organic raw materials is 10.5 to 22.1; preferably 10.5 to 18.5; further preferably 10.5 to 14;
and/or, in the raw material composition of the fire-resistant and thermal insulation material, the organic raw materials comprise the water-reducing agent, and the amount of the water-reducing agent is 0.3 to 4.8 parts;
and/or, in the raw material composition of the fire-resistant and thermal insulation material, the organic raw materials comprise the reinforced fiber, and the amount of the reinforced fiber is 1 to 11 wt% of the total weight of the raw material composition of the fire-resistant and thermal insulation material;
and/or, the pressurizing pressure is 0.55 MPa or more; preferably 0.55 MPa to 30 MPa;
and/or, the density of the fire-resistant and thermal insulation material is 230 kg/m³ or less; preferably 210 to 230 kg/m³; further preferably 220 to 228 kg/m³;
when the raw material composition of the fire-resistant and thermal insulation material is scheme (2),
the weight ratio of the siliceous substance to the calcareous substance is 0.33 to 12.33; preferably 3.67 to 5.67; further preferably 1.5 to 3;
and/or, the weight ratio of the inorganic raw materials to the organic raw materials is 10.5 to 58.9; preferably 10.5 to 35.3; further preferably 10.5 to 16;
and/or, in the raw material composition of the fire-resistant and thermal insulation material, the organic raw materials comprise the water-reducing agent, and the amount of the water-reducing agent is 0.6 to 9 parts;
and/or, in the raw material composition of the fire-resistant and thermal insulation material, the organic raw materials comprise the reinforced fiber (for example, the inorganic chopped fiber), and the amount of the reinforced fiber is 1 to 13 wt% of the total weight of the raw material composition of the fire-resistant and thermal insulation material;
and/or, the pressurizing pressure is 2.8 MPa or more; preferably 2.8 MPa to 30 MPa;
and/or, the density of the fire-resistant and thermal insulation material is 525 kg/m³ or less; preferably 500 to 525 kg/m³;
when the raw material composition of the fire-resistant and thermal insulation material is scheme (3),
the amount of the polystyrene particles is 3 to 11 parts; for example, 3.4 to 10 parts;
and/or, the amount of the siliceous substance is 100 to 110 parts; for example, 100 to 107.9 parts;
and/or, the amount of the calcareous substance is 6 to 12 parts;
and/or, the amount of the water is 35 to 90 parts;
and/or, the weight ratio of the siliceous substance to the calcareous substance is 5.6 to 19;
and/or, the weight ratio of the inorganic raw materials to the organic raw materials is 12 to 35.5;
and/or, the pressurizing pressure is 0.28 to 0.55 MPa; preferably 0.35 to 0.55 MPa;
and/or, in the raw material composition of the fire-resistant and thermal insulation material, the organic raw materials comprise the water-reducing agent, and the amount of the water-reducing agent is 0 to 50 parts and not 0; for example, 3 to 42 parts;
and/or, in the raw material composition of the fire-resistant and thermal insulation material, the organic raw materials comprise the reinforced fiber, and the amount of the reinforced fiber is 2.4 to 30 parts; for example, 4.8 to 30 parts.

9. A fire-resistant and thermal insulation material, which is prepared according to the preparation process for the fire-resistant and thermal insulation material as claimed in any one of claims 1 to 8.

10. A preparation process for a thermal insulation material, which is any of the following schemes:
scheme (a), a preparation process for a floor fire-resistant and thermal insulation material:
the raw material composition of the floor fire-resistant and thermal insulation material comprises: 90 to 100 parts by weight of inorganic raw materials, 4.25 to 8.94 parts by weight of a polystyrene particles and 30 to 94 parts by weight of water, wherein the inorganic raw materials comprise 47 to 85 parts by weight of a siliceous substance and 9 to 47 parts by weight of a calcareous substance, a mixture of the raw material composition is pressurized and heated in a mold, wherein the temperature in the mold is 50 to 150 °C, and the pressure applied to the mold is 0.55 MPa or more, such that the density of the material in the mold is 230 kg/m³ or less, keeping the pressurizing and heating, and demoulding;
scheme (b), a preparation process for a thermal insulation wall material:
the raw material composition of the thermal insulation wall material comprises: 200 to 250 parts by weight of the inorganic raw materials, 3.8 to 21.4 parts by weight of the polystyrene particles and 63 to 250 parts by weight of the water, wherein the inorganic raw materials comprise 56.2 to 208 parts by weight of the siliceous substance and 16.9 to 168.7 parts by weight of the calcareous substance, a mixture of the raw material composition is pressurized and heated in a mold, wherein the temperature in the mold is 50 to 150 °C, and the pressure applied to the mold is 2.8 MPa or more, such that the density of the material in the mold is 525 kg/m³ or less, keeping the pressurizing and heating, and demoulding;
scheme (c), a preparation process for a fire-resistant and thermal insulation material:
the raw material composition of the fire-resistant and thermal insulation material comprises: 1.8 to 12 parts by weight of an expandable polystyrene particles, 100 to 115 parts by weight of the siliceous substance, 6 to 18 parts by weight of the calcareous substance and 35 to 120 parts by weight of the water; the preparation process comprises the following steps: mixing the raw material composition of the fire-resistant and thermal insulation material uniformly to obtain a mixture; inputting the mixture into a mold, pressurizing the mold, and then keeping the mold under pressure so that the pressure exerted on the mold reaches 0.28 to 0.55 MPa, heating the mold and the mixture in the mold so that the temperature inside the mixture reaches 50 to 150 °C, heating and pressurizing until shaped, demoulding, and maintaining.

11. The preparation process as claimed in claim 10, wherein,
when the preparation process for the thermal insulation material is scheme (a),
the siliceous substance comprises one or more of a microsilicon powder, a kaolin, a bentonite and a diatomite;
and/or, the calcareous substance comprises calcium oxide and/or calcium hydroxide;
and/or, the weight ratio of the siliceous substance to the calcareous substance is 1 to 9; preferably 1.22 to 3; further preferably 1.5 to 2.33;
and/or, the weight ratio of the inorganic raw materials to the polystyrene particles is 10.5 to 22.1; preferably 10.5 to 18.5; further preferably 10.5 to 14;
and/or, the raw material composition further comprises a water-reducing agent; preferably, the amount of the water-reducing agent is 0.3 to 4.8 parts;
and/or, the raw material composition further comprises an inorganic chopped fiber; preferably, the amount of the inorganic chopped fiber is 1 to 11 % of the total weight of the material;
when the preparation process for the thermal insulation material is scheme (b),
the siliceous substance comprises one or more of the microsilicon powder, the kaolin, the bentonite and the diatomite;
and/or, the calcareous substance is calcium oxide and/or calcium hydroxide;
and/or, the weight ratio of the siliceous substance to the calcareous substance is 0.33 to 12.33; preferably 3.67 to 5.67; further preferably 1.5 to 3;
and/or, the weight ratio of the inorganic raw materials to the polystyrene particles is 10.5 to 58.9; preferably 10.5 to 35.3; further preferably 10.5 to 16;
and/or, the raw material composition further comprises a water-reducing agent; preferably, the amount of the water-reducing agent is 0.6 to 9 parts;
and/or, the raw material composition further comprises an inorganic chopped fiber; preferably, the amount of the inorganic chopped fiber is 1 to 13 % of the total weight of the material;
when the preparation process for the thermal insulation material is scheme (c),
the amount of the expandable polystyrene particles is 3 to 11 parts, for example, 3.4 to 10 parts, for another example, 4.55 parts, 5.1 parts, 5.95 parts, 6.5 parts, 7 parts, 7.5 parts, 8 parts, 8.5 parts, 9 parts or 9.5 parts;
and/or, the expandable polystyrene particles are graphite expandable polystyrene particles containing graphite, such as expandable polystyrene particles purchased from Wuxi Xingda New Foam Plastics Materials Co., Ltd.;
and/or, the siliceous substance is one or more of a silicon micropowder, a microsilicon powder, a mineral slag micropowder, a fly ash, a quartz powder, a kaolin, a bentonite, a water glass and a diatomite, such as microsilicon powder purchased from Shanghai Victory Industry Development Co., Ltd.; or silicon micropowder purchased from Huzhou Urban Huatian Calcite Powder Factory; or class-C high calcium fly ash purchased from Shanghai Commercial Fly Ash Products Co., Ltd.;
and/or, the amount of the siliceous substance is 100 to 110 parts, preferably 100 to 107.9 parts;
and/or, the calcareous substance is calcium oxide and/or calcium hydroxide, for example, calcium oxide, purchased from Taicang Orient Metallurgy Lime Product Factory;
and/or, the amount of the calcareous substance is 6 to 12 parts;
and/or, the amount of the water is 35 to 90 parts;
and/or, the raw material composition of the fire-resistant and thermal insulation material further comprises the water-reducing agent;
and/or, the raw material composition of the fire-resistant and thermal insulation material further comprises a reinforced fiber.

12. The preparation process as claimed in claim 11, wherein,
when the preparation process for the thermal insulation material is scheme (c),
the amount of the water-reducing agent is 0 to 50 parts and not 0, for example, 3 to 42 parts, for another example, 6 parts, 16 parts, 24 parts or 36 parts;
and/or, when the type of the water-reducing agent comprises one or more of a ligninsulfonate water-reducing agent, a naphthalene sulfonate water-reducing agent, a melamine-based water-reducing agent, an aminosulfonate-based superplasticzer and a polycarboxylate-based high performance water-reducing agent, preferably polycarboxylate-based high performance water-reducing agent, for example, HF retarding superplasticizer purchased from Shanghai Dongda Chemical Co., Ltd.;
and/or, the type of the reinforced fiber comprises one or more of a wood fiber, a metal fiber and a fiber cotton; preferably the fiber cotton, for example, a fiber cotton purchased from Shijiazhuang Dinglong Building Materials Sales Co., Ltd.;
and/or, the amount of the reinforced fiber is 2.4 to 30 parts, for example, 4.8 to 30 parts, for another example, 7.2 parts, 9.6 parts, 12 parts, 14.4 parts, 16.8 parts, 19.2 parts, 21.6 parts, 24 parts, 26.4 parts or 28.8 parts.

13. The preparation process as claimed in claim 12, wherein,
when the preparation process for the thermal insulation material is scheme (c),
the weight ratio of the inorganic raw materials to the organic raw materials is 12 to 35.5, the inorganic raw materials refer to the siliceous substance and the calcareous substance, and the organic raw materials refer to the expandable polystyrene particles and the water-reducing agent.

14. The preparation process as claimed in claim 10, wherein,
when the preparation process for the thermal insulation material is scheme (a), the inorganic raw materials are the siliceous substance and the calcareous substance; preferably, the calcareous substance is a substance containing calcium oxide and/or calcium hydroxide; preferably, the density of the floor fire-resistant and thermal insulation material is 210 to 230 kg/m³, more preferably 220 to 228 kg/m³;
when the preparation process for the thermal insulation material is scheme (b), the inorganic raw materials are the siliceous substance and the calcareous substance; preferably, the calcareous substance is the substance containing calcium oxide and/or calcium hydroxide; preferably, the density of the thermal insulation wall material is 500 to 525kg/m³.

15. The preparation process as claimed in claim 10, wherein,
when the preparation process for the thermal insulation material is scheme (a), the upper limit of the pressure is an upper limit pressure that the mold can bear, and the pressure is preferably 0.55 MPa to 30 MPa;
and/or, when the preparation process for the thermal insulation material is scheme (b), the upper limit of the pressure is the upper limit pressure that the mold can bear, and the pressure is preferably 2.8 MPa to 30 MPa.

16. The preparation process as claimed in claim 10, wherein,
when the preparation process for the thermal insulation material is scheme (c),
the mold comprises an upper-layer mold and a lower-layer mold, and the preparation process comprises the following steps: preliminarily shaping the mixture by using the upper-layer mold and the lower-layer mold, and after the mold enters a pressing platform, locking the upper-layer mold and the lower-layer mold until the mixture is compressed by 10 to 45 % in a thickness direction and shaped;
preferably, the mixture is compressed by 17 to 38 % in the thickness direction and shaped.

17. The preparation process as claimed in claim 16, wherein,
when the preparation process for the thermal insulation material is scheme (c),
multiple sets of molds are repeatedly stacked in sequence for simultaneous pressing to form multiple fire-resistant and thermal insulation boards until the mixture is compressed by 10 to 45 % in the thickness direction and shaped.

18. The preparation process as claimed in claim 10, wherein,
when the preparation process for the thermal insulation material is scheme (c),
the heating temperature applied inside the mixture is 60 to 150 °C, for example, 70 to 140 °C, for another example 80 °C, 90 °C, 100 °C, 110 °C, 120 °C or 130 °C;
and/or, the pressure applied to the mold is 0.35 to 0.55 MPa.

19. The preparation process as claimed in claim 10, wherein,
when the preparation process for the thermal insulation material is scheme (c),
the preparation process further comprises placing a reinforcing component in the mold, wherein the reinforcing component comprises one or more of a metal mesh, a glass fiber mesh, a glass steel or a rib, so that the reinforcing component is embedded in at least one side of the mixture;
and/or, the expandable polystyrene particles are pre-foamed polystyrene particles, and the pre-foamed polystyrene particles are obtained by the following methods: before the mixture is stirred, the preparation process further comprises a pre-foaming step of the expandable polystyrene particles;
for example, the pre-foaming step is to heat and pressurize the expandable polystyrene particles to foam the expandable polystyrene particles.

20. A thermal insulation material, which is prepared according to the preparation process for the thermal insulation material as claimed in any one of claims 10 to 19.
